# EUROPEAN PATENT APPLICATION

(11) **EP 4 822 805 A1**
(43) Date of publication of application: **14.10.2026**
(21) Application number: 24899218.2
(22) Date of filing: 27.06.2024
(51) Int. Cl.: H01M 10/058, H01M 10/0525, H01M 10/054

(54) **BATTERY CELL, BATTERY, ELECTRIC DEVICE, AND ENERGY STORAGE APPARATUS**

(30) Priority: 06.12.2023 CN 202311667805
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN); GUO, Jipeng, Ningde, Fujian 352100 (CN)
(74) Representative: Lorenz Seidler Gossel Part. mbB
(86) International application number: PCT/CN2024/102093
(87) International publication number: WO 2025/118567

(57) **Abstract**

Embodiments of the present application relate to the technical field of batteries, and provide a battery cell, a battery, an electric device, and an energy storage apparatus. The battery cell comprises a casing and an electrode assembly, the electrode assembly is accommodated in the casing, the volume of the casing is V, the capacity of the battery cell is C, and the volume of the casing and the capacity of the battery cell satisfy: 1.4 dm³≤V≤65 dm³ and 400 Ah≤C≤5000 Ah. Therefore, the situation that the battery cell has a too small volume and a too high capacity is avoided, so that the manufacturing cost of a high-capacity battery cell is reduced, achieving better economy; and the situation that the battery cell has a too large volume and a too low capacity is avoided, so that the volume energy density of the high-capacity battery cell is improved, thus taking both the economy and energy density requirements of the battery cell into account.

## Description

### CROSS-REFERENCE TO RELATED APPLICATIONS

The present application claims priority to Chinese Patent Application No. 202311667805.7, filed on December 06, 2023 and entitled "Battery Cell, Battery, Electric Device, and Energy Storage Apparatus", which is incorporated herein by reference in its entirety.

### TECHNICAL FIELD

The present application relates to the technical field of batteries, and in particular, to a battery cell, a battery, an electric apparatus, and an energy storage device.

### BACKGROUND

In recent years, new energy vehicles have been developed with a great leap. In the field of electric vehicles, power batteries play an irreplaceably important role as a power source of the electric vehicle. As new energy vehicles are heavily promoted, there is an increasing demand for power battery products, and there is a high requirement for use reliability of the battery as a core component of the new energy vehicle.

A battery usually includes a plurality of battery cells, and the plurality of battery cells are usually connected in series, in parallel, or in series-parallel. At present, the volume and capacity of the battery cell are small, and if the large-capacity requirements of the battery need to be met, more battery cells need to be provided in the battery, and with the increase of the battery cells, the number of parts connecting the plurality of battery cells increases, the battery management system and the amount of wires used are large, and the cost of the battery is high. To reduce the cost, the capacity of the battery cell may be increased, such that the quantity of battery cells in the battery may be further reduced. At present, it is difficult to satisfy both economic efficiency and energy density requirements for a large-capacity battery cell.

### SUMMARY

Embodiments of the present application provide a battery cell, a battery, an electric device, and an energy storage apparatus, thus taking both the economy and energy density requirements of the battery cell into account.

In a first aspect, an embodiment of the present application provides a battery cell, including a casing and an electrode assembly, where the electrode assembly is accommodated in the housing, a volume of the casing is V, a capacity of the battery cell is C, and the volume of the casing and the capacity of the battery cell satisfy: 1.4 dm³≤V≤65 dm³ and 400 Ah≤C≤5000 Ah.

In the above technical solution, 1.4 dm³≤V≤65 dm³ and 400 Ah≤C≤5000 Ah, so that the battery cell does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell, thus taking the economy and energy density requirements of the battery cell into account.

In some embodiments, a positive electrode material of the battery cell comprises lithium-containing phosphate, and 2.5 dm³≤V≤46 dm³. For a battery cell with the positive electrode material including the lithium-containing phosphate, controlling the volume of the casing at 2.5 dm³ to 46 dm³ can further reduce the manufacturing cost of the large-capacity battery cell and improve the volume energy density of the large-capacity battery cell, thereby further taking both the economic efficiency and energy density requirements of the battery cell into account.

In some embodiments, 400 Ah≤C≤1500 Ah and 2.5 dm³≤V≤13.8 dm³. The volume and capacity of the battery cell with the positive electrode material including the lithium-containing phosphate are more matched, and the battery cell with 400 Ah≤C≤ 1500 Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, 1500 Ah<C≤3000 Ah and 9.6 dm³≤V≤27.6 dm³. The volume and capacity of the battery cell with the positive electrode material including the lithium-containing phosphate are more matched, and the battery cell with 1500 Ah<C≤3000 Ah does not have a too small volume and a too large capacity, thereby reducing the manufacturing cost of the large-capacity battery cell and having better economy, and the battery cell also does not have a too large volume and a too small capacity, thereby improving the volume energy density of the large-capacity battery cell.

In some embodiments, 3000 Ah<C≤5000 Ah and 19.3 dm³≤V≤46 dm³. The volume and capacity of the battery cell with the positive electrode material including the lithium-containing phosphate are more matched, and the battery cell with 3000 Ah<C≤5000 Ah does not have a too small volume and a too large capacity, thereby reducing the manufacturing cost of the large-capacity battery cell and having better economy, and the battery cell also does not have a too large volume and a too small capacity, thereby improving the volume energy density of the large-capacity battery cell.

In some embodiments, the positive electrode material of the battery cell includes a lithium transition metal oxide and 1.4 dm³≤V≤40.6 dm³. For a battery cell with the positive electrode material including the lithium transition metal oxide, the volume of the casing is controlled at 1.4 dm³ to 40.6 dm³, which can further reduce the manufacturing cost of the large-capacity battery cell and improve the volume energy density of the large-capacity battery cell, thereby further taking the economic efficiency and energy density requirements of the battery cell into account.

In some embodiments, 400 Ah≤C≤1500 Ah and 1.4 dm³≤V≤12.2 dm³. The volume and capacity of the battery cell with the positive electrode material including the lithium transition metal oxide are more matched, and the battery cell with 400 Ah≤C≤1500Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, 1500 Ah<C≤3000 Ah and 6.2 dm³≤V≤24.4 dm³. The volume and capacity of the battery cell with the positive electrode material including the lithium transition metal oxide are more matched, and the battery cell with 1500 Ah<C≤3000 Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, 3000 Ah<C≤5000 Ah and 12.4 dm³≤V≤40.6 dm³. The volume and capacity of the battery cell with the positive electrode material including the lithium transition metal oxide are more matched, and the battery cell with 3000 Ah<C≤5000 Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, wherein the battery cell is a sodium battery and 3.5 dm³≤V≤65 dm³. For the sodium battery, the volume of the casing is controlled at 3.5 dm³ to 65 dm³, which can further reduce the manufacturing cost of the large-capacity battery cell and improve the volume energy density of the large-capacity battery cell, thereby further taking the economic efficiency and energy density requirements of the battery cell into account.

In some embodiments, 400 Ah≤C≤1500 Ah and 3.5 dm³≤V≤19.4 dm³. The volume and capacity of the sodium battery are better matched, and the battery cell with 400 Ah≤C≤1500Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, 1500 Ah<C≤3000 Ah and 13.8 dm³≤V≤38.7 dm³. The volume and capacity of the sodium battery are more matched, and the battery cell with 1500 Ah<C≤3000 Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, 3000 Ah<C≤5000 Ah and 27.6 dm³≤V≤65 dm³. The volume and capacity of the sodium battery are more matched, and the battery cell with 3000 Ah<C≤5000 Ah does not have a too small volume and a too large capacity, thereby reducing the manufacturing cost of the large-capacity battery cell and having better economy, and the battery cell does not have a too large volume and a too small capacity, thereby improving the volume energy density of the large-capacity battery cell.

In some embodiments, a volume of the electrode assembly is V₁, a quantity of the electrode assemblies accommodated in the casing is N, and the volume of the electrode assembly and the quantity of the electrode assemblies satisfy: 0.2 dm³≤V₁≤7.8 dm³ and N≥5. The volume of the electrode assembly is controlled at 0.2 dm³ to 7.8 dm³, which can reduce the manufacturing difficulty and manufacturing cost of the electrode assembly. While N≥5 is capable of meeting the requirement of large capacity of the battery cell. That is, 0.2 dm³≤V₁≤7.8 dm³ and N≥5 can not only reduce the manufacturing difficulty and manufacturing cost of the electrode assembly, but also satisfy the large-capacity requirement of the battery cell.

In some embodiments, the electrode assembly includes a main body portion, a first tab and a second tab, the first tab and the second tab have opposite polarities, and the first tab and the second tab are disposed on the main body portion; the battery cell includes a first current collecting member, a second current collecting member and a plurality of electrode assemblies, and along a first direction, the first tabs of the plurality of electrode assemblies are located at the same end of the main body portion, the second tabs of the plurality of electrode assemblies are located at the same end of the main body portion, the first current collecting member is connected to the first tabs of the plurality of electrode assemblies, and the second current collecting member is connected to the second tabs of the plurality of electrode assemblies. The first current collecting member is connected to the first tabs of the plurality of electrode assemblies, so that the first tabs of the plurality of electrode assemblies are converged, and the second current collecting member is connected to the second tabs of the plurality of electrode assemblies, so that the second tabs of the plurality of electrode assemblies are converged, and there is no need to increase the volume of a single electrode assembly, thereby reducing difficulty in manufacturing a large-capacity battery cell.

In some embodiments, along the first direction, at least a part of the first current collecting member is located on a side of the main body portion provided with the first tab, and a part of the first tab is located on a side of the first current collecting member facing away from the main body portion and is connected to the first current collecting member. At least a part of the first current collecting member is disposed on the side of the main body portion provided with the first tab, so that the first current collecting member is connected to the first tab, which is beneficial to reducing the difficulty of assembling the first current collecting member and the first tab. In addition, by disposing the part of the first tab on the side of the first current collecting member facing away from the main body portion in the first direction, and connecting the part to the first current collecting member, the first tab is a structure that bypasses the first current collecting member and is connected to the side of the first current collecting member facing away from the main body portion, which can reduce the difficulty of connection between the first tab and the first current collecting member on the one hand, and can reduce the phenomenon that the first current collecting member presses the first tab in the direction close to the main body portion on the other hand, so as to reduce the short circuit risk caused by the first tab being reversely inserted into the main body portion.

In some embodiments, the first current collecting member is provided with a first avoidance area, the first avoidance area penetrates the first current collecting member along the first direction, and the first tab passes through the first avoidance area and is connected to the side of the first current collecting member facing away from the main body portion. By disposing the first avoidance area on the first current collecting member and penetrating the first current collecting member by the first avoidance area along the first direction, the first tab can be connected to the side of the first current collecting member facing away from the main body portion after passing through the first avoidance area, and the battery cell adopting such a structure facilitates disposing the first tab to be connected to the side of the first current collecting member facing away from the main body portion, which can reduce the difficulty of the first tab bypassing the first current collecting member, and can optimize the length of the first tab bypassing the first current collecting member, thereby alleviating the redundancy of the first tab and reducing the manufacturing cost of the battery cell.

In some embodiments, the first avoidance area is a through hole formed in the first current collecting member; or the first avoidance area is a notch disposed at an edge of the first current collecting member. The first avoidance area may be a through hole formed in the first current collecting member or a notch disposed at an edge of the first current collecting member, so that the first tab passes through the first avoidance area and is connected to a side of the first current collecting member facing away from the main body portion. The first avoidance area has a simple structure and is convenient to manufacture.

In some embodiments, the first current collecting member is disposed in the casing; or the first current collecting member is disposed outside the casing, along the first direction, the casing is provided with a first passage for each of the first tabs to extend out, and each of the first tabs extends out of the casing through the corresponding first passage and is connected to the first current collecting member. By disposing the first current collecting member inside the casing, it is beneficial to reducing the difficulty of assembling the first tab and the first current collecting member to improve the production efficiency of the battery cell, and the casing can play a certain protective role on the first current collecting member to reduce the phenomenon of wear or damage of the first current collecting member during use. By disposing the first current collecting member outside the casing and disposing the first passage for each of the first tabs to extend out on the housing, the battery cell adopting this structure can reduce the first current collecting member occupying the internal space of the casing to make more space for the electrode assembly, which is beneficial to improving the volumetric energy density of the battery cell, and can facilitate the later inspection of the first current collecting member and the maintenance and replacement of the first current collecting member, which is beneficial to reducing the maintenance cost of the battery cell.

In some embodiments, along the first direction, at least a part of the second current collecting member is located on a side of the main body portion provided with the second tab, and a part of the second tab is located on a side of the second current collecting member facing away from the main body portion and is connected to the second current collecting member. At least a part of the second current collecting member is disposed on the side of the main body portion provided with the second tab, so that the second current collecting member is connected to the second tab, which is beneficial to reducing the difficulty of assembling the second current collecting member and the second tab. In addition, by disposing a part of the second tab on the side of the second current collecting member facing away from the main body portion in the first direction, and connecting the part to the second current collecting member, the second tab is a structure that bypasses the second current collecting member and is connected to the side of the second current collecting member facing away from the main body portion, which can reduce the difficulty of connection between the second tab and the second current collecting member on the one hand, and can reduce the phenomenon that the second current collecting member presses the second tab in a direction close to the main body portion on the other hand, so as to reduce the short circuit risk caused by the second tab being reversely inserted into the main body portion.

In some embodiments, the second current collecting member is provided with a second avoidance area, the second avoidance area penetrates the second current collecting member along the first direction, and the second tab passes through the second avoidance area and is connected to the side of the second current collecting member facing away from the main body portion. By disposing the second avoidance area on the second current collecting member and penetrating the second current collecting member by the second avoidance area along the first direction, the second tab can be connected to the side of the second current collecting member facing away from the main body portion after passing through the second avoidance area, and the battery cell adopting such a structure facilitates disposing the second tab to be connected to the side of the second current collecting member facing away from the main body portion, which can reduce the difficulty of the second tab bypassing the second current collecting member, and can optimize the length of the second tab bypassing the second current collecting member, thereby alleviating the redundancy of the second tab and reducing the manufacturing cost of the battery cell.

In some embodiments, the second avoidance area is a through hole formed in the second current collecting member; or the second avoidance area is a notch disposed at an edge of the second current collecting member. The second avoidance area may be a through hole formed in the second current collecting member or a notch disposed at an edge of the second current collecting member, so that the second tab passes through the second avoidance area and is connected to a side of the second current collecting member facing away from the main body portion. The second avoidance area has a simple structure and is convenient to manufacture.

In some embodiments, the second current collecting member is disposed in the casing; or the second current collecting member is disposed outside the casing, along the first direction, the casing is provided with a second passage for each of the second tabs to extend out, and each of the second tabs extends out of the casing through the corresponding second passage and is connected to the second current collecting member. By disposing the second current collecting member inside the casing, it is beneficial to reducing the difficulty of assembling the second tab and the second current collecting member, so as to improve the production efficiency of the battery cell, and the housing can play a certain protective role for the second current collecting member, so as to reduce the phenomenon of wear or damage of the second current collecting member during use. By disposing the second current collecting member outside the casing and disposing the second passage for each of the second tabs to extend out on the housing, the battery cell adopting this structure can reduce the second current collecting member occupying the internal space of the casing to make more space for the electrode assembly, which is beneficial to improving the volumetric energy density of the battery cell, and can facilitate the later inspection of the second current collecting member and the maintenance and replacement of the second current collecting member, which is beneficial to reducing the maintenance cost of the battery cell.

In some embodiments, along the first direction, the first tab and the second tab are both disposed at the same end of the main body portion; and where the first current collecting member includes a first connecting portion connected to each of the first tabs, the second current collecting member includes a second connecting portion connected to each of the second tabs, the first connecting portion and the second connecting portion are both located on a side of the main body portion provided with the first tab and the second tab in the first direction, and the first connecting portion and the second connecting portion are spaced apart from each other. By disposing both the first tab and the second tab at the same end of the main body portion in the first direction, and disposing both the first connecting portion of the first current collecting member and the second connecting portion of the second current collecting member on the side of the main body portion provided with the first tab and the second tab, on the one hand, it is convenient for the first current collecting member to be connected to the first tab, and it is convenient for the second current collecting member to be connected to the second tab, which is beneficial to reducing the difficulty of assembling the first current collecting member and the second current collecting member, and on the other hand, the first current collecting member and the second current collecting member can share space in the first direction, which is beneficial to saving the space occupied by the first current collecting member and the second current collecting member in the first direction, thereby improving the space utilization rate of the battery cell and improving the volume energy density of the battery cell.

In some embodiments, the battery cell includes a first insulating member, disposed on a side of the first connecting portion and the second connecting portion facing away from the main body portion along the first direction, to insulate and isolate the first connecting portion from the casing and insulate and isolate the second connecting portion from the casing. In this way, the first insulating member is located between the first connecting portion and the second connecting portion and the casing in the first direction, and the battery cell adopting this structure can realize insulation and isolation between the first connecting portion and the housing and between the second connecting portion and the casing, which is beneficial to reducing the risk of short circuit between the first current collecting member and the casing and between the second current collecting member and the casing, and can realize that the first connecting portion of the first current collecting member and the second connecting portion of the second current collecting member share one first insulating member, which is beneficial to optimizing the assembly process of the battery cell and can reduce the manufacturing cost of the battery cell.

In some embodiments, the battery cell includes a second insulating member, disposed on a side of the first connecting portion and the second connecting portion facing the main body portion along the first direction, to insulate and isolate the first connecting portion from the main body portion and insulate and isolate the second connecting portion from the main body portion. In this way, the second insulating member is located between the first connecting portion and the second connecting portion and the main body portion in the second direction, and the battery cell adopting this structure can realize insulation and isolation between the first connecting portion and the main body portion and between the second connecting portion and the main body portion on the one hand, which is beneficial to reducing the risk of short circuit between the first current collecting member and the main body portion and between the second current collecting member and the main body portion on the other hand, and can realize that the first connecting portion of the first current collecting member and the second connecting portion of the second current collecting member share one second insulating member on the other hand, which is beneficial to optimizing the assembly process of the battery cell and can reduce the manufacturing cost of the battery cell.

In some embodiments, along the first direction, the casing includes a first wall portion, and the first current collecting member and the second current collecting member are both disposed on a side of the main body portion facing the first wall portion; and the first wall portion is provided with a first electrode terminal and a second electrode terminal, and the first current collecting member and the second current collecting member are connected to the first electrode terminal and the second electrode terminal, respectively. By disposing the first current collecting member and the second current collecting member on the side of the main body portion facing the first wall portion, and disposing the first electrode terminal and the second electrode terminal respectively connected to the first current collecting member and the second current collecting member on the first wall portion, the distance between the first electrode terminal and the first tab and the distance between the second electrode terminal and the second tab can be reduced, which is beneficial to reducing the sizes of the first current collecting member and the second current collecting member, and reducing a current flow path from the first tab to the first electrode terminal and a current flow path from the second tab to the second electrode terminal.

In some embodiments, the plurality of electrode assemblies are arranged in a second direction, and the second direction intersects the first direction; the first current collecting member includes a third connecting portion, the third connecting portion is connected to the first connecting portion, the second current collecting member includes a fourth connecting portion, the fourth connecting portion is connected to the second connecting portion, along the second direction, the casing includes a second wall portion, and the third connecting portion and the fourth connecting portion are both located on a side of the plurality of electrode assemblies facing the second wall portion; and where the second wall portion is provided with a first electrode terminal and a second electrode terminal, and the third connecting portion and the fourth connecting portion are connected to the first electrode terminal and the second electrode terminal, respectively. The plurality of electrode assemblies are arranged along a second direction, and the casing includes a second wall portion arranged along the second direction, so that the second wall portion is arranged in the same direction as the plurality of electrode assemblies. The first current collecting member is provided with a third connecting portion connected to the first connecting portion, the second current collecting member is provided with a fourth connecting portion connected to the second connecting portion, the third connecting portion is connected to the first electrode terminal disposed on the second wall portion, and the first connecting portion is connected to the first tabs of the plurality of electrode assemblies, so that the first tab is electrically connected to the first electrode terminal through the first current collecting member, and the fourth connecting portion is connected to the second electrode terminal disposed on the second wall portion, and the second connecting portion is connected to the second tabs of the plurality of electrode assemblies, so that the second tab is electrically connected to the second electrode terminal through the second current collecting member. For the battery cell adopting this structure, the first electrode terminal and the second electrode terminal are disposed on the second wall portion in the second direction, so that the wall portion of the casing facing the main body portion in the first direction is not provided with the first electrode terminal and the second electrode terminal, thereby facilitating stacking of the plurality of battery cells along the first direction, and on the other hand, the region where the first current collecting member is connected to the first electrode terminal and the region where the first current collecting member is connected to the first tab can be separated from each other, and the region where the second current collecting member is connected to the second electrode terminal and the region where the second current collecting member is connected to the second tab can be separated from each other, which is beneficial to reducing the difficulty of assembling the first current collecting member with the first electrode terminal and the first tab, reducing the difficulty of assembling the second current collecting member with the second electrode terminal and the second tab, and reducing the interference between the first electrode terminal and the first tab and between the second electrode terminal and the second tab. In particular, when both the first electrode terminal and the first tab are both welded to the first current collecting member, and the second electrode terminal and the second tab are both welded to the second current collecting member, the mutual influence between the a weld pool of the first electrode terminal and the first current collecting member and a weld pool of the first tab and the first current collecting member can be effectively reduced, and the mutual influence between the weld pool of the second electrode terminal and the second current collecting member and the weld pool of the second tab and the second current collecting member can be reduced, thereby facilitating the improvement of the assembly quality and stability of the connection of the first electrode terminal and the first tab to the first current collecting member and the connection of the second electrode terminal and the second tab to the second current collecting member.

In some embodiments, the battery cell includes a third insulating member, disposed on a side of the third connecting portion and the fourth connecting portion facing the plurality of electrode assemblies along the second direction, to insulate and isolate the third connecting portion from the electrode assemblies and insulate and isolate the fourth connecting portion from the electrode assemblies. The arrangement of the third insulating member can realize insulation and isolation between the third connecting portion and the electrode assembly and between the fourth connecting portion and the electrode assembly, which is beneficial to reducing the risk of short circuit, and can realize that the third connecting portion of the first current collecting member and the fourth connecting portion of the second current collecting member share one third insulating member, which is beneficial to optimizing the assembly process of the battery cell and can reduce the manufacturing cost of the battery cell.

In some embodiments, along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the third insulating member facing away from the plurality of electrode assemblies, and the fourth connecting portion is accommodated in the second clamping groove. By forming the first clamping groove in the side of the third insulating member facing away from the electrode assembly along the second direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the second direction, which is beneficial to improving the utilization rate of the internal space of the battery cell. Similarly, by forming the second clamping groove in the side of the third insulating member facing away from the electrode assembly along the second direction, the fourth connecting portion of the second current collecting member can be accommodated in the second clamping groove, thereby improving the structural stability of the third insulating assembly between the fourth connecting portion and the plurality of electrode assemblies, and the third insulating member and the fourth connecting portion can share space in the second direction, which is beneficial to improving the utilization rate of the internal space of the battery cell.

In some embodiments, the plurality of electrode assemblies are arranged in a second direction, and the second direction intersects the first direction; the first current collecting member includes a third connecting portion connected to the first connecting portion, the second current collecting member includes a fourth connecting portion connected to the second connecting portion, and along the second direction, the casing includes a second wall portion and a third wall portion that are oppositely disposed, the third connecting portion is located on a side of the plurality of electrode assemblies facing the second wall portion, and the fourth connecting portion is located on a side of the plurality of electrode assemblies facing the third wall portion; and where the second wall portion is provided with a first electrode terminal, the third wall portion is provided with a second electrode terminal, and the third connecting portion and the fourth connecting portion are connected to the first electrode terminal and the second electrode terminal, respectively. By disposing the first electrode terminal and the second electrode terminal on the second wall portion and the third wall portion disposed opposite to each other in the second direction, respectively, and disposing the third connecting portion of the first current collecting member and the fourth connecting portion of the second current collecting member on both sides of the plurality of electrode assemblies, respectively, on the one hand, it is convenient for the third connecting portion of the first current collecting member to be connected to the first electrode terminal, and it is convenient for the fourth connecting portion of the second current collecting member to be connected to the second electrode terminal, and on the other hand, it is possible to realize that the third connecting portion of the first current collecting member is far away from the fourth connecting portion of the second current collecting member, which is beneficial to alleviating the interference phenomenon between the third connecting portion and the fourth connecting portion, and can reduce the risk of short circuit between the third connecting portion and the fourth connecting portion, so as to improve the use reliability of the battery cell.

In some embodiments, the battery cell includes a third insulating member and a fourth insulating member; the third insulating member is disposed between the third connecting portion and the plurality of electrode assemblies along the second direction, to insulate and isolate the third connecting portion from the electrode assemblies; and the fourth insulating member is disposed between the fourth connecting portion and the plurality of electrode assemblies along the second direction, to insulate and isolate the fourth connecting portion from the electrode assemblies. By disposing the third insulating member between the third connecting portion and the plurality of electrode assemblies and disposing the fourth insulating member between the fourth connecting portion and the plurality of electrode assemblies, insulation and isolation between the third connecting portion and the plurality of electrode assemblies and between the fourth connecting portion and the plurality of electrode assemblies can be realized, thereby reducing the risk of internal short circuit of the battery cell and improving the use reliability of the battery cell.

In some embodiments, along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the fourth insulating member facing away from the plurality of electrode assemblies, and the fourth connecting portion is accommodated in the second clamping groove. By forming the first clamping groove in the side of the third insulating member facing away from the plurality of electrode assemblies in the second direction, the third connecting portion of the first current collecting member can be accommodated in the first clamping groove, thereby improving the structural stability of the third insulating member assembled between the third connecting portion and the plurality of electrode assemblies, and the third insulating member and the third connecting portion can share space in the first direction, which is beneficial to improving the utilization rate of the internal space of the battery cell. Similarly, by forming the second clamping groove in the side of the fourth insulating member facing away from the plurality of electrode assemblies in the second direction, the fourth connecting portion of the second current collecting member can be accommodated in the second clamping groove, thereby improving the structural stability of the fourth insulating assembly between the fourth connecting portion and the plurality of electrode assemblies, and the fourth insulating member and the fourth connecting portion can share space in the second direction, which is beneficial to improving the utilization rate of the internal space of the battery cell.

In some embodiments, along the first direction, the first tab and the second tab are disposed at two opposite ends of the main body portion, respectively; and where the first current collecting member includes a first connecting portion connected to each of the first tabs, the first connecting portion is located on a side of the main body portion provided with the first tab in the first direction, the second current collecting member includes a second connecting portion connected to each of the second tabs, and the second connecting portion is located on a side of the main body portion provided with the second tab in the first direction. By disposing the first tab and the second tab at both ends of the main body portion in the first direction, and disposing the first connecting portion of the first current collecting member and the second connecting portion of the second current collecting member on both sides of the plurality of electrode assemblies in the first direction, on the one hand, it is convenient for the first current collecting member and the second current collecting member to be connected to the first tab and the second tab respectively, which is beneficial to alleviating the interference between the first current collecting member and the second current collecting member, and on the other hand, the first tab and the second tab with opposite polarities can be made to be away from each other, and the first connecting portion of the first current collecting member and the second connecting portion of the second current collecting member can be made to be away from each other, which is beneficial to reducing the risk of short circuit between the first tab and the second tab and between the first current collecting member and the second current collecting member, so as to improve the use reliability of the battery cell.

In some embodiments, the battery cell includes two first insulating members, respectively disposed on two sides of the plurality of electrode assemblies along the first direction, one of the first insulating members is located on a side of the first connecting portion facing away from the main body portion to insulate and isolate the first connecting portion from the casing, and the other one of the first insulating members is located on a side of the second connecting portion facing away from the main body portion to insulate and isolate the second connecting portion from the casing. In this way, the first insulating member is disposed between the first connecting portion and the casing and between the second connecting portion and the casing, so that insulation and isolation between the first connecting portion and the housing and between the second connecting portion and the casing can be respectively realized by the two first insulating members, which is beneficial to reducing the risk of short circuit between the first current collecting member and the casing and between the second current collecting member and the casing, thereby improving the use reliability of the battery cell.

In some embodiments, the battery cell includes two second insulating members, respectively disposed on two sides of the plurality of electrode assemblies along the first direction, where along the first direction, one of the second insulating members is located on a side of the first connecting portion facing the main body portion to insulate and isolate the first connecting portion from the main body portion, and the other one of the second insulating members is located on a side of the second connecting portion facing the main body portion to insulate and isolate the second connecting portion from the main body portion. In this way, the second insulating member is disposed between the first connecting portion and the main body portion and between the second connecting portion and the main body portion, so that insulation and isolation between the first connecting portion and the main body portion and between the second connecting portion and the main body portion can be respectively realized by the two second insulating members, which is beneficial to reducing the risk of short circuit between the first current collecting member and the main body portion and between the second current collecting member and the main body portion, thereby improving the use reliability of the battery cell.

In some embodiments, the plurality of electrode assemblies are arranged in a second direction, and the second direction intersects the first direction; the first current collecting member includes a third connecting portion connected to the first connecting portion, the second current collecting member includes a fourth connecting portion connected to the second connecting portion, the casing includes a first wall portion along the second direction, and the third connecting portion and the fourth connecting portion are both located on a side of the plurality of electrode assemblies facing the first wall portion; and where the first wall portion is provided with a first electrode terminal and a second electrode terminal, and the third connecting portion and the fourth connecting portion are connected to the first electrode terminal and the second electrode terminal, respectively. The first electrode terminal and the second electrode terminal are both disposed on the first wall portion, and the third connecting portion of the first current collecting member and the fourth connecting portion of the second current collecting member are both disposed on the side of the plurality of electrode assemblies facing the first wall portion, which, on the one hand, facilitates the connection between the third connecting portion of the first current collecting member and the first electrode terminal, and facilitates the connection between the fourth connecting portion of the second current collecting member and the second electrode terminal, and on the other hand, enables the battery cell to be a structure in which the first electrode terminal and the second electrode terminal are connected at the same end in the second direction, and enables the third connecting portion and the fourth connecting portion to share space in the second direction, thereby improving the space utilization rate of the battery cell to improve the volume energy density of the battery cell. In addition, for the battery cell adopting this structure, the first electrode terminal and the second electrode terminal are disposed on the first wall portion in the second direction, so that the wall portion of the casing facing the main body portion in the first direction is not provided with the first electrode terminal and the second electrode terminal, thereby facilitating stacking of the plurality of battery cells in the first direction, and on the other hand, the region where the first current collecting member is connected to the first electrode terminal and the region where the first current collecting member is connected to the first tab can be separated from each other, and the region where the second current collecting member is connected to the second electrode terminal and the region where the second current collecting member is connected to the second tab can be separated from each other, which is beneficial to reducing the difficulty of assembly between the first current collecting member and the first electrode terminal and the first tab, and reducing the difficulty of assembly between the second current collecting member and the second electrode terminal and the second tab, and reducing the interference problem between the first electrode terminal and the first tab and between the second electrode terminal and the second tab. In particular, when both the first electrode terminal and the first tab are both welded to the first current collecting member, and the second electrode terminal and the second tab are both welded to the second current collecting member, the mutual influence between the a weld pool of the first electrode terminal and the first current collecting member and a weld pool of the first tab and the first current collecting member can be effectively reduced, and the mutual influence between the weld pool of the second electrode terminal and the second current collecting member and the weld pool of the second tab and the second current collecting member can be reduced, thereby facilitating the improvement of the assembly quality and stability of the connection of the first electrode terminal and the first tab to the first current collecting member and the connection of the second electrode terminal and the second tab to the second current collecting member.

In some embodiments, the battery cell includes a third insulating member, disposed on a side of the third connecting portion and the fourth connecting portion facing the plurality of electrode assemblies along the second direction, to insulate and isolate the third connecting portion from the electrode assemblies and insulate and isolate the fourth connecting portion from the electrode assemblies. The arrangement of the third insulating member can realize insulation and isolation between the third connecting portion and the electrode assembly and between the fourth connecting portion and the electrode assembly, which is beneficial to reducing the risk of short circuit, and can realize that the third connecting portion of the first current collecting member and the fourth connecting portion of the second current collecting member share one third insulating member, which is beneficial to optimizing the assembly process of the battery cell and can reduce the manufacturing cost of the battery cell.

In some embodiments, along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the third insulating member facing away from the plurality of electrode assemblies, and the fourth connecting portion is accommodated in the second clamping groove. By forming the first clamping groove in the side of the third insulating member facing away from the electrode assembly along the second direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the second direction, which is beneficial to improving the utilization rate of the internal space of the battery cell. Similarly, by forming the second clamping groove in the side of the third insulating member facing away from the electrode assembly along the second direction, the fourth connecting portion of the second current collecting member can be accommodated in the second clamping groove, thereby improving the structural stability of the third insulating assembly between the fourth connecting portion and the plurality of electrode assemblies, and the third insulating member and the fourth connecting portion can share space in the second direction, which is beneficial to improving the utilization rate of the internal space of the battery cell.

In some embodiments, the plurality of electrode assemblies are arranged in a second direction, and the second direction intersects the first direction; the first current collecting member includes a third connecting portion connected to the first connecting portion, the second current collecting member includes a fourth connecting portion connected to the second connecting portion, along the second direction, the casing includes a first wall portion and a second wall portion arranged opposite to each other, the third connecting portion is located on a side of the plurality of electrode assemblies facing the first wall portion, and the fourth connecting portion is located on a side of the plurality of electrode assemblies facing the second wall portion; and where the first wall portion is provided with a first electrode terminal, the second wall portion is provided with a second electrode terminal, and the third connecting portion and the fourth connecting portion are connected to the first electrode terminal and the second electrode terminal, respectively. By disposing the first electrode terminal and the second electrode terminal on the first wall portion and the second wall portion disposed opposite to each other in the second direction, respectively, and disposing the third connecting portion of the first current collecting member and the fourth connecting portion of the second current collecting member on both sides of the plurality of electrode assemblies, respectively, on the one hand, it is convenient for the third connecting portion of the first current collecting member to be connected to the first electrode terminal, and it is convenient for the fourth connecting portion of the second current collecting member to be connected to the second electrode terminal, and on the other hand, it is possible to realize that the third connecting portion of the first current collecting member and the fourth connecting portion of the second current collecting member are away from each other, which is beneficial to reducing the risk of short circuit between the third connecting portion and the fourth connecting portion, thereby improving the use reliability of the battery cell. In addition, for the battery cell adopting this structure, the first electrode terminal and the second electrode terminal are respectively disposed on the first wall portion and the second wall portion in the second direction, so that the wall portion of the casing facing the main body portion in the first direction is not provided with the first electrode terminal and the second electrode terminal, thereby facilitating stacking of the plurality of battery cells in the first direction, and on the other hand, the region where the first current collecting member is connected to the first electrode terminal and the region where the first current collecting member is connected to the first tab can be separated from each other, and the region where the second current collecting member is connected to the second electrode terminal and the region where the second current collecting member is connected to the second tab can be separated from each other, which is beneficial to reducing the difficulty of assembling the first current collecting member with the first electrode terminal and the first tab, and reducing the difficulty of assembling the second current collecting member with the second electrode terminal and the second tab, and reducing the interference problem between the first electrode terminal and the first tab and between the second electrode terminal and the second tab. In particular, when both the first electrode terminal and the first tab are both welded to the first current collecting member, and the second electrode terminal and the second tab are both welded to the second current collecting member, the mutual influence between the a weld pool of the first electrode terminal and the first current collecting member and a weld pool of the first tab and the first current collecting member can be effectively reduced, and the mutual influence between the weld pool of the second electrode terminal and the second current collecting member and the weld pool of the second tab and the second current collecting member can be reduced, thereby facilitating the improvement of the assembly quality and stability of the connection of the first electrode terminal and the first tab to the first current collecting member and the connection of the second electrode terminal and the second tab to the second current collecting member.

In some embodiments, the battery cell includes a third insulating member and a fourth insulating member; the third insulating member is disposed between the third connecting portion and the plurality of electrode assemblies along the second direction, to insulate and isolate the third connecting portion from the electrode assemblies; and the fourth insulating member is disposed between the fourth connecting portion and the plurality of electrode assemblies along the second direction, to insulate and isolate the fourth connecting portion from the electrode assemblies. In this way, insulation and isolation between the third connecting portion and the electrode assembly and between the fourth connecting portion and the electrode assembly can be implemented, which is beneficial to reducing the risk of short circuit of the battery cell, and improving use reliability of the battery cell.

In some embodiments, along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the fourth insulating member facing away from the plurality of electrode assemblies, and the fourth connecting portion is accommodated in the second clamping groove. By forming the first clamping groove in the side of the third insulating member facing away from the electrode assembly along the second direction, the third connecting portion of the first current collecting member can be accommodated in the first clamping groove, thereby improving the structural stability of the third insulating assembly between the third connecting portion and the plurality of electrode assemblies, and the third insulating member and the third connecting portion can share space in the second direction, which is beneficial to improving the utilization rate of the internal space of the battery cell. Similarly, by forming the second clamping groove in the side of the fourth insulating member facing away from the electrode assembly in the second direction, the fourth connecting portion of the second current collecting member can be accommodated in the second clamping groove, thereby improving the structural stability of the fourth insulating assembly between the fourth connecting portion and the plurality of electrode assemblies, and the fourth insulating member and the fourth connecting portion can share space in the second direction, which is beneficial to improving the utilization rate of the internal space of the battery cell.

In some embodiments, the battery cell includes a plurality of electrode assemblies, the casing assembly has an accommodating space, and the plurality of electrode assemblies are accommodated in the accommodating space; and the battery cell includes a separating apparatus, the separating apparatus is disposed in the accommodating space, the separating apparatus is configured to separate the accommodating space into a plurality of subspaces, and each of the subspaces accommodates at least one of the electrode assemblies. The separating apparatus is disposed in the accommodating space of the casing, the separating apparatus separates the accommodating space into a plurality of subspaces, and the separating apparatus performs a separating function on the electrode assemblies in the subspaces, so as to reduce the risk of mutual extrusion deformation of the electrode assemblies caused by the accumulation of expansion stress of the electrode assemblies in adjacent subspaces, thereby effectively improving the use reliability of the battery cell.

In some embodiments, the separating apparatus includes a separating wall, the separating wall is configured to separate two adjacent subspaces, and an accommodating cavity is formed inside the separating wall; and the battery cell includes a thermal management component, and the thermal management component is accommodated in the accommodating cavity. The accommodating cavity is formed inside the separating wall, and the thermal management component is disposed in the accommodating cavity of the separating wall, so that the space inside the separating wall is fully utilized, and in the case of realizing the temperature management of the electrode assembly, the space inside the casing occupied by the thermal management component is reduced, and more space is made for the electrode assembly, which is beneficial to improving the volume energy density of the battery cell.

In some embodiments, an opening through which the thermal management component enters the accommodating cavity is formed in an outer surface of the casing, and the opening communicates with the accommodating cavity. The opening communicating with the accommodating cavity is formed in the outer surface of the casing, the thermal management component may enter the accommodating cavity from the outer side of the housing via the opening, and when the thermal management component is mounted and detached, it is unnecessary to open the casing, such that the operation is more convenient.

In some embodiments, the separating apparatus includes at least one separating wall, the separating wall is disposed in the accommodating space and is connected to the casing, and the separating wall is configured to separate two adjacent subspaces. The accommodating space inside the casing is divided into a plurality of subspaces by at least one separating wall, the structure is simple, and each separating wall can separate the electrode assemblies in two adjacent subspaces. Since the separating wall is connected to the casing, an expansion force generated by expansion of the electrode assembly in the subspace can be transferred to the casing through the separating wall, thereby reducing the risk that the expansion force generated by the electrode assembly in one subspace is transferred to the electrode assembly in another adjacent subspace.

In some embodiments, the plurality of electrode assemblies are arranged along a second direction, the separating apparatus includes a plurality of separating walls, and along the second direction, the plurality of separating walls are spaced apart from each other in the accommodating space. The plurality of separating walls spaced apart can divide the accommodating space into more subspaces, so that the electrode assemblies in more subspaces are separated by the separating walls, and the expansion forces generated by all the electrode assemblies can be transmitted to the casing through more separating walls, thereby further reducing the risk of the electrode assemblies being squeezed and deformed.

In some embodiments, the subspaces are formed inside the separating apparatus. After the electrode assembly is accommodated in the subspace, the separating apparatus can bear the expansion force of the electrode assembly in multiple directions, thereby improving the use reliability of the battery cell.

In some embodiments, the separating apparatus comprises a plurality of receiving units disposed in the accommodating space, and one subspace is formed inside each of the receiving units. In this way, the plurality of receiving units can all receive the electrode assembly, and the receiving units can bear the expansion forces of the electrode assembly in the subspace in a plurality of directions. In addition, after the electrode assembly is accommodated in the receiving unit, the receiving unit can limit the electrode assembly, thereby reducing the risk of the electrode assembly being inclined and shaken inside the casing.

In some embodiments, two adjacent receiving units share a separating wall, and the separating wall is configured to separate the subspaces of the two adjacent receiving units. In this way, in a case that the volume of the accommodating space is constant, the volume of the subspace can be increased to make a larger space for the electrode assembly, which is beneficial to improving the volumetric energy density of the battery cell. In addition, two adjacent receiving units share a separating wall, so that a plurality of receiving units can be used as a whole, and it is simpler to mount the separating apparatus in the casing.

In a second aspect, embodiments of the present application provide a battery, including the battery cell provided in any one of the embodiments of the first aspect.

In a third aspect, an embodiment of the present application provides an electric device, including the battery cell provided in any one of the embodiments of the first aspect, where the battery cell is configured to provide electrical energy.

In a fourth aspect, an embodiment of the present application provides an energy storage apparatus, including the battery cell provided in any one of the embodiments of the first aspect.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell (a first tab and a second tab are disposed at the same end of a main body portion) provided in some embodiments of the present application;
FIG. 4 is an assembly diagram of a battery cell as shown in FIG. 3;
FIG. 5 is an exploded view of a battery cell (a first tab and a second tab are disposed at the same end of a main body portion) provided in some other embodiments of the present application;
FIG. 6 is a schematic structural diagram of an electrode assembly shown in FIG. 5;
FIG. 7 is an assembly diagram of an electrode assembly, a first current collecting member and a second current collecting member shown in FIG. 5;
FIG. 8 is a schematic structural diagram of a first current collecting member provided by some embodiments of the present application;
FIG. 9 is a schematic structural diagram of a first current collecting member provided by yet some other embodiments of the present application;
FIG. 10 is a schematic diagram of a structure of a second current collecting member provided by some embodiments of the present application;
FIG. 11 is a schematic structural diagram of a second current collecting member provided by some other embodiments of the present application;
FIG. 12 is an exploded view of a battery cell (a first tab and a second tab are disposed at the same end of the main body portion) provided in some embodiments of the present application;
FIG. 13 is an assembly diagram of a battery cell as shown in FIG. 12;
FIG. 14 is an assembly diagram of an electrode assembly, a first current collecting member and a second current collecting member shown in FIG. 12;
FIG. 15 is a schematic structural diagram of a first current collecting member shown in FIG. 12;
FIG. 16 is a schematic structural diagram of a second current collecting member shown in FIG. 12;
FIG. 17 is an exploded view of a battery cell (a first tab and a second tab are disposed at the same end of the main body portion) provided in some embodiments of the present application;
FIG. 18 is an assembly diagram of a battery cell as shown in FIG. 17;
F[0079] IG. 19 is an exploded view of a battery cell (a first tab and a second tab are disposed at two opposite ends of the main body portion) provided in some embodiments of the present application;
FIG. 20 is an assembly diagram of a battery cell as shown in FIG. 19;
FIG. 21 is a connection schematic diagram of an electrode assembly, a first current collecting member, and a second current collecting member shown in FIG. 19;
FIG. 22 is a schematic structural diagram of a first current collecting member shown in FIG. 19;
FIG. 23 is a schematic structural diagram of a second current collecting member shown in FIG. 19;
FIG. 24 is an exploded view of a battery cell (a first tab and a second tab are disposed at two opposite ends of the main body portion) provided in some other embodiments of the present application;
FIG. 25 is an exploded view of a battery cell (a separating apparatus is disposed in a casing) provided in some embodiments of the present application;
FIG. 26 is a connection schematic diagram of a housing and a separating apparatus shown in FIG. 25;
FIG. 27 is a cross-sectional view of the housing shown in FIG. 26 taken along an X-Y section;
FIG. 28 is a schematic structural diagram of the casing shown in FIG. 25;
FIG. 29 is an exploded view of a battery cell (a separating apparatus is disposed in a casing) provided in some other embodiments of the present application;
FIG. 30 is a schematic structural diagram of a separating apparatus shown in FIG. 29; and
FIG. 31 is a schematic structural diagram of a casing provided in some embodiments of the present application.

Reference number: 1, casing; 11, housing; 12, end cover; 13, first wall portion; 14, second wall portion; 15, third wall portion; 16, opening; 2, electrode assembly; 21, first tab; 22, second tab; 23, main body portion; 3, first electrode terminal; 4, second electrode terminal; 5, first current collecting member; 51, first avoidance area; 52, first connecting portion; 53, first protrusion; 54, third connecting portion; 6, second current collecting member; 61, second avoidance area; 62, second connecting portion; 63, second protrusion; 64, fourth connecting portion; 71, first insulating member; 72, second insulating member; 73, third insulating member; 731, first clamping groove; 732, second clamping groove; 74, first insulating member; 8, separating apparatus; 81, subspace; 82, separating wall; 821, accommodating cavity; 83, receiving unit; 9, thermal management component; 10, battery cell; 20, box body; 201, first portion; 202, second portion; 100, battery; 200, controller; 300, motor; 1000, vehicle; X, first direction; Y - second direction; Z - third direction.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the embodiments of the present application, the battery cell may be a secondary battery, which refers to a battery cell that may be continuously used by activating an active material by means of charging the battery cell after discharging thereof.

The battery cell includes, but is not limited to, a lithium ion battery, a sodium ion battery, a sodium-lithium ion battery, a lithium metal battery, a sodium metal battery, a lithium-sulfur battery, a magnesium ion battery, a nickel-hydrogen battery, a nickelcadmium battery, a lead-acid battery, or the like.

The battery cell generally includes an electrode assembly. The electrode assembly includes a positive electrode, a negative electrode, and a spacer. During charging and discharging of the battery cell, intercalation/de-intercalation of active ions (e.g., lithium ions) are enabled at the positive electrode and negative electrode by moving the active ions between the positive electrode and negative electrode. The spacer is disposed between the positive electrode and the negative electrode, which can reduce the risk of a short circuit between the positive and negative electrodes, and at the same time, can allow active ions to pass through.

In some embodiments, the positive electrode may be a positive plate which may comprise a positive current collector and a positive active material disposed on at least one surface of the positive current collector.

As an example, the positive current collector has two surfaces opposite in the thickness direction thereof, and the positive active material is provided on either one or both of the two opposite surfaces of the positive current collector.

As an example, a metal foil or a composite current collector may be used for the positive electrode current collector. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive active material may comprise at least one of the following materials: a lithium-containing phosphate, a lithium transition metal oxide, and respective modified compounds thereof. However, the present application is not limited to these materials, and other conventional materials that can be used as a positive active material of a battery may also be used. These positive active materials may be used alone or in combination of two or more thereof.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, the surface of the foamed metal may not be provided with the positive active material, and of course, the positive active material may also be provided. As an example, within the foamed metal, a lithium source material, which is a lithium metal and/or a lithium-rich material, a potassium metal or a sodium metal may also be filled or/and deposited.

In some embodiments, the negative electrode may be a negative plate that may comprise a negative current collector.

As an example, for the negative electrode current collector, a metal foil, a foamed metal, or a composite current collector may be employed. For example, aluminum or stainless steel which is subjected to surface treatment by silver, stainless steel, copper, aluminum, nickel, a carbon electrode, carbon, nickel, titanium, or the like can be used as the metal foil. The foamed metal may be foamed nickel, foamed copper, foamed aluminum, foamed alloy, or the like. The composite current collector may include a macromolecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may comprise a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative active material may comprise at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as a negative electrode active material of a battery may also be used. These negative electrode active materials may be used alone or in combination of two or more thereof.

In some embodiments, the material of the positive current collector may be aluminum and the material of the negative current collector may be copper.

In some implementations, the spacer is a separator. Any known porous separator with good chemical stability and mechanical stability may be used as the separator.

As an example, a material of the separator may be selected from at least one of a glass fiber, a non-woven fabric, polyethylene, polypropylene, and polyvinylidene fluoride. The separator may be a single-layer film or a multi-layer composite film. When the separator is a multi-layer composite film, the materials of respective layers may be the same or different. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the battery cell further includes an electrolyte that functions to conduct ions between the positive electrode and negative electrode. The electrolyte may be liquid, gel, or solid. Here, a liquid electrolyte comprises an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and a crown ether.

Here, a gel electrolyte comprises a backbone network using a polymer as an electrolyte, in combination with an ionic liquid - lithium salt.

Here, the solid electrolyte comprises a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, a single-ion polymer, a poly-ionic liquid-lithium salt, cellulose, or the like.

As an example, the inorganic solid electrolyte may be one or more of an oxide solid electrolyte (crystalline perovskites, sodium superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

In some implementations, the electrode assembly is a wound structure. The positive plate and the negative plate are wound in a winding structure.

In some implementations, the electrode assembly is a laminated structure.

As an example, a plurality of positive plates and a plurality of negative plates may be respectively provided, and are alternately laminated.

As an example, a plurality of positive plates may be provided, the negative plate may be folded to form a plurality of laminated folding sections, and one positive plate is sandwiched between adjacent folding sections.

As an example, the positive plate and negative plate are both folded to form a plurality of laminated folding sections.

As an example, a plurality of spacers may be provided, between any adjacent positive plates or negative plates respectively.

As an example, the spacer may be continuously provided between any adjacent positive plates or negative plates by folding or winding.

In some embodiments, the electrode assembly may have a cylindrical shape, a flat shape, a polygonal column shape, or the like.

In some implementations, the electrode assembly is provided with a tab that may conduct current from the electrode assembly. The tab comprises a positive tab and a negative tab.

In some implementations, the battery cell may include a casing. The casing is used to enclose components such as the electrode assembly and the electrolyte. The casing may be a steel casing, an aluminum casing, a plastic casing (e.g., polypropylene), a composite metal casing (e.g., a copper-aluminum composite casing), an aluminum plastic film, or the like.

As an example, the battery cell can be a cylindrical battery cell, a prismatic battery cell, a pouch battery cell, or a battery cell of other shapes. The prismatic battery cell includes a square-casing battery cell, a blade-shaped battery cell, and a polygon prism battery cell, for example, a hexagonal prism battery cell and the like.

A battery mentioned in the embodiments of the present application refers to a single physical module including one or a plurality of battery cells to provide a higher voltage and capacity.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box body may be a part of a chassis structure of a vehicle. For example, a part of the box body may be at least a part of a floor of a vehicle, or a part of the box body may be at least a part of a cross beam and a side beam of a vehicle.

A battery usually includes a plurality of battery cells, and the plurality of battery cells are usually connected in series, in parallel, or in series-parallel. At present, the volume and capacity of the battery cell are small, and if the large-capacity requirements of the battery need to be met, more battery cells need to be provided in the battery, and with the increase of the battery cells, the number of parts connecting the plurality of battery cells increases, the battery management system and the amount of wires used are large, and the cost of the battery is high. To reduce the cost, the capacity of the battery cell may be increased, such that the quantity of battery cells in the battery may be further reduced.

For a general large-capacity battery cell, the design of the volume of the casing of the battery cell and the capacity of the battery cell is not reasonable, and it is difficult to take the economic efficiency and energy density requirements of the battery cell into account.

In view of this, an embodiment of the present application provides a battery cell, where a volume of a casing is V, a capacity of the battery cell is C, 1.4 dm³≤V≤65 dm³ and 400 Ah≤C≤5000 Ah. In this way, the battery cell does not have a too small volume and a too large electric capacity, thereby reducing the manufacturing cost of the large-capacity battery cell and achieving better economy, and the battery cell does not have a too large volume and a too small capacity, thereby improving the volume energy density of the large-capacity battery cell, which takes both the economy and energy density requirements of the battery cell into account.

The technical solutions described in the embodiments of the present application are all applicable to batteries and various electrical devices using the batteries.

The electric device may be a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

To facilitate description, in the following embodiments, a vehicle is used as an example of the electric device.

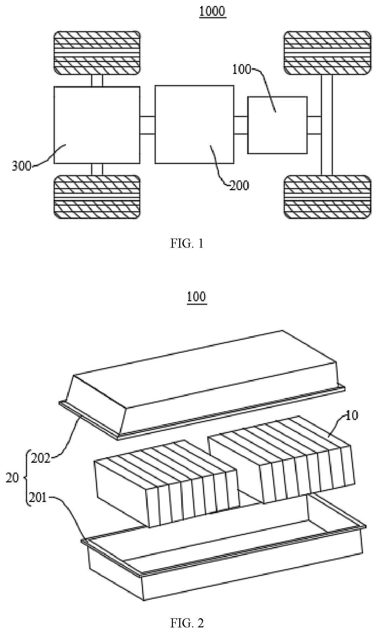

Reference is made to FIG. 1. FIG. 1 is a schematic structural diagram of a vehicle 1000 according to some embodiments of the present application. A battery 100 is arranged inside the vehicle 1000. The battery 100 may be arranged at a bottom, head, or tail of the vehicle 1000. The battery 100 may be configured to power the vehicle 1000. For example, the battery 100 may be used as an operating power source of the vehicle 1000.

The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

Referring to FIG. 2, FIG.2 is an exploded view of a battery 100 provided in some embodiments of the present application. The battery 100 may include a battery cell 10 and a box body 20, and the battery cell 10 is accommodated in the box body 20.

The box body 20, as a component that accommodates the battery cell 10, provides a receiving space for the battery cell 10, and the box body 20 may have various structures. In some embodiments, the box body 20 may include a first portion 201 and a second portion 202, and the first portion 201 and the second portion 202 fit to each other to define a receiving space for accommodating the battery cell 10. The first portion 201 and the second portion 202 may have various shapes, for example, a rectangular parallelepiped, a cylinder, etc. The first portion 201 may be of a hollow structure with one open side, the second portion 202 may also be of a hollow structure with one open side, and the open side of the second portion 202 fits to the open side of the first portion 201 to form the box 20 having a receiving space. Also, the first portion 201 may be of a hollow structure with one open side, the second portion 202 may be of a plate-like structure, and the second portion 202 may fit to the open side of the first portion 201 to form the box 20 having a receiving space. The first portion 201 and the second portion 202 may be sealed by a sealing element which may be a seal ring, a sealant, etc.

In the battery 100, one or more battery cells 10 may be provided. If a plurality of battery cells 10 are provided, the plurality of battery cells 10 may be subjected to series connection, parallel connection, or series-parallel connection, and the series-parallel connection means that the plurality of battery cells 10 are subjected to both series connection, and parallel connection. The plurality of battery cells 10 are subjected to series connection, or parallel connection, or series-parallel connection to form a battery module, and a plurality of battery modules are integrated by series connection, parallel connection, or series-parallel connection, and accommodated in the box 20. Also, all of the battery cells 10 are integrated by series connection, parallel connection, or series-parallel connection, and then all of the battery cells 10 are accommodated in the box 20.

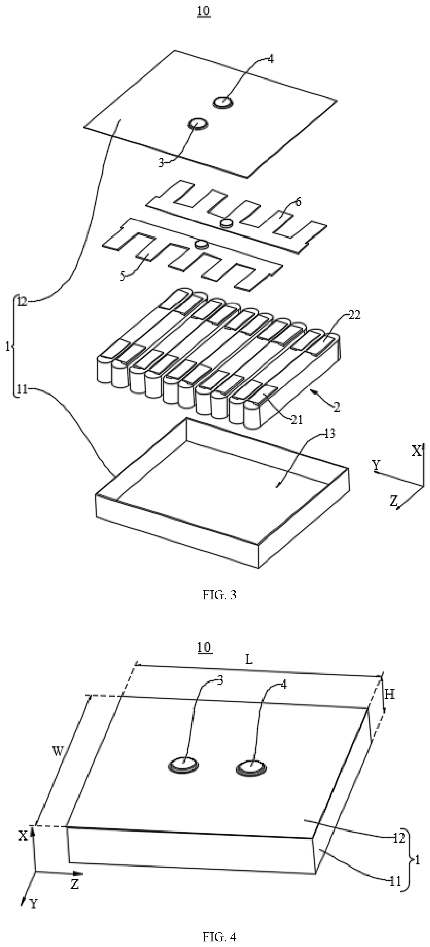

Referring to FIG. 3, FIG. 3 is an exploded view of a battery cell 10 (a first tab 21 and a second tab 22 are disposed at the same end of the main body portion 23) provided in some embodiments of the present application. The battery cell 10 may include a casing 1, and an electrode assembly 2 which is accommodated in the casing 1.

In some embodiments, the casing 1 may include a housing 11 and an end cover 12, where the housing 11 has an opening, and the end cover 12 closes the opening of the housing 11.

The housing 11 is a component used for accommodating the electrode assembly 2, and the housing 11 may be of a hollow structure in which an opening is formed at one end, or the housing 11 may be of a hollow structure in which openings are formed at both ends. The housing 11 may have various shapes such as a cylinder, a rectangular parallelepiped shape, or the like. The housing 11 may be made of various materials, for example, copper, iron, aluminum, steel, and an aluminum alloy.

The end cover 12 is a component that closes the opening of the housing 11 to insulate the internal environment of the battery cell 10 from the external environment. The end cover 12 and the housing 11 define an accommodating space for accommodating the electrode assembly 2, an electrolytic solution, and other components. The end cover 12 may be connected to the casing 11 by welding or rounded seam to close the opening of the housing 11. The end cover 12 may have a shape adapted to the shape of the housing 11. For example, the end cover 12 is of a rectangular plate-like structure adapted to the housing 11 when the housing 11 is of a cuboid structure. For another example, the end cover 12 is of a circular plate-like structure adapted to the housing 11 when the housing 11 is of a cylinder structure. The materials for the end cover 12 may also be various, such as, copper, iron, aluminum, steel, an aluminum alloy, plastic, or the like, and the materials for the end cover 12 may be the same as or different from that for the housing 11.

In an embodiment where the housing 11 is open at one end, one end cover 12 may be provided correspondingly. In an embodiment where the housing 11 is opened at both opposite ends, two end covers 12 may be provided correspondingly, the two end covers 12 close two openings of the housing 11, and the two end covers 12 and the housing 11 define an accommodating space.

The electrode assembly 2 may be of a laminated structure or a winding structure.

In some embodiments, the battery cell 10 may further include electrode terminals provided on the casing 1, and the electrode terminals are used to electrically connect to the tabs of the electrode assembly 2 to output electric power of the battery cell 10. The electrode terminal may be disposed on the housing 11 of the casing 1 or may be disposed on the end cover 12 of the casing 1. The electrode terminals may be directly connected to the tabs. For example, the electrode terminals may be directly welded to the tabs. The electrode terminals may be indirectly connected to the tabs. For example, the electrode terminals may be indirectly connected to the tabs by a current collecting member. The current collecting member may be a metal conductor, such as copper, iron, aluminum, steel, an aluminum alloy, or the like.

As an example, as shown in FIG. 3, along a first direction X, an opening is formed at an end of the housing 11, one end cap 12 is provided in the casing 1, and the one end cap 12 closes the opening of the housing 11. There are a plurality of electrode assemblies 2, and the plurality of electrode assemblies 2 are arranged along a second direction Y. The end cover 12 is provided with a first electrode terminal 3 and a second electrode terminal 4, the first electrode terminal 3 and the second electrode terminal 4 are arranged along a third direction Z, and the first direction X, the second direction Y and the third direction Z are perpendicular to each other. Along the first direction X, a first tab 21 and a second tab 22 are formed at an end of the electrode assembly 2 facing the end cover 12, the first tab 21 and the second tab 22 have opposite polarities, the first tab 21 is connected to the first electrode terminal 3 through the first current collecting member 5 to realize the electrical connection between the first tab 21 and the first electrode terminal 3, and the second tab 22 is connected to the second electrode terminal 4 through the second current collecting member 6 to realize the electrical connection between the second tab 22 and the second electrode terminal 4.

An embodiment of the present application provides a battery cell 10, and still referring to FIG. 3 and FIG. 4, FIG. 4 is an assembly diagram of the battery cell 10 shown in FIG. 3. The battery cell includes a casing 1, and an electrode assembly 2, where the electrode assembly 2 is accommodated in the casing 1, a volume of the casing 1 is V, a capacity of the battery cell 10 is C, and the volume of the casing is V and capacity of the battery cell satisfy: 1.4 dm³≤V≤65 dm³ and 400 Ah≤C≤5000 Ah.

The casing 1 may be cylindrical, prismatic, or the like. The prism includes a triangular prism, a quadrangular prism, a pentagonal prism, a hexagonal prism, and the like. The quadrangular prism includes a rectangular parallelepiped, a cube, and the like. There may be one or more electrode assemblies 2 in the casing 1. If there are a plurality of electrode assemblies 2 in the casing 1, the plurality of electrode assemblies 2 may be distributed in an array, the plurality of electrode assemblies 2 may be arranged in one row or in a plurality of rows, and there are a plurality of electrode assemblies 2 in each row of electrode assemblies 2.

The volume of the casing 1 of the battery cell 10 can be measured in various ways, for a casing 1 with a regular shape, taking the casing 1 being in a rectangular parallelepiped shape as an example, the length L, the width W and the height H of the casing 1 can be measured by a measuring tool respectively, and the volume of the casing 1 can be calculated by the measured length L, width W and height H of the casing 1, it can be understood that V=L×W×H. For the rectangular parallelepiped casing 1, the casing 1 includes six wall portions, and if the outer surfaces of the six wall portions of the casing 1 are all flat surfaces, the length, width and height of the casing 1 are measured based on the outer surfaces of the respective wall portions. When a protrusion or a recess is formed on the outer surface of one or a plurality of wall portions of the casing 1, the length L, the width W, and the height H of the casing 1 are measured based on a plane region (region other than the protrusion or the recess) of the outer surface. Taking the casing 1 being cylindrical as an example, the length L and the diameter D of the casing 1 (the axial dimension of the casing 1) may be measured by a measuring tool, and the volume of the casing 1 may be calculated by the measured length L and diameter D of the casing 1, it may be understood that V=πD²×L/4. The measuring tool may be a vernier caliper. As an example, in FIG. 3, the first direction X is parallel to the height direction of the casing 1, the second direction Y is parallel to the length direction of the casing 1, and the third direction Z is parallel to the width direction of the casing 1.

For the casing 1 with an irregular shape, the volume of the casing 1 can be measured by an immersion method. The specific method is as follows: A liquid is injected into a measuring container, and the volume value X₁ corresponding to the liquid level of the liquid is recorded, taking the first electrode terminal 3 and the second electrode terminal 4 of the battery cell 10 being located at the same end of the casing 1 as an example, the first electrode terminal 3 and the second electrode terminal 4 are made to face upward, and the battery cell 10 is gradually immersed in the liquid until the upper surface of the battery cell 10 is flush with the liquid level, at this time, the first electrode terminal 3 and the second electrode terminal 4 are not immersed in the liquid, and the volume value X₂ corresponding to the liquid level of the liquid at this time is recorded, V=X₂-X₁.

The unit of V is dm³ (cubic decimeter), V may be any one point value of 1.4 dm³, 2 dm³, 5 dm³, 8 dm³, 10 dm³, 12 dm³, 15 dm³, 18 dm³, 20 dm³, 22 dm³, 25 dm³, 28 dm³, 30 dm³, 32 dm³, 35 dm³, 37 dm³, 40 dm³, 42 dm³, 45 dm³, 48 dm³, 50 dm³, 52 dm³, 55 dm³, 58 dm³, 60 dm³, 62 dm³, 65 dm³ and the like, or a range value between any two.

The unit of C is Ah (ampere-hour), and C may be any one point value of 400 Ah, 500 Ah, 800 Ah, 1000 Ah, 1200 Ah, 1500 Ah, 1800 Ah, 2000 Ah, 2200 Ah, 2500 Ah, 2800 Ah, 3000 Ah, 3200 Ah, 3500 Ah, 3800 Ah, 4000 Ah, 4200 Ah, 4500 Ah, 4800 Ah, 5000 Ah, and the like or a range value between any two.

In this embodiment, 1.4 dm³≤V≤65 dm³ and 400 Ah≤C≤5000 Ah, and under the same chemical system, the battery cell 10 does not have a too small volume and a too large capacity, thereby reducing the manufacturing difficulty and manufacturing cost of the large-capacity battery cell 10 and having better economy, and the battery cell 10 does not have a too large volume and a too small capacity, thereby improving the volume energy density of the large-capacity battery cell 10, which takes the economy and energy density requirements of the battery cell 10 into account.

In some embodiments, a positive electrode material of the battery cell 10 includes lithium-containing phosphate, 400 Ah≤C≤5000 Ah and 2.5 dm³≤V≤46 dm³.

V may be any one point value of 2.5 dm³, 3 dm³, 5 dm³, 8 dm³, 10 dm³, 12 dm³, 15 dm³, 18 dm³, 20 dm³, 22 dm³, 25 dm³, 28 dm³, 30 dm³, 32 dm³, 35 dm³, 38 dm³, 40 dm³, 42 dm³, 45 dm³, 46 dm³, and the like, or a range value between any two.

The lithium-containing phosphate include, but is not limited to: at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

For the battery cell 10 with the positive electrode material including lithium-containing phosphate, the volume of the casing 1 is controlled at 2.5 dm³ to 46 dm³, which can further reduce the manufacturing cost of the large-capacity battery cell 10 and improve the volume energy density of the large-capacity battery cell 10, thereby further taking the economic efficiency and energy density requirements of the battery cell 10 into account.

In some embodiments, 400 Ah≤C≤1500 Ah and 2.5 dm³≤V≤13.8 dm³.

V may be any one point value of 2.5 dm³, 3 dm³, 3.5 dm³, 4 dm³, 4.5 dm³, 5 dm³, 5.5 dm³, 6 dm³, 6.5 dm³, 7 dm³, 7.5 dm³, 8 dm³, 8.5 dm³, 9 dm³, 9.5 dm³, 10 dm³, 10.5 dm³, 11 dm³, 11.5 dm³, 12 dm³, 12.5 dm³, 13.5 dm³, 13.8 dm³ and the like, or a range value between any two.

C may be any one point value of 400 Ah, 500 Ah, 600 Ah, 700 Ah, 800 Ah, 900 Ah, 1000 Ah, 1100 Ah, 1200 Ah, 1300 Ah, 1400 Ah, 1500 Ah, and the like or a range value between any two.

In this embodiment, 400 Ah≤C≤1500 Ah and 2.5 dm³≤V≤13.8dm³, so that the volume and capacity of the battery cell 10 with the positive electrode material including the lithium-containing phosphate are more matched, and the battery cell 10 with 400 Ah≤C≤1500 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, 1500 Ah<C≤3000 Ah and 9.6 dm³≤V≤27.6 dm³.

V may be any one point value of 9.6 dm³, 10 dm³, 10.5 dm³, 11 dm³, 11.5 dm³, 12 dm³, 12.5 dm³, 13 dm³, 13.5 dm³, 14 dm³, 14.5 dm³, 15 dm³, 15.5 dm³, 16 dm³, 16.5 dm³, 17 dm³, 17.5 dm³, 18 dm³3, 18.5 dm³, 19 dm³, 19.5 dm³, 20 dm³, 20.5 dm³, 21 dm³, 21.5 dm³, 22 dm³, 22.5 dm³, 23.5 dm³, 24 dm³, 24.5 dm³, 25dm³, 25.5 dm³, 26 dm³, 26.5 dm³, 27 dm³, 27.6 dm³, and the like or a range value between any two.

C may be any one point value of 1550 Ah, 1600 Ah, 1700 Ah, 1800 Ah, 1900 Ah, 2000 Ah, 2100 Ah, 2200 Ah, 2300 Ah, 2400 Ah, 2500 Ah, 2600 Ah, 2700 Ah, 2800 Ah, 2900 Ah, 3000 Ah, and the like or a range value between any two.

In this embodiment, 1500 Ah<C≤3000 Ah and 9.6 dm³≤V≤27.6 dm³, so that the volume and capacity of the battery cell 10 with the positive electrode material including the lithium-containing phosphate are more matched, and the battery cell 10 with 1500 Ah<C≤3000 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, 3000 Ah<C≤5000 Ah and 19.3 dm³≤V≤46 dm³.

V may be any one point value of 19.3 dm³, 19.5 dm³, 20 dm³, 20.5 dm³, 21 dm³, 21.5 dm³, 22 dm³, 21.5 dm³, 22 dm³, 22.5 dm³, 23 dm³, 23.5 dm³, 24 dm³, 24.5 dm³, 25 dm³, 25.5 dm³, 26 dm³, 26.5 dm³, 27 dm³, 27.5 dm³, 28 dm³, 28.5 dm³, 29 dm³, 29.5 dm³, 30 dm³, 30.5 dm³, 31 dm³, 32.5 dm³, 33 dm³, 33.5 dm³, 34 dm³, 34.5 dm³, 35 dm³, 35.5 dm³, 36 dm³, 36.5 dm³, 37 dm³, 37.5 dm³, 38 dm³, 38.5 dm³, 39 dm³, 39.5 dm³, 40 dm³, 40.5 dm³, 41 dm³, 41.5 dm³, 42 dm³, 42.5 dm³, 43 dm³, 43.5 dm³, 44 dm³, 44.5 dm³, 45 dm³, 45.5 dm³, 46 dm³ and the like or a range value between any two.

C may be any one point value of 3050 Ah, 3100 Ah, 3200 Ah, 3300 Ah, 3400 Ah, 3500 Ah, 3600 Ah, 3700 Ah, 3800 Ah, 3900 Ah, 4000 Ah, 4100 Ah, 4200 Ah, 4300 Ah, 4400 Ah, 4500 Ah, 4600 Ah, 4700 Ah, 4800 Ah, 4900 Ah, 5000 Ah, and the like or a range value between any two.

In this embodiment, 3000 Ah<C≤5000 Ah and 19.3 dm³≤V≤46 dm³, so that the volume and capacity of the battery cell 10 with the positive electrode material including the lithium-containing phosphate are more matched, and the battery cell 10 with 3000 Ah<C≤5000 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, the positive electrode material of the battery cell 10 includes a lithium transition metal oxide, 400 Ah≤C≤5000 Ah and 1.4 dm³≤V≤40.6 dm³.

V may take any one point value of 1.4 dm³, 2.5 dm³, 3 dm³, 4 dm³, 5 dm³, 6 dm³, 7 dm³, 8 dm³, 9 dm³, 10 dm³, 11 dm³, 12 dm³, 13 dm³, 14 dm³, 15 dm³, 16 dm³, 17 dm³, 18 dm³, 19 dm³, 20 dm³, 22 dm³, 23 dm³, 24 dm³, 25 dm³, 26 dm³, 27 dm³, 28 dm³, 29 dm³, 30 dm³, 31 dm³, 32 dm³, 33 dm³, 34 dm³, 35 dm³, 36 dm³, 37 dm³, 38 dm³, 39 dm³, 40 dm³, 40.6 dm³ and the like or a range value between any two.

The lithium transition metal oxide include, but is not limited to: at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂(also referred to as NCM₃₃₃), LiNi_{0.5}Co_{0.2}Mn_{0.3}O₂(also referred to as NCM₅₂₃), LiNi_{0.5}Co_{0.25}Mn_{0.25}O₂(also referred to as NCM₂₁₁), LiNi_{0.6}Co_{0.2}Mn_{0.2}O₂(also referred to as NCM₆₂₂), LiNi_{0.8}Co_{0.1}Mn_{0.1}O₂(also referred to as NCM₈₁₁), lithium nickel cobalt aluminum oxide (e.g., LiNi_{0.85}Co_{0.15}Al_{0.05}O₂), a modified compound thereof and the like.

For the battery cell 10 with the positive electrode material including the lithium transition metal oxide, the volume of the casing 1 is controlled at 1.4 dm³ to 40.6 dm³, which can further reduce the manufacturing cost of the large-capacity battery cell 10 and improve the volume energy density of the large-capacity battery cell 10, thereby further taking both the economic efficiency and energy density requirements of the battery cell 10 into account.

In some embodiments, 400 Ah≤C≤1500 Ah and 1.4 dm³≤V≤12.2 dm³.

V may be any one point value of 1.4 dm³, 1.5 dm³, 2 dm³, 2.5 dm³, 3 dm³, 3.5 dm³, 4 dm³, 4.5 dm³, 5 dm³, 5.5 dm³, 6 dm³, 6.5 dm³, 7 dm³, 7.5 dm³, 8 dm³, 8.5 dm³, 9 dm³, 9.5 dm³, 10 dm³, 10.5 dm³, 11 dm³, 11.5 dm³, 12 dm³, 12.2 dm³ and the like or a range value between any two.

C may be any one point value of 400 Ah, 500 Ah, 600 Ah, 700 Ah, 800 Ah, 900 Ah, 1000 Ah, 1100 Ah, 1200 Ah, 1300 Ah, 1400 Ah, 1500 Ah, and the like or a range value between any two.

In this embodiment, 400 Ah≤C≤1500 Ah and 1.4 dm³≤V≤12.2 dm³, so that the volume and capacity of the battery cell 10 with the positive electrode material including the lithium transition metal oxide are more matched, and the battery cell 10 with 400 Ah≤C≤1500 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, 1500 Ah<C≤3000 Ah and 6.2 dm³≤V≤24.4 dm³.

V may be any one point value of 6.2 dm³, 7 dm³, 8 dm³, 9 dm³, 10 dm³, 11 dm³, 12 dm³, 13 dm³, 14 dm³, 15 dm³, 16 dm³, 17 dm³, 18 dm³, 19 dm³, 20 dm³, 21 dm³, 22 dm³, 23 dm³, 24 dm³, 24.4 dm³ and the like or a range value between any two.

C may be any one point value of 1550 Ah, 1600 Ah, 1700 Ah, 1800 Ah, 1900 Ah, 2000 Ah, 2100 Ah, 2200 Ah, 2300 Ah, 2400 Ah, 2500 Ah, 2600 Ah, 2700 Ah, 2800 Ah, 2900 Ah, 3000 Ah, and the like or a range value between any two.

In this embodiment, 1500 Ah<C≤3000 Ah and 6.2dm³≤V≤24.4dm³, so that the volume and capacity of the battery cell 10 with the positive electrode material including the lithium transition metal oxide are more matched, and the battery cell 10 with 1500 Ah<C≤3000 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, 3000 Ah<C≤5000 Ah and 12.4 dm³≤V≤40.6 dm³.

V may be any one point value of 12.4dm³, 13 dm³, 14 dm³, 15 dm³, 16 dm³, 17 dm³, 18 dm³, 19 dm³, 20 dm³, 21 dm³, 22 dm³, 23 dm³, 24 dm³, 25 dm³, 26 dm³, 27 dm³, 28 dm³, 29 dm³, 30 dm³, 31 dm³, 32 dm³, 33 dm³, 34 dm³, 35 dm³, 36 dm³, 37 dm³, 38 dm³, 39 dm³, 40 dm³, 40.6 dm³ and the like or a range value between any two.

C may be any one point value of 3050 Ah, 3100 Ah, 3200 Ah, 3300 Ah, 3400 Ah, 3500 Ah, 3600 Ah, 3700 Ah, 3800 Ah, 3900 Ah, 4000 Ah, 4100 Ah, 4200 Ah, 4300 Ah, 4400 Ah, 4500 Ah, 4600 Ah, 4700 Ah, 4800 Ah, 4900 Ah, 5000 Ah, and the like or a range value between any two.

In this embodiment, 3000 Ah<C≤5000 Ah and 12.4 dm³≤V≤40.6 dm³, so that the volume and capacity of the battery cell 10 with the positive electrode material including the lithium transition metal oxide are more matched, and the battery cell 10 with 3000 Ah<C≤5000 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, the battery cell 10 is a sodium battery, 400 Ah≤C≤5000 Ah and 3.5 dm³≤V≤65 dm³.

The sodium battery may be a lithium ion battery, a sodium-lithium ion battery, a sodium metal battery, and the like.

V may be any one point value of 3.5 dm³, 4 dm³, 5 dm³, 6 dm³, 7 dm³, 8 dm³, 9 dm³, 10 dm³, 11 dm³, 12 dm³, 13 dm³, 14 dm³, 15 dm³, 16 dm³, 17 dm³, 18 dm³, 19 dm³, 20 dm³, 22 dm³, 23 dm³, 24 dm³, 25 dm³, 26 dm³, 27 dm³, 28 dm³, 29 dm³, 30 dm³, 31 dm³, 32 dm³, 33 dm³, 34 dm³, 35 dm³, 36 dm³, 37 dm³, 38 dm³, 39 dm³, 40 dm³, 41 dm³, 42 dm³, 43 dm³, 44 dm³, 45 dm³, 46 dm³, 47 dm³, 48 dm³, 49 dm³, 50 dm³, 51 dm³, 52 dm³, 53 dm³, 54 dm³, 55 dm³, 56 dm³, 57 dm³, 58 dm³, 59 dm³, 60 dm³, 61 dm³, 62 dm³, 63 dm³, 64 dm³, 65 dm³ and the like or a range value between any two.

For the sodium battery, the volume of the casing 1 is controlled at 3.5 dm³ to 65 dm³, which can further reduce the manufacturing cost of the large-capacity battery cell 10 and improve the volume energy density of the large-capacity battery cell 10, thereby further taking both the economic efficiency and energy density requirements of the battery cell 10 into account.

In some embodiments, 400 Ah≤C≤1500 Ah and 3.5 dm³≤V≤19.4 dm³.

V may be any one point value of 3.5 dm³, 4 dm³, 5 dm³, 6 dm³, 7 dm³, 8 dm³, 9 dm³, 10 dm³, 11 dm³, 12 dm³, 13 dm³, 14 dm³, 15 dm³, 16 dm³, 17 dm³, 18 dm³, 19 dm³, 19.4 dm³ and the like or a range value between any two.

C may be any one point value of 400 Ah, 500 Ah, 600 Ah, 700 Ah, 800 Ah, 900 Ah, 1000 Ah, 1100 Ah, 1200 Ah, 1300 Ah, 1400 Ah, 1500 Ah, and the like or a range value between any two.

In this embodiment, 400 Ah≤C≤1500 Ah and 3.5 dm³≤V≤19.4 dm³, so that the volume and capacity of the sodium battery are more matched, and the battery cell 10 with 400 Ah≤C≤1500 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, 1500 Ah<C≤3000 Ah and 13.8 dm³≤V≤38.7 dm³.

V may be any one point value of 13.8 dm³, 14 dm³, 15 dm³, 16 dm³, 17 dm³, 18 dm³, 19 dm³, 20 dm³, 21 dm³, 22 dm³, 23 dm³, 24 dm³, 25 dm³, 26 dm³, 27 dm³, 28 dm³, 29 dm³, 30 dm³, 31 dm³, 32 dm³, 33 dm³, 34 dm³, 35 dm³, 36 dm³, 37 dm³, 38 dm³, 38.7 dm³ and the like or a range value between any two.

C may be any one point value of 1550 Ah, 1600 Ah, 1700 Ah, 1800 Ah, 1900 Ah, 2000 Ah, 2100 Ah, 2200 Ah, 2300 Ah, 2400 Ah, 2500 Ah, 2600 Ah, 2700 Ah, 2800 Ah, 2900 Ah, 3000 Ah, and the like or a range value between any two.

In this embodiment, 1500 Ah<C≤3000 Ah and 13.8 dm³≤V≤38.7 dm³, so that the volume and capacity of the sodium battery are more matched, and the battery cell 10 with 1500 Ah<C≤3000 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, 3000 Ah<C≤5000 Ah and 27.6 dm³≤V≤65 dm³.

V may be any one point value of 27.6 dm³, 28 dm³, 28.5 dm³, 29 dm³, 29.5 dm³, 30 dm³, 31.5 dm³, 32 dm³, 32.5 dm³, 33 dm³, 34 dm³, 35 dm³, 36 dm³, 37 dm³, 38 dm³, 39 dm³, 40 dm³, 41 dm³, 42 dm³, 43 dm³, 44 dm³, 45 dm³, 46 dm³, 47 dm³, 48 dm³, 49 dm³, 50 dm³, 51 dm³, 52 dm³, 53 dm³, 54 dm³, 55 dm³, 56 dm³, 57 dm³, 58 dm³, 59 dm³, 60 dm³, 61 dm³, 62 dm³, 63 dm³, 64 dm³, 65 dm³ and the like or a range value between any two.

C may be any one point value of 3050 Ah, 3100 Ah, 3200 Ah, 3300 Ah, 3400 Ah, 3500 Ah, 3600 Ah, 3700 Ah, 3800 Ah, 3900 Ah, 4000 Ah, 4100 Ah, 4200 Ah, 4300 Ah, 4400 Ah, 4500 Ah, 4600 Ah, 4700 Ah, 4800 Ah, 4900 Ah, 5000 Ah, and the like or a range value between any two.

In this embodiment, 3000 Ah<C≤5000 Ah and 27.6 dm³≤V≤65 dm³, so that the volume and capacity of the sodium battery are more matched, and the battery cell 10 with 3000 Ah<C≤5000 Ah does not have a too small volume and a too large capacity, thereby reducing the manufacturing cost of the large-capacity battery cell 10 and having better economy, so that the battery cell 10 does not have a too large volume and a too small capacity, thereby improving the volume energy density of the large-capacity battery cell 10.

In some embodiments, the casing 1 is in a rectangular parallelepiped shape, a length of the casing 1 is L, a width of the casing 1 is W, and a height of the casing 1 is H, satisfying: 1.2 dm≤L≤15 dm, 0.2 dm≤W≤20 dm, 0.6 dm≤H≤5 dm. The units of L, W, and H are dm (decimeter).

L may be any one point value of 1.2 dm, 1.5 dm, 2 dm, 3 dm, 4 dm, 5 dm, 6 dm, 7 dm, 8 dm, 9 dm, 10 dm, 11 dm, 12 dm, 13 dm, 14 dm, 15 dm, and the like or a range value between any two.

L may be any one point value of 0.2 dm, 0.5 dm, 1 dm, 2 dm, 3 dm, 4 dm, 5 dm, 6 dm, 7 dm, 8 dm, 9 dm, 10 dm, 11 dm, 12 dm, 13 dm, 14 dm, 15 dm, 16 dm, 17 dm, 18 dm, 19 dm, 20 dm and the like or a range value between any two.

H may be any one point value of 0.6 dm, 0.8 dm, 1 dm, 1.5 dm, 1.8 dm, 2 dm, 2.5 dm, 2.8 dm, 3 dm, 3.5 dm, 4 dm, 4.5 dm, 5 dm, and the like or a range value between any two.

In some embodiments, the volume of the electrode assembly 2 is V₁, and the number of the electrode assemblies 2 accommodated in the casing 1 is N, satisfying: 0.2 dm³≤V₁≤7.8 dm³ and N≥5.

The electrode assembly 2 may be cylindrical or flat. If the electrode assembly is cylindrical, the length L₁ and the diameter D₁ of the electrode assembly (the axial dimension of the electrode assembly) may be measured by a measuring tool, and the volume of the electrode assembly can be calculated according to V₁=πD₁²×L₁/4. If the electrode assembly is flat and the electrode assembly is of a laminated structure, the length L₁, the width W₁ and the thickness H₁ of the electrode assembly may be measured by a measuring tool, and the volume of the electrode assembly can be calculated according to V₁= L₁×W₁×H₁. If the electrode assembly is flat and the electrode assembly is of a wound structure, the electrode assembly includes a flat region and bending regions located at two ends of the flat region, the two bending regions are arranged along a width direction of the electrode assembly, a length direction of the electrode assembly is parallel to a winding axis of the electrode assembly, a sum of volumes of the two bending regions and the volume of the flat region is the volume V₁ of the electrode assembly, the length L₁, a width W₁, and the thickness H₁ of the electrode assembly may be measured by using a measuring tool, the volume V₂ of the bending region is πH₁²×L₁/8, the volume V₃ of the flat region is L₁×(W₁-H₁)×H₁, and V₁= 2V₂+V₃.

V₁ may be any one point value of 0.2 dm³, 0.5 dm³, 0.8 dm³, 1 dm³, 1.2 dm³, 1.5 dm³, 1.8 dm³, 2 dm³, 3.2 dm³, 3.5 dm³, 3.8 dm³, 4 dm³, 4.2 dm³, 4.5 dm³, 4.8d m³, 5 dm³, 5.2 dm³, 5.5 dm³, 5.8 dm³, 6 dm³, 6.2 dm³, 6.5 dm³, 6.8 dm³, 7 dm³, 7.2 dm³, 7.5 dm³, 7.8 dm³ and the like or a range value between any two.

N may be 5, 6, 7, 8, 9, 10, 11, 12, 13, 14, 15 or more.

In this embodiment, the N electrode assemblies 2 in the casing 1 may be distributed in an array, and the plurality of electrode assemblies 2 may be arranged in one row or in a plurality of rows, and there are a plurality of electrode assemblies 2 in each row of electrode assemblies 2. As an example, in FIG. 3, the N electrode assemblies 2 are arranged in one row, the N electrode assemblies 2 are arranged along the second direction Y, the electrode assemblies 2 are flat, and the second direction Y is parallel to the thickness direction of the electrode assemblies 2. The flat electrode assembly 2 may be of a laminated structure or a winding structure. The thickness of the flat electrode assembly 2 may be less than the width of the electrode assembly 2 and the length of the electrode assembly 2, and the first tab 21 and the second tab 22 may be located in the width direction of the electrode assembly 2. If the electrode assembly 2 is of a laminated structure, the lamination direction of the electrode sheets in the electrode assembly 2 is parallel to the thickness direction of the electrode assembly 2. If the electrode assembly 2 is a winding structure, the stacking direction of the electrode sheets in the flat region is parallel to the thickness direction of the electrode assembly 2.

In this embodiment, the volume of the electrode assembly 2 is controlled at 0.2 dm³ to 7.8 dm³, which can reduce the manufacturing difficulty and manufacturing cost of the electrode assembly 2. N ≥ 5 enables satisfaction of the high-capacity requirement of the battery cell 10. That is, 0.2dm³≤V₁≤7.8dm³, N≥5 can not only reduce the manufacturing difficulty and manufacturing cost of the electrode assembly 2, but also meet the large-capacity requirement of the battery cell 10.

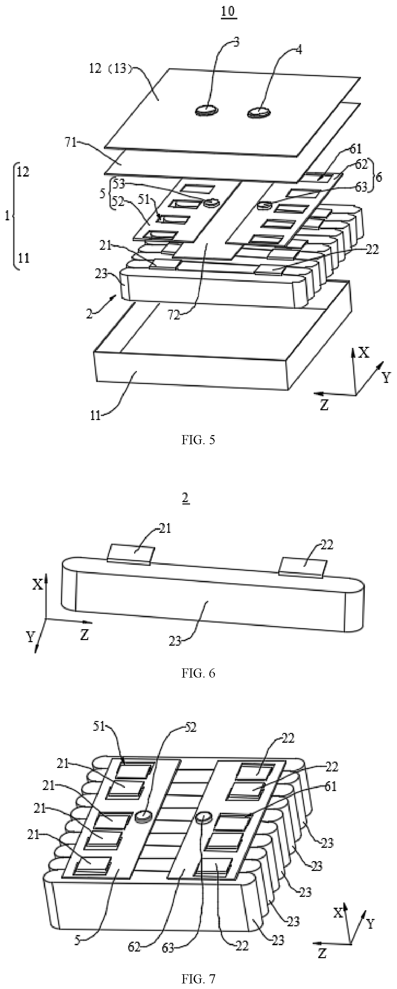

In some embodiments, referring to FIGS. 5-7, FIG. 5 is a schematic structural diagram of a battery cell 10 (the first tab 21 and the second tab 22 are disposed at the same end of the main body portion 23) provided in some other embodiments of the present application. FIG. 6 is a schematic structural diagram of the electrode assembly 2 shown in FIG. 5; and FIG. 7 is an assembly diagram of the electrode assembly 2, the first current collecting member 5, and the second current collecting member 6 shown in FIG. 5. The electrode assembly 2 includes a main body portion 23, a first tab 21 and a second tab 22, where the first tab 21 and the second tab 22 have opposite polarities, and the first tab 21 and the second tab 22 are disposed on the main body portion 23. The battery cell 10 includes a first current collecting member 5, a second current collecting member 6 and a plurality of electrode assemblies 2, along the first direction X, the first tabs 21 of the plurality of electrode assemblies 2 are located at the same end of the main body portion 23, the second tabs 22 of the plurality of electrode assemblies 2 are located at the same end of the main body portion 23, the first current collecting member 5 is connected to the first tabs 21 of the plurality of electrode assemblies 2, and the second current collecting member 6 is connected to the second tabs 22 of the plurality of electrode assemblies 2.

One of the first tab 21 and the second tab 22 is a positive tab, and the other is a negative tab. The main body portion 23 may be a portion corresponding to a region of an electrode sheet coated with an active substance layer in the electrode assembly 2, the positive tab may be a portion of the positive electrode sheet that is not coated with the positive electrode active substance layer, and the negative tab may be a portion of the negative electrode sheet that is not coated with the negative electrode active substance layer. The first tab 21 and the second tab 22 may be disposed at the same end of the main body portion 23 along the first direction X, and the first current collecting member 5 and the second current collecting member 6 may be disposed on the same side of the main body portion 23 along the first direction X, respectively; and the first tab 21 and the second tab 22 may also be disposed at two opposite ends of the main body portion 23 along the first direction X, and the first current collecting member 5 and the second current collecting member 6 may also be disposed on two opposite sides of the main body portion 23 along the first direction X, respectively. By taking the casing 1 being in a rectangular parallelepiped shape as an example, any one of the length direction of the casing 1, the width direction of the casing 1, and the height direction of the casing 1 may be parallel to the first direction X.

A part of the first current collecting member 5 may be located in the casing 1, and another part of the first current collecting member may be located outside the casing 1, or the first current collecting member 5 may be entirely located in the casing 1, or the first current collecting member 5 may be entirely located outside the casing 1. A part of the second current collecting member 6 may be located in the casing 1, and another part of the second current collecting member may be located outside the casing 1, or the second current collecting member 6 may be entirely located in the casing 1, or the second current collecting member 6 may be entirely located outside the casing 1. The first current collecting member 5 and the second current collecting member 6 are both conductors, the materials of the first current collecting member 5 and the second current collecting member 6 may be the same or different, the material of the first current collecting member 5 may be copper, iron, aluminum, steel, aluminum alloy, etc., and the material of the second current collecting member 6 may be copper, iron, aluminum, steel, aluminum alloy, etc. The first current collecting member 5 and the second current collecting member 6 may be of sheet-shaped structures. The first tabs 21 of all the electrode assemblies 2 are located at the same end of the main body portion 23 along the first direction X and are connected to the first current collecting member 5, and the second tabs 22 of all the electrode assemblies 2 are located at the same end of the main body portion 23 along the first direction X and are connected to the second current collecting member 6. The first tab 21 and the first current collecting member 5 may be connected in various ways, such as welding connection, conductive adhesive bonding, etc., to achieve an electrical connection between the first tab 21 and the first current collecting member 5. The second tab 22 and the second current collecting member 6 may be connected in various ways, such as welding connection, conductive adhesive bonding, etc., to realize an electrical connection between the second tab 22 and the second current collecting member 6.

In this embodiment, the first current collecting member 5 is connected to the first tabs 21 of the plurality of electrode assemblies 2, so that the first tabs 21 of the plurality of electrode assemblies 2 are converged, and the second current collecting member 6 is connected to the second tabs 22 of the plurality of electrode assemblies 2, so that the second tabs 22 of the plurality of electrode assemblies 2 are converged, and there is no need to increase the volume of a single electrode assembly 2, which can reduce the difficulty of manufacturing the large-capacity battery cell 10.

In some embodiments, referring to FIG. 7, along the first direction X, at least a part of the first current collecting member 5 is located on a side of the main body portion 23 provided with the first tab 21, and a part of the first tab 21 is located on a side of the first current collecting member 5 facing away from the main body portion 23 and is connected to the first current collecting member 5.

It can be understood that, along the first direction X, at least a part of the first current collecting member 5 and the first tab 21 are located on the same side of the main body portion 23. The first current collecting member 5 may be entirely located on the side of the main body portion 23 provided with the first tab 21, or only a part of the first current collecting member may be located on the side of the main body portion 23 provided with the first tab 21.

Along the first direction X, a part of the first tab 21 is located on a side of the first current collecting member 5 facing away from the main body portion 23 and is connected to the first current collecting member 5, so that the first tab 21 is connected to the side of the first current collecting member 5 facing away from the main body portion 23. The first tab 21 may be connected to the side of the first current collecting member 5 facing from the main body portion 23 after bypassing the edge of the first current collecting member 5 from the side of the first current collecting member 5 facing the main body portion 23, or the first current collecting member 5 may be provided with a channel for the first tab 21 to pass through, so that the first tab 21 passes through the first current collecting member 5 and then is connected to the side of the first current collecting member 5 facing away from the main body portion 23.

In this embodiment, at least a part of the first current collecting member 5 is disposed on the side of the main body portion 23 provided with the first tab 21, so that the first current collecting member 5 is connected to the first tab 21, which is beneficial to reducing the difficulty of assembling the first current collecting member 5 and the first tab 21. In addition, by disposing a part of the first tab 21 on the side of the first current collecting member 5 facing away from the main body portion 23 in the first direction X, and connecting this part to the first current collecting member 5, the first tab 21 is a structure that bypasses the first current collecting member 5 and is connected to the side of the first current collecting member 5 facing away from the main body portion 23, which can reduce the difficulty of connection between the first tab 21 and the first current collecting member 5 on the one hand, and can reduce the phenomenon that the first current collecting member 5 presses the first tab 21 in the direction close to the main body portion 23 on the other hand, so as to reduce the short circuit risk caused by the first tab 21 being reversely inserted into the main body portion 23.

In some embodiments, continuously referring to FIG. 7, the first current collecting member 5 is provided with a first avoidance area 51, the first avoidance area 51 runs through the first current collecting member 5 along the first direction X, and the first tab 21 passes through the first avoidance area 51 and is connected to a side of the first current collecting member 5 facing away from the main body portion 23.

The first avoidance area 51 runs through the first current collecting member 5 in the first direction X, that is, the first avoidance area 51 extends to two opposite surfaces of the first current collecting member 5 in the first direction X.

The first current collecting member 5 may be provided with only one first avoidance area 51, and the first tabs 21 of the plurality of electrode assemblies 2 all pass through the first current collecting member 5 through the same first avoidance area 51 and then are connected to the side of the first current collecting member 5 facing away from the main body portion 23, or the first current collecting member 5 may be provided with a first avoidance area 51 corresponding to the first tab 21 of each of the electrode assemblies 2, or the first current collecting member 5 may be provided with a plurality of first avoidance areas 51, and each of the first avoidance areas 51 may be penetrated by the first tab 21 of one electrode assembly 2 or the first tabs 21 of a plurality of electrode assemblies 2.

As an example, as shown in FIG. 7, the plurality of electrode assemblies 2 are arranged along the second direction Y, the first current collecting member 5 and the second current collecting member 6 are arranged along the third direction Z, and the first direction X, the second direction Y and the third direction Z are not coplanar and intersect with each other. A row of first avoidance areas 51 are disposed on the first tab 21 corresponding to the plurality of electrode assemblies 2 on the first current collecting member 5, each row of first avoidance areas 51 includes a plurality of first avoidance areas 51 spaced apart along the second direction Y, and the first tabs 21 of two adjacent electrode assemblies 2 of the plurality of electrode assemblies 2 pass through the first current collecting member 5 through one first avoidance area 51 and then are connected to a side of the first current collecting member 5 facing away from the main body portion 23.

Any two of the first direction X, the second direction Y, and the third direction Z may be arranged at an acute angle, at a right angle or at an obtuse angle. As an example, the first direction X, the second direction Y and the third direction Z are perpendicular to each other.

In this embodiment, by disposing the first avoidance area 51 on the first current collecting member 5, and the first avoidance area 51 running through the first current collecting member 5 along the first direction X, the first tab 21 can be connected to the side of the first current collecting member 5 facing away from the main body portion 23 after passing through the first avoidance area 51, and the battery cell 10 adopting this structure facilitates the first tab 21 to be configured as a structure connected to the side of the first current collecting member 5 facing away from the main body portion 23, which can reduce the difficulty of the first tab 21 bypassing the first current collecting member 5, and can optimize the length of the first tab 21 bypassing the first current collecting member 5, thereby alleviating the redundancy of the first tab 21 and reducing the manufacturing cost of the battery cell 10.

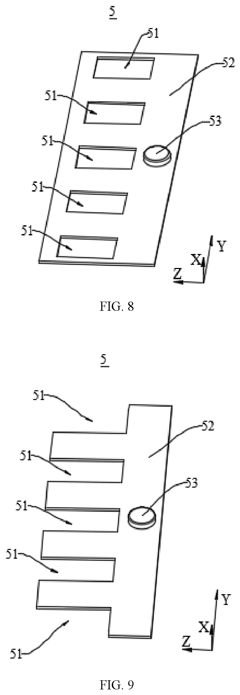

In some embodiments, referring to FIG. 8, FIG. 8 is a schematic structural diagram of the first current collecting member 5 provided in some embodiments of the present application. The first avoidance area 51 is a through hole formed in the first current collecting member 5.

The through hole runs through the first current collecting member 5 in the first direction X, and the through hole may be a circular hole, a polygonal hole, or the like. As an example, in FIG. 8, the through hole is a rectangular hole, there are a plurality of rectangular holes, and the plurality of rectangular holes in the first current collecting member 5 are arranged along the second direction Y.

In this embodiment, the first avoidance area 51 is a through hole formed in the first current collecting member 5, so that the first tab 21 is connected to the side of the first current collecting member 5 facing away from the main body portion 23 after passing through the first avoidance area 51, which has a simple structure and is convenient to manufacture.

In some other embodiments, referring to FIG. 9, FIG. 9 is a schematic structural diagram of a first current collecting member 5 provided in some embodiments of the present application. The first avoidance area 51 is a notch disposed at an edge of the first current collecting member 5.

The notch runs through the first current collecting member 5 along the first direction X, and the notch extends to an edge of the first current collecting member 5 along the third direction Z. As an example, in FIG. 9, there are a plurality of notches, the plurality of notches on the first current collecting member 5 are arranged along the second direction Y, and the notches located at both ends respectively extend to the edge of the first current collecting member 5 along the second direction Y.

In this embodiment, the first avoidance area 51 is a notch disposed at an edge of the first current collecting member 5, so that the first tab 21 is connected to the side of the first current collecting member 5 facing away from the main body portion 23 after passing through the first avoidance area 51, which is simple in structure and convenient for manufacturing.

In some embodiments, continuously referring to FIG. 5, the first current collecting member 5 is disposed on the casing 1.

It can be understood that the first current collecting member 5 is entirely located in the casing 1, and there is no part located outside the casing 1.

In this embodiment, the first current collecting member 5 is disposed inside the casing 1, which is beneficial to reducing the difficulty of assembling the first tab 21 and the first current collecting member 5, so as to improve the production efficiency of the battery cell 10, and the casing 1 can play a certain protective role for the first current collecting member 5, so as to reduce the phenomenon of wear or damage of the first current collecting member 5 during use.

In some other embodiments, the first current collecting member 5 may also be disposed outside the casing 1, and along the first direction X, the casing 1 is provided with a first hole for each of the first tabs 21 to extend out, and each of the first tabs 21 extends out of the casing 1 through the corresponding first passage and is connected to the first current collecting member 5.

Along the first direction X, a side of the casing 1 close to the first tab 21 is provided with a first passage for each of the first tabs 21 to extend out, that is, the first passage hole for the first tab 21 to pass through is formed in a region of the casing 1 that faces the side of the main body portion 23 provided with the first tab 21 in the first direction X, so that the first tabs 21 of the plurality of electrode assemblies 2 can extend out of the casing 1 and then be connected to the first current collecting member 5 located outside the casing 1.

As an example, the casing 1 may be provided with a plurality of first passages, and the first passages correspond to the first tabs 21 one by one, so that the first tab 21 of each of the electrode assemblies 2 can extend out of the casing 1 through one first passage, which is beneficial to reducing the influence of interference between the first tabs 21 of the plurality of electrode assemblies 2. Of course, in other embodiments, only one first passage may be disposed on the casing 1, and the first tabs 21 of the plurality of electrode assemblies 2 all extend out of the casing 1 through the same first passage.

In this embodiment, by disposing the first current collecting member 5 outside the casing 1 and disposing the first passage for the first tab 21 to extend out on the casing 1, the battery cell 10 adopting this structure can reduce the first current collecting member 5 from occupying the internal space of the casing 1 to make more space for the electrode assembly 2, which is beneficial to improving the volumetric energy density of the battery cell 10, and can facilitate the later inspection of the first current collecting member 5 and the maintenance and replacement of the first current collecting member 5, which is beneficial to reducing the maintenance cost of the battery cell 10.

In some embodiments, continuously referring to FIG. 7, along the first direction X, at least a part of the second current collecting member 6 is located on a side of the main body portion 23 provided with the second tab 22, and a part of the second tab 22 is located on a side of the second current collecting member 6 facing away from the main body portion 23 and is connected to the second current collecting member 6.

It can be understood that, along the first direction X, at least a part of the second current collecting member 6 and the second tab 22 are located on the same side of the main body portion 23. The second current collecting member 6 may be entirely located on the side of the main body portion 23 provided with the second tab 22, or only a part of the second current collecting member may be located on the side of the main body portion 23 provided with the second tab 22.

Along the first direction X, a part of the second tab 22 is located on a side of the second current collecting member 6 facing away from the main body portion 23 and is connected to the second current collecting member 6, so that the second tab 22 is connected to the side of the second current collecting member 6 facing away from the main body portion 23. The second tab 22 may be connected to the side of the second current collecting member 6 facing away from the main body portion 23 after bypassing the edge of the second current collecting member 6 from the side of the second current collecting member 6 facing the main body portion 23, or the second current collecting member 6 may be provided with a channel for the second tab 22 to extend out, so that the second tab 22 passes through the second current collecting member 6 and then is connected to the side of the second current collecting member 6 facing away from the main body portion 23.

In this embodiment, at least a part of the second current collecting member 6 is disposed on the side of the main body portion 23 provided with the second tab 22, so that the second current collecting member 6 is connected to the second tab 22, which is beneficial to reducing the difficulty of assembling the second current collecting member 6 and the second tab 22. In addition, by disposing a part of the second tab 22 on the side of the second current collecting member 6 facing away from the main body portion 23 in the first direction X, and connecting this part to the second current collecting member 6, the second tab 22 is a structure that bypasses the second current collecting member 6 and is connected to the side of the second current collecting member 6 facing away from the main body portion 23, which can reduce the difficulty of connection between the second tab 22 and the second current collecting member 6 on the one hand, and can reduce the phenomenon that the second current collecting member 6 presses the second tab 22 in the direction close to the main body portion 23 on the other hand, so as to reduce the short circuit risk caused by the second tab 22 being reversely inserted into the main body portion 23.

In some embodiments, continuously referring to FIG. 7, the second current collecting member 6 is provided with a second avoidance area 61, the second avoidance area 61 runs through the second current collecting member 6 along the first direction X, and the second tab 22 passes through the second avoidance area 61 and is connected to a side of the second current collecting member 6 facing away from the main body portion 23.

The second current collecting member 6 may be provided with only one second avoidance area 61, and the second tabs 22 of the plurality of electrode assemblies 2 are all connected to the side of the second current collecting member 6 facing away from the main body portion 23 after passing through the second current collecting member 6 through the same second avoidance area 61, or the second current collecting member 6 may be provided with a second avoidance area 61 corresponding to the second tab 22 of each of the electrode assemblies 2, or the second current collecting member 6 may be provided with a plurality of second avoidance areas 61, and each of the second avoidance areas 61 may be penetrated by the second tab 22 of one electrode assembly 2 or the second tabs 22 of a plurality of electrode assemblies 2.

As an example, as shown in FIG. 7, a row of second avoidance areas 61 are disposed on the second tab 22 corresponding to the plurality of electrode assemblies 2 on the second current collecting member 6, each row of second avoidance areas 61 includes a plurality of second avoidance areas 61 spaced apart in the second direction Y, and the second tabs 22 of two adjacent electrode assemblies 2 of the plurality of electrode assemblies 2 are connected to the side of the second current collecting member 6 facing away from the main body portion 23 after passing through the second current collecting member 6 through one second avoidance area 61.

In this embodiment, by disposing the second avoidance area 61 on the second current collecting member 6, and the second avoidance area 61 penetrating the second current collecting member 6 along the first direction X, the second tab 22 can be connected to the side of the second current collecting member 6 facing away from the main body portion 23 after passing through the second avoidance area 61, and the battery cell 10 adopting this structure facilitates the second tab 22 to be configured as a structure connected to the side of the second current collecting member 6 facing away from the main body portion 23, which can reduce the difficulty of the second tab 22 bypassing the second current collecting member 6, and can optimize the length of the second tab 22 bypassing the second current collecting member 6, thereby alleviating the redundancy of the second tab 22 and reducing the manufacturing cost of the battery cell 10.

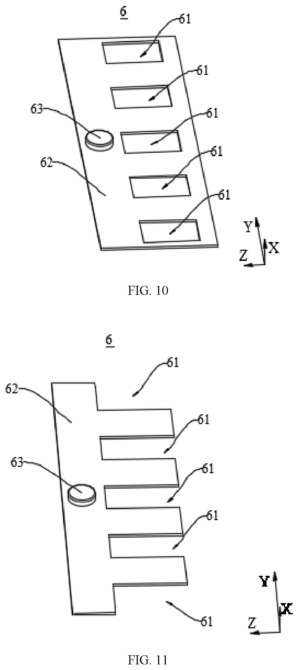

In some embodiments, referring to FIG. 10, FIG. 10 is a schematic structural diagram of a second current collecting member 6 provided in some embodiments of the present application. The second avoidance area 61 is a through hole formed in the second current collecting member 6.

The through hole runs through the second current collecting member 6 along the first direction X, and the through hole may be a circular hole, a polygonal hole, or the like. As an example, in FIG. 9, the through hole is a rectangular hole, there are a plurality of rectangular holes, and the plurality of rectangular holes on the second current collecting member 6 are arranged along the second direction Y.

In this embodiment, the second avoidance area 61 is a through hole formed in the second current collecting member 6, so that the second tab 22 is connected to the side of the second current collecting member 6 facing away from the main body portion 23 after passing through the second avoidance area 61, which has a simple structure and is convenient to manufacture.

In some other embodiments, referring to FIG. 11, FIG. 11 is a schematic structural diagram of a second current collecting member 6 provided in some other embodiments of the present application. The second avoidance area 61 is a notch disposed at an edge of the second current collecting member 6.

The notch runs through the second current collecting member 6 along the first direction X, and the notch extends to an edge of the second current collecting member 6 along the third direction Z. As an example, in FIG. 11, there are a plurality of notches, the plurality of notches on the second current collecting member 6 are arranged along the second direction Y, and the notches located at both ends respectively extend to the edge of the second current collecting member 6 along the second direction Y.

In this embodiment, the second avoidance area 61 is a notch disposed at the edge of the second current collecting member 6, so that the second tab 22 is connected to the side of the second current collecting member 6 facing away from the main body portion 23 after passing through the second avoidance area 61, which is simple in structure and convenient to manufacture.

In some embodiments, continuously referring to FIG. 5, the second current collecting member 6 is disposed in the casing 1.

It can be understood that, the second current collecting member 6 is entirely located in the casing 1, and there is no part located outside the casing 1.

In this embodiment, the second current collecting member 6 is disposed inside the casing 1, which is beneficial to reducing the difficulty of assembling the second tab 22 and the second current collecting member 6, so as to improve the production efficiency of the battery cell 10, and the casing 1 can play a certain protective role for the second current collecting member 6, so as to reduce the phenomenon of wear or damage of the second current collecting member 6 during use.

In some other embodiments, the second current collecting member 6 is disposed outside the casing 1, and along the first direction X, the casing 1 is provided with a second hole for each of the second tabs 22 to extend out, and each of the second tabs 22 extends out of the casing 1 through the corresponding second passage and is connected to the second current collecting member 6.

Along the first direction X, a side of the casing 1 close to the second tab 22 is provided with a second passage for each of the second tabs 22 to extend out, that is, a second passage hole for the second tab 22 to pass through is formed in a region of the casing 1 that faces the side of the main body portion 23 where the second tab 22 is disposed in the first direction X, so that the second tabs 22 of the plurality of electrode assemblies 2 can extend out of the casing 1 and then be connected to the second current collecting member 6 located outside the casing 1.

As an example, the casing 1 may be provided with a plurality of second passages, and the second passages correspond to the second tabs 22 one by one, so that the second tab 22 of each of the electrode assemblies 2 can extend out of the casing 1 through one second passage, which is beneficial to reducing the influence of interference between the second tabs 22 of the plurality of electrode assemblies 2. Of course, in other embodiments, only one second passage may be provided on the casing 1, and the second tabs 22 of the plurality of electrode assemblies 2 all extend out of the casing 1 through the same second passage.

In this embodiment, by disposing the second current collecting member 6 outside the casing 1 and disposing the second passage for the second tab 22 to extend out on the casing 1, the battery cell 10 adopting this structure can reduce the second current collecting member 6 from occupying the internal space of the casing 1 to make more space for the electrode assembly 2, which is beneficial to improving the volumetric energy density of the battery cell 10, and can facilitate the later inspection of the second current collecting member 6 and facilitate the maintenance and replacement of the second current collecting member 6, which is beneficial to reducing the maintenance cost of the battery cell 10.

In some embodiments, continuously referring to FIGS. 5-7, along the first direction X, the first tab 21 and the second tab 22 are both disposed at the same end of the main body portion 23. The first current collecting member 5 includes a first connecting portion 52 connected to each of the first tabs 21, the second current collecting member 6 includes a second connecting portion 62 connected to each of the second tabs 22, the first connecting portion 52 and the second connecting portion 62 are both located on a side of the main body portion 23 provided with the first tab 21 and the second tab 22 in the first direction X, and the first connecting portion 52 and the second connecting portion 62 are spaced apart from each other.

The first connecting portion 52 is a part of the first current collecting member 5 located on a side of the main body portion 23 provided with the first tab 21 in the first direction X, and the first connecting portion 52 functions to connect the first tabs 21 of the plurality of electrode assemblies 2. The first connecting portion 52 may be a part of the first current collecting member 5, or the first connecting portion 52 may be the first current collecting member 5. Similarly, the second connecting portion 62 is a part of the second current collecting member 6 located on a side of the main body portion 23 provided with the second tab 22 in the first direction X, and the second connecting portion 62 functions to connect the second tabs 22 of the plurality of electrode assemblies 2. The second connecting portion 62 may be a part of the second current collecting member 6, or the second connecting portion 62 is the second current collecting member 6.

The first connecting portion 52 plays a role of connecting the first tabs 21 of the plurality of electrode assemblies 2, and the first connecting portion 52 and the first electrode tabs 21 may be connected in various structures, such as welding connection, abutting, or conductive adhesive bonding. Similarly, the second connecting portion 62 plays a role of connecting the second tabs 22 of the plurality of electrode assemblies 2, and the second connecting portion 62 and the second tabs 22 may be connected in various structures, such as welding connection, abutting, or conductive adhesive bonding.

As an example, the plurality of electrode assemblies 2 are arranged along the second direction Y, the first tab 21 and the second tab 22 are arranged along the third direction Z, the first current collecting member 5 and the second current collecting member 6 are located in the casing 1 and arranged along the third direction Z, and the first direction X, the second direction Y and the third direction Z are not coplanar and intersect with each other. Each two of the first direction X, the second direction Y and the third direction Z form a plane, and the first direction X, the second direction Y and the third direction Z are not coplanar, that is, the three planes formed by the first direction X, the second direction Y and the third direction Z are not coplanar.

It should be noted that, in the embodiment in which the first current collecting member 5 is provided with the first avoidance area 51, the first avoidance area 51 may be provided in the first connecting portion 52. In the embodiment in which the second current collecting member 6 is provided with the second avoidance area 61, the second avoidance area 61 may be provided in the second connecting portion 62.

In this embodiment, by disposing both the first tab 21 and the second tab 22 at the same end of the main body portion 23 in the first direction X, and disposing both the first connecting portion 52 of the first current collecting member 5 and the second connecting portion 62 of the second current collecting member 6 on the side of the main body portion 23 provided with the first tab 21 and the second tab 22, on the one hand, it is convenient for the first current collecting member 5 to be connected to the first tab 21, and it is convenient for the second current collecting member 6 to be connected to the second tab 22, which is beneficial to reducing the assembly difficulty of the first current collecting member 5 and the second current collecting member 6, and on the other hand, the first current collecting member 5 and the second current collecting member 6 can share space in the first direction X, which is beneficial to saving the space occupied by the first current collecting member 5 and the second current collecting member 6 in the first direction X, thereby improving the space utilization rate of the battery cell 10 and improving the volume energy density of the battery cell 10.

In some embodiments, continuously referring to FIG. 5, the battery cell 10 may include a first insulating member 71, and the first insulating member 71 is disposed on a side of the first connecting portion 52 and the second connecting portion 62 facing away from the main body portion 23 along the first direction X, to insulate and isolate the first connecting portion 52 from the casing 1 and insulate and isolate the second connecting portion 62 from the casing 1.

As an example, the first insulating member 71 is located in the casing 1, and along the first direction X, the first insulating member 71 is located between the first connecting portion 52 of the first current collecting member 5 and the casing 1 and between the second connecting portion 62 of the second current collecting member 6 and the housing 11, so that the first connecting portion 52 and the second connecting portion 62 can be insulated and isolated from the casing 1 by the first insulating member 71. The first insulating member 71 is made of an insulating material, such as rubber, silicone, or plastic.

In this embodiment, the first insulating member 71 is located between the first connecting portion 52 and the casing 1 and between the second connecting portion 62 and the casing 1 in the first direction X, and the battery cell 10 adopting this structure can realize insulation and isolation between the first connecting portion 52 and the casing 1 and between the second connecting portion 62 and the casing 1, which is beneficial to reducing the risk of short circuit between the first current collecting member 5 and the casing 1 and between the second current collecting member 6 and the casing 1, and can realize that the first connecting portion 52 of the first current collecting member 5 and the second connecting portion 62 of the second current collecting member 6 share one first insulating member 71, which is beneficial to optimizing the assembly process of the battery cell 10 and can reduce the manufacturing cost of the battery cell 10.

In some embodiments, continuously referring to FIG. 5, the battery cell 10 may include a second insulating member 72, and the second insulating member 72 is disposed on a side of the first connecting portion 52 and the second connecting portion 62 facing the main body portion 23 in the first direction X, to insulate and isolate the first connecting portion 52 from the main body portion 23 and insulate and isolate the second connecting portion 62 from the main body portion 23.

As an example, the second insulating member 72 is located in the casing 1, and along the first direction X, the second insulating member 72 is located between the first connecting portion 52 and the main body portion 23 and between the second connecting portion 62 and the main body portion 23, so that the first connecting portion 52 and the main body portion 23, and the second connecting portion 62 and the main body portion 23 are insulated and isolated by the second insulating member 72. The second insulating member 72 is made of an insulating material, such as rubber, silicone, or plastic.

In this embodiment, the second insulating member 72 is located between the first connecting portion 52 and the main body portion 23 and between the second connecting portion 62 and the main body portion 23 in the second direction Y, and the battery cell 10 adopting this structure can realize insulation and isolation between the first connecting portion 52 and the main body portion 23 and between the second connecting portion 62 and the main body portion 23, which is beneficial to reducing the risk of short circuit between the first current collecting member 5 and the main body portion 23 and between the second current collecting member 6 and the main body portion 23, and can realize that the first connecting portion 52 of the first current collecting member 5 and the second connecting portion 62 of the second current collecting member 6 share one second insulating member 72, which is beneficial to optimizing the assembly process of the battery cell 10 and can reduce the manufacturing cost of the battery cell 10.

In some embodiments, continuously referring to FIG. 5, along the first direction X, the casing 1 includes a first wall portion 13, and the first current collecting member 5 and the second current collecting member 6 are both disposed on a side of the main body portion 23 facing the first wall portion 13. The first wall portion 13 is provided with a first electrode terminal 3 and a second electrode terminal 4, and the first current collecting member 5 and the second current collecting member 6 are respectively connected to the first electrode terminal 3 and the second electrode terminal 4.

The first tab 21 and the second tab 22 are both disposed at one end of the main body portion 23 facing the first wall portion 13 along the first direction X, and the arrangement direction of the main body portion 23 and the first wall portion 13 of the electrode assembly 2 is parallel to the arrangement direction of the main body portion 23 and the tabs (the first tab 21 and the second tab 22).

The first wall portion 13 is a wall portion of the casing 1 located in the first direction X and provided with the first electrode terminal 3 and the second electrode terminal 4. As an example, the thickness direction of the first wall portion 13 is parallel to the first direction X, and the first electrode terminal 3 and the second electrode terminal 4 are arranged in the third direction Z. In the embodiment in which the first current collecting member 5 and the second current collecting member 6 are located in the casing 1, along the first direction X, the first connecting portion 52 of the first current collecting member 5 and the second connecting portion 62 of the second current collecting member 6 are both located between the first wall portion 13 and the main body portion 23.

The first wall portion 13 may be an end cover 12 in the casing 1 or a wall portion in a housing 11 of the casing 1. In the embodiment shown in FIG. 5, the first wall portion 13 is the end cover 12.

As an example, the first current collecting member 5 includes a first protrusion 53, the first protrusion 53 is convexly disposed on a surface of the first connecting portion 52 facing the first wall portion 13, and the first protrusion 53 is connected to the first electrode terminal 3, so as to more conveniently realize an electrical connection between the first current collecting member 5 and the first electrode terminal 3. The second current collecting member 6 includes a second protrusion 63, the second protrusion 63 is convexly disposed on a surface of the second connecting portion 62 facing the first wall portion 13, and the second protrusion 63 is connected to the second electrode terminal 4, so as to more conveniently realize an electrical connection between the second current collecting member 6 and the second electrode terminal 4.

In this embodiment, by disposing the first current collecting member 5 and the second current collecting member 6 on the side of the main body portion 23 facing the first wall portion 13, and disposing the first electrode terminal 3 and the second electrode terminal 4 respectively connected to the first current collecting member 5 and the second current collecting member 6 on the first wall portion 13, the distance between the first electrode terminal 3 and the first tab 21 and the distance between the second electrode terminal 4 and the second tab 22 can be reduced, which is beneficial to reducing the sizes of the first current collecting member 5 and the second current collecting member 6, and reducing the current path from the first tab 21 to the first electrode terminal 3 and the current path from the second tab 22 to the second electrode terminal 4.

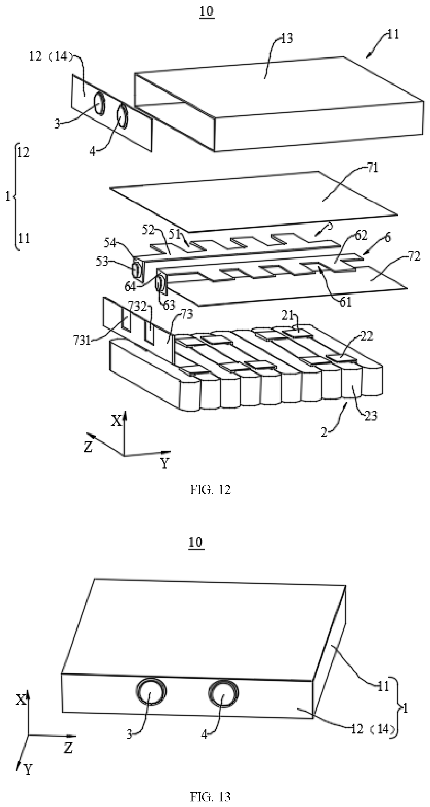

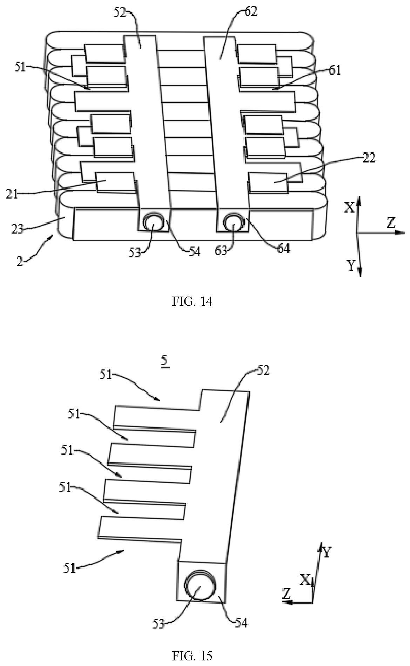

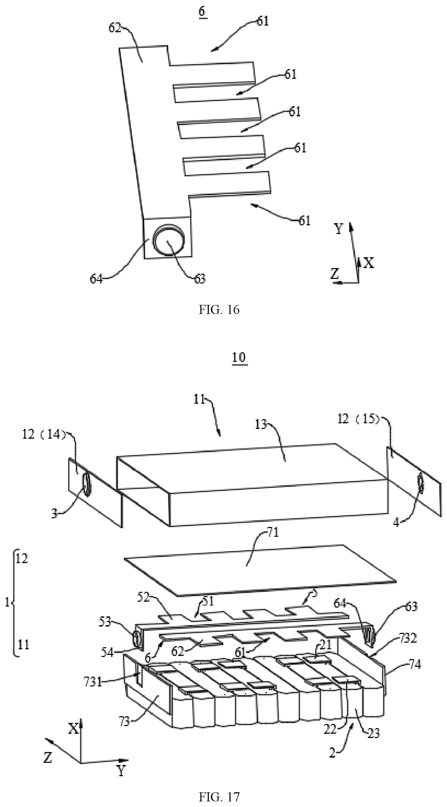

In some embodiments, referring to FIGS. 12-16, FIG. 12 is an exploded view of a battery cell 10 (the first tab 21 and the second tab 22 are disposed at the same end of the main body portion 23) provided in some further embodiments of the present application; FIG. 13 is an assembly diagram of the battery cell 10 as shown in FIG. 12; FIG. 14 is an assembly diagram of the electrode assembly 2, the first current collecting member 5, and the second current collecting member 6 shown in FIG. 12; FIG. 15 is a schematic structural diagram of the first current collecting member 5 shown in FIG. 12; and FIG. 16 is a schematic structural diagram of the second current collecting member 6 shown in FIG. 12. The plurality of electrode assemblies 2 are arranged along a second direction Y, and the second direction Y intersects the first direction X. The first current collecting member 5 includes a third connecting portion 54 connected to the first connecting portion 52, the second current collecting member 6 includes a fourth connecting portion 64 connected to the second connecting portion 62, the casing 1 includes a second wall portion 14 along the second direction Y, and the third connecting portion 54 and the fourth connecting portion 64 are both located on a side of the plurality of electrode assemblies 2 facing the second wall portion 14. The second wall portion 14 is provided with a first electrode terminal 3 and a second electrode terminal 4, and the third connecting portion 54 and the fourth connecting portion 64 are respectively connected to the first electrode terminal 3 and the second electrode terminal 4.

The third connecting portion 54 is a part of the first current collecting member 5 located on a side of the plurality of electrode assemblies 2 facing the second wall portion 14 along the second direction Y, and the fourth connecting portion 64 is a part of the second current collecting member 6 located on a side of the plurality of electrode assemblies 2 facing the second wall portion 14 along the second direction Y. In the embodiment in which the first current collecting member 5 and the second current collecting member 6 are located in the casing 1, along the second direction Y, the third connecting portion 54 is located between the second wall portion 14 and the plurality of electrode assemblies 2, and the fourth connecting portion 64 is located between the second wall portion 14 and the plurality of electrode assemblies 2.

The first connecting portion 52 and the third connecting portion 54 may be of an integrated structure, that is, the first connecting portion 52 and the third connecting portion 54 are integrally formed, and the first connecting portion 52 and the third connecting portion 54 may be manufactured by an integrated forming process such as stamping or casting. Of course, the first connecting portion 52 and the third connecting portion 54 may also be of a split structure, that is, the first connecting portion 52 and the third connecting portion 54 are separately disposed, and the first connecting portion 52 and the third connecting portion 54 may be connected by a structure such as welding connection or bolt screwing. Similarly, the second connecting portion 62 and the fourth connecting portion 64 may also be of an integrated structure, that is, the second connecting portion 62 and the fourth connecting portion 64 are integrally formed, and the second connecting portion 62 and the fourth connecting portion 64 may be manufactured by an integrated forming process such as stamping or casting. Of course, the second connecting portion 62 and the fourth connecting portion 64 may also be of a split structure, that is, the second connecting portion 62 and the fourth connecting portion 64 are separately disposed, and the second connecting portion 62 and the fourth connecting portion 64 may be connected by a structure such as welding connection or bolt screwing.

The second wall portion 14 is a wall portion of the casing 1 located in the second direction Y and provided with the first electrode terminal 3 and the second electrode terminal 4, and as an example, the thickness direction of the second wall portion 14 is parallel to the second direction Y. The casing 1 includes a first wall portion 13 disposed opposite to the plurality of electrode assemblies 2 along the first direction X, the first wall portion 13 is connected to the second wall portion 14, the first current collecting member 5 and the second current collecting member 6 are located in the casing 1, the first connecting portion 52 and the second connecting portion 62 are both disposed between the main body portions 23 of the plurality of electrode assemblies 2 and the first wall portion 13 along the first direction X, the first insulating member 71 is disposed between the first connecting portion 52 and the first wall portion 13 and between the second connecting portion 62 and the first wall portion 13, and the third connecting portion 54 and the fourth connecting portion 64 are both disposed between the main body portions 23 of the plurality of electrode assemblies 2 and the second wall portion 14 along the second direction Y.

The first wall portion 13 may be an end cover 12 in the casing 1 or a wall portion in a housing 11 of the casing 1. In the embodiments shown in FIG. 12 and FIG. 13, the second wall portion 14 is the end cover 12.

As an example, the first current collecting member 5 includes a first protrusion 53, the first protrusion 53 is convexly disposed on a surface of the third connecting portion 54 facing the second wall portion 14, and the first protrusion 53 is connected to the first electrode terminal 3, so as to more conveniently realize an electrical connection between the first current collecting member 5 and the first electrode terminal 3. The second current collecting member 6 includes a second protrusion 63, the second protrusion 63 is convexly disposed on a surface of the fourth connecting portion 64 facing the second wall portion 14, and the second protrusion 63 is connected to the second electrode terminal 4, so as to conveniently realize an electrical connection between the second current collecting member 6 and the second electrode terminal 4.

In this embodiment, the plurality of electrode assemblies 2 are arranged along the second direction Y, and the casing 1 includes the second wall portions 14 arranged along the second direction Y, so that the second wall portions 14 are arranged in the same direction as the plurality of electrode assemblies 2. The first current collecting member 5 is provided with a third connecting portion 54 connected to the first connecting portion 52, the second current collecting member 6 is provided with a fourth connecting portion 64 connected to the second connecting portion 62, the third connecting portion 54 is connected to the first electrode terminal 3 disposed on the second wall portion 14, and the first connecting portion 52 is connected to the first tabs 21 of the plurality of electrode assemblies 2, so that the first tab 21 is electrically connected to the first electrode terminal 3 through the first current collecting member 5, and the fourth connecting portion 64 is connected to the second electrode terminal 4 disposed on the second wall portion 14, and the second connecting portion 62 is connected to the second tab 22 of the plurality of electrode assemblies 2, so that the second tab 22 is electrically connected to the second electrode terminal 4 through the second current collecting member 6. For the battery cell 10 adopting this structure, the first electrode terminal 3 and the second electrode terminal 4 are disposed on the second wall portion 14 in the second direction Y, so that the wall portion of the casing 1 facing the main body portion 23 in the first direction X is not provided with the first electrode terminal 3 and the second electrode terminal 4, thereby facilitating stacking of the plurality of battery cells 10 in the first direction X, and on the other hand, the region where the first current collecting member 5 is connected to the first electrode terminal 3 and the region where the first current collecting member 5 is connected to the first tab 21 can be separated from each other, and the region where the second current collecting member 6 is connected to the second electrode terminal 4 and the region where the second current collecting member 6 is connected to the second tab 22 can be separated from each other, which is beneficial to reducing the difficulty of assembling the first current collecting member 5 with the first electrode terminal 3 and the first tab 21, reducing the difficulty of assembling the second current collecting member 6 with the second electrode terminal 4 and the second tab 22, and reducing the interference between the first electrode terminal 3 and the first tab 21 and between the second electrode terminal 4 and the second tab 22. In particular, when both the first electrode terminal 3 and the first tab 21 are welded to the first current collecting member 5, and both the second electrode terminal 4 and the second tab 22 are welded to the second current collecting member 6, the mutual influence between the weld pool of the first electrode terminal 3 and the first current collecting member 5 and the weld pool of the first tab 21 and the first current collecting member 5 can be effectively reduced, and the mutual influence between the weld pool of the second electrode terminal 4 and the second current collecting member 6 and the weld pool of the second tab 22 and the second current collecting member 6 can be reduced, thereby facilitating the improvement of the assembly quality and stability of the connection of the first electrode terminal 3 and the first tab 21 to the first current collecting member 5 and the connection of the second electrode terminal 4 and the second tab 22 to the second current collecting member 6.

In some embodiments, continuously referring to FIG. 12, the battery cell 10 may include a third insulating member 73, and the third insulating member 73 is disposed on a side of the third connecting portion 54 and the fourth connecting portion 64 facing the plurality of electrode assemblies 2 along the second direction Y, to insulate and isolate the third connecting portion 54 from the electrode assemblies 2 and insulate and isolate the fourth connecting portion 64 from the electrode assemblies 2.

As an example, the third insulating member 73 is located in the casing 1, and along the second direction Y, the third insulating member 73 is located between the third connecting portion 54 and the plurality of electrode assemblies 2 and between the fourth connecting portion 64 and the plurality of electrode assemblies 2, so that the third connecting portion 54 and the electrode assemblies 2, and the fourth connecting portion 64 and the electrode assemblies 2 are insulated and isolated by the third insulating member 73. The third insulating member 73 is made of an insulating material, such as rubber, silicone or plastic.

In this embodiment, the arrangement of the third insulating member 73 can realize insulation and isolation between the third connecting portion 54 and the electrode assembly 2 and between the fourth connecting portion 64 and the electrode assembly 2 on the one hand, which is beneficial to reducing the risk of short circuit, and on the other hand, can realize that the third connecting portion 54 of the first current collecting member 5 and the fourth connecting portion 64 of the second current collecting member 6 share one third insulating member 73, which is beneficial to optimizing the assembly process of the battery cell 10 and can reduce the manufacturing cost of the battery cell 10.

In some embodiments, continuously referring to FIG. 12, along the second direction Y, a first clamping groove 731 is formed in a side of the third insulating member 73 facing away from the plurality of electrode assemblies 2, and the third connecting portion 54 is accommodated in the first clamping groove 731.

The first clamping groove 731 is formed in a surface of the third insulating member 73 facing the second wall portion 14 in the second direction Y, so that the third connecting portion 54 of the first current collecting member 5 can be clamped in the first clamping groove 731. As an example, a thickness of the third connecting portion 54 in the second direction Y is less than or equal to a depth of the first slot 731 in the second direction Y, so that the third connecting portion 54 does not extend out of the first clamping groove 731 in the second direction Y.

In this embodiment, the first clamping groove 731 is formed in the side of the third insulating member 73 facing away from the electrode assembly 2 in the second direction Y, so that the third connecting portion 54 of the first current collecting member 5 can be accommodated in the first clamping groove 731, thereby improving the structural stability of the third insulating assembly between the third connecting portion 54 and the plurality of electrode assemblies 2, and the third insulating member 73 and the third connecting portion 54 can share space in the second direction Y, which is beneficial to improving the utilization rate of the internal space of the battery cell 10.

In some embodiments, continuously referring to FIG. 12, along the second direction Y, a second clamping groove 732 is formed in a side of the third insulating member 73 facing away from the plurality of electrode assemblies 2, and the fourth connecting portion 64 is accommodated in the second clamping groove 732.

The second clamping groove 732 is formed in a surface of the third insulating member 73 facing the second wall portion 14 in the second direction Y, so that the fourth connecting portion 64 of the second current collecting member 6 can be clamped in the second clamping groove 732. As an example, a thickness of the fourth connecting portion 64 in the second direction Y is less than or equal to a depth of the second slot 732 in the second direction Y, so that the fourth connecting portion 64 does not extend out of the second clamping groove 732 in the second direction Y.

In this embodiment, the second clamping groove 732 is formed in the side of the third insulating member 73 facing away from the electrode assembly 2 along the second direction Y, so that the fourth connecting portion 64 of the second current collecting member 6 can be accommodated in the second clamping groove 732, thereby improving the structural stability of the third insulating assembly between the fourth connecting portion 64 and the plurality of electrode assemblies 2, and the third insulating member 73 and the fourth connecting portion 64 can share space in the second direction Y, which is beneficial to improving the utilization rate of the internal space of the battery cell 10.

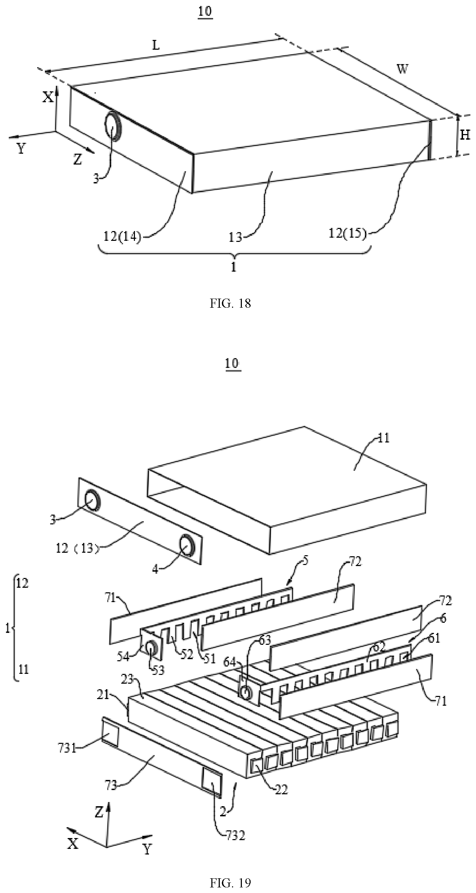

In some embodiments, referring to FIG. 17 and FIG. 18, FIG. 17 is an exploded view of a battery cell 10 (the first tab 21 and the second tab 22 are disposed at the same end of the main body portion 23) provided in some other embodiments of the present application; and FIG. 18 is an assembly diagram of the battery cell 10 as shown in FIG. 17. The plurality of electrode assemblies 2 are arranged along a second direction Y, and the second direction Y intersects the first direction X. The first current collecting member 5 includes a third connecting portion 54 connected to the first connecting portion 52, the second current collecting member 6 includes a fourth connecting portion 64 connected to the second connecting portion 62, and along the second direction Y, the casing 1 includes a second wall portion 14 and a third wall portion 15 that are oppositely disposed, the third connecting portion 54 is located on a side of the plurality of electrode assemblies 2 facing the second wall portion 14, and the fourth connecting portion 64 is located on a side of the plurality of electrode assemblies 2 facing the third wall portion 15. The second wall portion 14 is provided with a first electrode terminal 3, the third wall portion 15 is provided with a second electrode terminal 4, and the third connecting portion 54 and the fourth connecting portion 64 are respectively connected to the first electrode terminal 3 and the second electrode terminal 4.

The third connecting portion 54 is a portion of the first current collecting member 5 located on a side of the plurality of electrode assemblies 2 facing the second wall portion 14 along the second direction Y, and the fourth connecting portion 64 is a portion of the second current collecting member 6 located on a side of the plurality of electrode assemblies 2 facing the third wall portion 15 along the second direction Y. In the embodiment in which the first current collecting member 5 and the second current collecting member 6 are located in the casing 1, along the second direction Y, the third connecting portion 54 is located between the second wall portion 14 and the plurality of electrode assemblies 2, and the fourth connecting portion 64 is located between the third wall portion 15 and the plurality of electrode assemblies 2.

The second wall portion 14 and the third wall portion 15 are two wall portions of the casing 1 that are oppositely disposed along the second direction Y, and as an example, a thickness direction of the second wall portion 14 and a thickness direction of the third wall portion 15 are both parallel to the second direction Y. The casing 1 includes a first wall portion 13 disposed opposite to the plurality of electrode assemblies 2 along the first direction X, the first wall portion 13 connects the second wall portion 14 and the third wall portion 15, the first current collecting member 5 and the second current collecting member 6 are located in the casing 1, the first connecting portion 52 and the second connecting portion 62 are both disposed between the main body portions 23 of the plurality of electrode assemblies 2 and the first wall portion 13 along the first direction X, the first insulating member 71 is disposed between the first connecting portion 52 and the first wall portion 13 and between the second connecting portion 62 and the first wall portion 13, the third connecting portion 54 is disposed between the main body portions 23 of the plurality of electrode assemblies 2 and the second wall portion 14 along the second direction Y, and the fourth connecting portion 64 is disposed between the main body portions 23 of the plurality of electrode assemblies 2 and the third wall portion 15.

One of the second wall portion 14 and the third wall portion 15 may be the end cover 12, and the other one may be a wall portion of the housing 11 facing the end cover 12; alternatively, the two are two end covers 12 or two wall portions that are opposite in the housing 11. As an example, in the embodiment shown in FIG. 17 and FIG. 18, the second wall portion 14 and the third wall portion 15 are two opposite end covers 12 in the casing 1.

As an example, the first current collecting member 5 includes a first protrusion 53, the first protrusion 53 is convexly disposed on a surface of the third connecting portion 54 facing the second wall portion 14, and the first protrusion 53 is connected to the first electrode terminal 3, so as to more conveniently realize an electrical connection between the first current collecting member 5 and the first electrode terminal 3. The second current collecting member 6 includes a second protrusion 63, the second protrusion 63 is convexly disposed a surface of the fourth connecting portion 64 facing the third wall portion 15, and the second protrusion 63 is connected to the second electrode terminal 4, so as to conveniently realize an electrical connection between the second current collecting member 6 and the second electrode terminal 4.

In this embodiment, by disposing the first electrode terminal 3 and the second electrode terminal 4 on the second wall portion 14 and the third wall portion 15 disposed opposite to each other in the second direction Y, respectively, and disposing the third connecting portion 54 of the first current collecting member 5 and the fourth connecting portion 64 of the second current collecting member 6 on two sides of the plurality of electrode assemblies 2, respectively, on the one hand, it is convenient for the third connecting portion 54 of the first current collecting member 5 to be connected to the first electrode terminal 3, and it is convenient for the fourth connecting portion 64 of the second current collecting member 6 to be connected to the second electrode terminal 4, and on the other hand, it is possible to realize that the third connecting portion 54 of the first current collecting member 5 is far away from the fourth connecting portion 64 of the second current collecting member 6, which is beneficial to alleviating the interference phenomenon between the third connecting portion 54 and the fourth connecting portion 64, and can reduce the risk of short circuit between the third connecting portion 54 and the fourth connecting portion 64, so as to improve the use reliability of the battery cell 10.

In some embodiments, continuously referring to FIG. 17, the battery cell 10 may include a third insulating member 73 and a fourth insulating member 74. The third insulating member 73 is disposed between the third connecting portion 54 and the plurality of electrode assemblies 2 along the second direction Y to insulate and isolate the third connecting portion 54 and the electrode assemblies 2. The fourth insulating member 74 is disposed between the fourth connecting portion 64 and the plurality of electrode assemblies 2 along the second direction Y to insulate and isolate the fourth connecting portion 64 and the electrode assemblies 2.

As an example, the third insulating member 73 and the fourth insulating member 74 are disposed opposite to each other along the second direction Y, the third insulating member 73 and the fourth insulating member 74 are located in the casing 1, the third insulating member 73 and the fourth insulating member 74 are located between the second wall portion 14 and the third wall portion 15 in the second direction Y, and the third insulating member 73 is closer to the second wall portion 14 than the fourth insulating member 74. It can be understood that, along the second direction Y, the plurality of electrode assemblies 2 are located between the third insulating member 73 and the fourth insulating member 74. Along the second direction Y, the third insulating member 73 is located between the third connecting portion 54 and the plurality of electrode assemblies 2, and the fourth insulating member 74 is located between the fourth connecting portion 64 and the plurality of electrode assemblies 2, so that the third connecting portion 54 is insulated and isolated from the electrode assemblies 2 by the third insulating member 73, and the fourth connecting portion 64 is insulated and isolated from the electrode assemblies 2 by the fourth insulating member 74. The third insulating member 73 and the fourth insulating member 74 are made of an insulating material, such as rubber, silicone, or plastic.

In this embodiment, by disposing the third insulating member 73 between the third connecting portion 54 and the plurality of electrode assemblies 2 and disposing the fourth insulating member 74 between the fourth connecting portion 64 and the plurality of electrode assemblies 2, insulation and isolation between the third connecting portion 54 and the plurality of electrode assemblies 2 and between the fourth connecting portion 64 and the plurality of electrode assemblies 2 can be realized, thereby reducing the risk of short circuit inside the battery cell 10 and improving the use reliability of the battery cell 10.

In some embodiments, continuously referring to FIG. 17, along the second direction Y, a first clamping groove 731 is formed in a side of the third insulating member 73 facing away from the plurality of electrode assemblies 2, and the third connecting portion 54 is accommodated in the first clamping groove 731.

The first clamping groove 731 is formed in a surface of the third insulating member 73 facing the second wall portion 14 in the second direction Y, so that the third connecting portion 54 of the first current collecting member 5 can be clamped in the first clamping groove 731. As an example, a thickness of the third connecting portion 54 in the second direction Y is less than or equal to a depth of the first slot 731 in the second direction Y, so that the third connecting portion 54 does not extend out of the first clamping groove 731 in the second direction Y.

In this embodiment, by forming the first clamping groove 731 in the side of the third insulating member 73 facing away from the plurality of electrode assemblies 2 in the second direction Y, the third connecting portion 54 of the first current collecting member 5 can be accommodated in the first clamping groove 731, thereby improving the structural stability of the third insulating member 73 assembled between the third connecting portion 54 and the plurality of electrode assemblies 2, and the third insulating member 73 and the third connecting portion 54 can share space in the first direction X, which is beneficial to improving the utilization rate of the internal space of the battery cell 10.

In some embodiments, continuously referring to FIG. 17, along the second direction Y, a second clamping groove 732 is formed in a side of the fourth insulating member 74 facing away from the plurality of electrode assemblies 2, and the fourth connecting portion 64 is accommodated in the second clamping groove 732.

The second clamping slot 732 is disposed on a surface of the fourth insulating member 74 facing the third wall portion 15 in the second direction Y, so that the fourth connecting portion 64 of the second current collecting member 6 can be clamped in the second clamping groove 732. As an example, a thickness of the fourth connecting portion 64 in the second direction Y is less than or equal to a depth of the second slot 732 in the second direction Y, so that the fourth connecting portion 64 does not extend out of the second clamping groove 732 in the second direction Y.

In this embodiment, by forming the second clamping groove 732 in the side of the fourth insulating member 74 facing away from the plurality of electrode assemblies 2 along the second direction Y, the fourth connecting portion 64 of the second current collecting member 6 can be accommodated in the second clamping groove 732, thereby improving the structural stability of the fourth insulating assembly between the fourth connecting portion 64 and the plurality of electrode assemblies 2, and the fourth insulating member 74 and the fourth connecting portion 64 can share space in the second direction Y, which is beneficial to improving the utilization rate of the internal space of the battery cell 10.

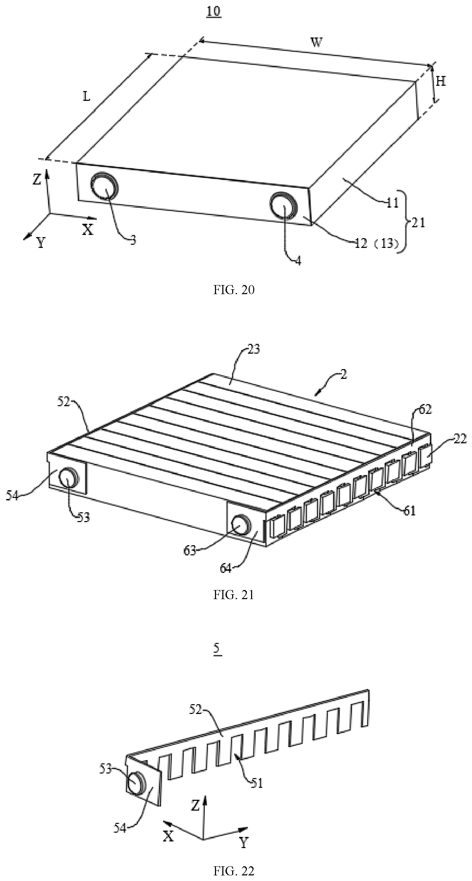

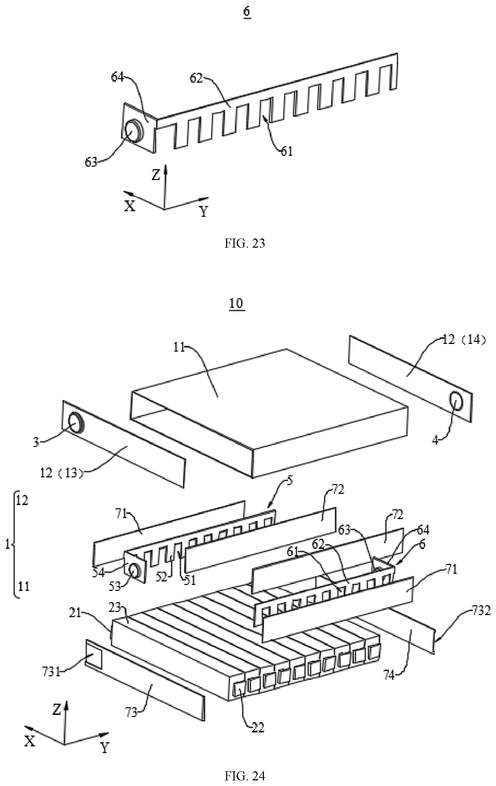

In some embodiments, referring to FIGS. 19-23, FIG. 19 is an exploded view of a battery cell 10 (the first tab 21 and the second tab 22 are disposed at two opposite ends of the main body portion 23) provided in some embodiments of the present application; FIG. 20 is an assembly diagram of the battery cell 10 as shown in FIG. 19; FIG. 21 is a connection schematic diagram of the electrode assembly 2, the first current collecting member 5, and the second current collecting member 6 shown in FIG. 19; FIG. 22 is a schematic structural diagram of the first current collecting member 5 shown in FIG. 19; and FIG. 23 is a schematic structural diagram of the second current collecting member 6 shown in FIG. 19. Along the first direction X, the first tab 21 and the second tab 22 are respectively disposed at two opposite ends of the main body portion 23. The first current collecting member 5 includes a first connecting portion 52 connected to each of the first tabs 21, the first connecting portion 52 is located on a side of the main body portion 23 provided with the first tab 21 in the first direction X, the second current collecting member 6 includes a second connecting portion 62 connected to each of the second tabs 22, and the second connecting portion 62 is located on a side of the main body portion 23 provided with the second tab 22 in the first direction X.

The first connecting portion 52 is a part of the first current collecting member 5 located on a side of the main body portion 23 provided with the first tab 21 in the first direction X, and the first connecting portion 52 functions to connect the first tabs 21 of the plurality of electrode assemblies 2. The first connecting portion 52 may be a part of the first current collecting member 5, or the first connecting portion 52 may be the first current collecting member 5. The connection structure between the first connecting portion 52 and the first tab 21 may be various, such as welding, abutting, or bonding with a conductive adhesive. The second connecting portion 62 is a part of the second current collecting member 6 located on a side of the main body portion 23 provided with the second tab 22 in the first direction X, and the second connecting portion 62 functions to connect the second tabs 22 of the plurality of electrode assemblies 2. The second connecting portion 62 may be a part of the second current collecting member 6, or the second connecting portion 62 is the second current collecting member 6. The second connecting portion 62 plays a role of connecting the second tabs 22 of the plurality of electrode assemblies 2, and the second connecting portion 62 and the second tab 22 may be connected in various ways, such as welding, abutting, or conductive adhesive bonding.

As an example, the plurality of electrode assemblies 2 are arranged along the second direction Y, the first tab 21 and the second tab 22 are arranged along the first direction X, the first current collecting member 5 and the second current collecting member 6 are located in the casing 1 and arranged along the first direction X, the first connecting portion 52 and the second connecting portion 62 are disposed opposite to each other along the first direction X, the casing 1 is in a rectangular parallelepiped shape, the third direction Z is parallel to the height direction of the casing 1, and along the third direction Z, the area of the outer surfaces of two opposite wall portions of the casing 1 is larger than the area of the outer surfaces of other wall portions. The first direction X, the second direction Y, and the third direction Z are not coplanar and intersect with each other. Each two of the first direction X, the second direction Y and the third direction Z form a plane, and the first direction X, the second direction Y and the third direction Z are not coplanar, that is, the three planes formed by the first direction X, the second direction Y and the third direction Z are not coplanar.

The casing 1 is provided with a first electrode terminal 3 and a second electrode terminal 4, the first electrode terminal 3 is connected to the first current collecting member 5, and the second electrode terminal 4 is connected to the second current collecting member 6. The first electrode terminal 3 and the second electrode terminal 4 may be respectively disposed on two wall portions of the casing 1, for example, the first electrode terminal 3 and the second electrode terminal 4 are disposed on two wall portions of the casing 1 opposite to each other along the first direction X, and for another example, the first electrode terminal 3 and the second electrode terminal 4 are disposed on two adjacent wall portions of the casing 1. The first electrode terminal 3 and the second electrode terminal 4 may also be disposed on the same wall portion of the casing 1, for example, the first electrode terminal 3 and the second electrode terminal 4 are disposed on the same wall portion of the casing 1 along the first direction X. For another example, the first electrode terminal 3 and the second electrode terminal 4 are disposed on a same wall portion of the casing 1 along the second direction Y. For another example, the first electrode terminal 3 and the second electrode terminal 4 are disposed on a same wall portion of the casing 1 along the third direction Z.

It should be noted that, in the embodiment in which the first current collecting member 5 is provided with the first avoidance area 51, the first avoidance area 51 may be provided in the first connecting portion 52. In the embodiment in which the second current collecting member 6 is provided with the second avoidance area 61, the second avoidance area 61 may be provided in the second connecting portion 62.

In this embodiment, by disposing the first tab 21 and the second tab 22 at two ends of the main body portion 23 in the first direction X respectively, and disposing the first connecting portion 52 of the first current collecting member 5 and the second connecting portion 62 of the second current collecting member 6 on two sides of the plurality of electrode assemblies 2 in the first direction X respectively, on the one hand, it facilitates the connection between the first current collecting member 5 and the first tab 21 and the connection between the second current collecting member 6 and the second tab 22, which is beneficial to alleviating the interference between the first current collecting member 5 and the second current collecting member 6, and on the other hand, it enables the first tab 21 and the second tab 22 with opposite polarities to be away from each other, and enables the first connecting portion 52 of the first current collecting member 5 and the second connecting portion 62 of the second current collecting member 6 to be away from each other, which is beneficial to reducing the risk of short circuit between the first tab 21 and the second tab 22 and between the first current collecting member 5 and the second current collecting member 6, so as to improve the use reliability of the battery cell 10.

In some embodiments, continuously referring to FIG. 19, the battery cell 10 may include two first insulating members 71, the two first insulating members 71 are respectively disposed on two sides of the plurality of electrode assemblies 2 along the first direction X, one first insulating member 71 is located on a side of the first connecting portion 52 facing away from the main body portion 23 to insulate and isolate the first connecting portion 52 from the casing 1, and the other first insulating member 71 is located on a side of the second connecting portion 62 facing away from the main body portion 23 to insulate and isolate the second connecting portion 62 from the casing 1.

As an example, two first insulating members 71 are located in the casing 1, and along the first direction X, one first insulating member 71 is located between the first connecting portion 52 of the first current collecting member 5 and one wall portion of the casing 1, and the other first insulating member 71 is located between the second connecting portion 62 of the second current collecting member 6 and the other wall portion of the casing 1, so that the first connecting portion 52 and the second connecting portion 62 can be insulated and isolated from the casing 1 by the two first insulating members 71, respectively. The first insulating member 71 is made of an insulating material, such as rubber, silicone, or plastic.

In this embodiment, the first insulating member 71 is disposed between the first connecting portion 52 and the casing 1 and between the second connecting portion 62 and the casing 1, so that insulation and isolation between the first connecting portion 52 and the casing 1 and between the second connecting portion 62 and the casing 1 can be respectively realized by the two first insulating members 71, which is beneficial to reduce the risk of short circuit between the first current collecting member 5 and the casing 1 and between the second current collecting member 6 and the casing 1, so as to improve the use reliability of the battery cell 10.

In some embodiments, continuously referring to FIG. 19, the battery cell 10 may include two second insulating members 72, the two second insulating members 72 are respectively disposed on two sides of the plurality of electrode assemblies 2 along the first direction X, one second insulating member 72 is located on a side of the first connecting portion 52 facing the main body portion 23 along the first direction X to insulate and isolate the first connecting portion 52 from the main body portion 23, and the other second insulating member 72 is located on a side of the second connecting portion 62 facing the main body portion 23 to insulate and isolate the second connecting portion 62 from the main body portion 23.

As an example, two second insulating members 72 are located in the casing 1, and along the first direction X, one second insulating member 72 is located between the first connecting portion 52 and the main body portion 23 of the first current collecting member 5, and the other second insulating member 72 is located between the second connecting portion 62 and the main body portion 23 of the second current collecting member 6, so that the first connecting portion 52 and the second connecting portion 62 can be insulated and isolated from the main body portion 23 by the two second insulating members 72, respectively. The second insulating member 72 is made of an insulating material, such as rubber, silicone, or plastic.

In this embodiment, the second insulating member 72 is disposed between the first connecting portion 52 and the main body portion 23 and between the second connecting portion 62 and the main body portion 23, so that insulation and isolation between the first connecting portion 52 and the main body portion 23 and between the second connecting portion 62 and the main body portion 23 can be respectively realized by the two second insulating members 72, which is beneficial to reducing the risk of short circuit between the first current collecting member 5 and the main body portion 23 and between the second current collecting member 6 and the main body portion 23, so as to improve the use reliability of the battery cell 10.

In some embodiments, continuously referring to FIGS. 19-23, the plurality of electrode assemblies 2 are arranged along a second direction Y, and the second direction Y intersects the first direction X. The first current collecting member 5 includes a third connecting portion 54 connected to the first connecting portion 52, the second current collecting member 6 includes a fourth connecting portion 64 connected to the second connecting portion 62, and along the second direction Y, the casing 1 includes a first wall portion 13, and the third connecting portion 54 and the fourth connecting portion 64 are both located on a side of the plurality of electrode assemblies 2 facing the first wall portion 13. The first wall portion 13 is provided with a first electrode terminal 3 and a second electrode terminal 4, and the third connecting portion 54 and the fourth connecting portion 64 are respectively connected to the first electrode terminal 3 and the second electrode terminal 4.

The third connecting portion 54 is a part of the first current collecting member 5 located on a side of the plurality of electrode assemblies 2 facing the first wall portion 13 along the second direction Y, and the fourth connecting portion 64 is a part of the second current collecting member 6 located on a side of the plurality of electrode assemblies 2 facing the first wall portion 13 along the second direction Y. In the embodiment in which the first current collecting member 5 and the second current collecting member 6 are located in the casing 1, along the second direction Y, the third connecting portion 54 is located between the first wall portion 13 and the plurality of electrode assemblies 2, and the fourth connecting portion 64 is located between the first wall portion 13 and the plurality of electrode assemblies 2.

The first connecting portion 52 and the third connecting portion 54 may be of an integrated structure, that is, the first connecting portion 52 and the third connecting portion 54 are integrally formed, and the first connecting portion 52 and the third connecting portion 54 may be manufactured by an integrated forming process such as stamping or casting. Of course, the first connecting portion 52 and the third connecting portion 54 may also be of a split structure, that is, the first connecting portion 52 and the third connecting portion 54 are separately disposed, and the first connecting portion 52 and the third connecting portion 54 may be connected by a structure such as welding connection or bolt screwing. Similarly, the second connecting portion 62 and the fourth connecting portion 64 may also be of an integrated structure, that is, the second connecting portion 62 and the fourth connecting portion 64 are integrally formed, and the second connecting portion 62 and the fourth connecting portion 64 may be manufactured by an integrated forming process such as stamping or casting. Of course, the second connecting portion 62 and the fourth connecting portion 64 may also be of a split structure, that is, the second connecting portion 62 and the fourth connecting portion 64 are separately disposed, and the second connecting portion 62 and the fourth connecting portion 64 may be connected by a structure such as welding connection or bolt screwing.

The first wall portion 13 is a wall portion of the casing 1 located in the second direction Y and provided with the first electrode terminal 3 and the second electrode terminal 4, and as an example, a thickness direction of the first wall portion 13 is parallel to the second direction Y. The first current collecting member 5 and the second current collecting member 6 are located in the casing 1, the first connecting portion 52 is disposed between the main body portions 23 of the plurality of electrode assemblies 2 and one wall portion of the casing 1 along the first direction X, the second connecting portion 62 is disposed between the main body portions 23 of the plurality of electrode assemblies 2 and the other wall portion of the casing 1, and the third connecting portion 54 and the fourth connecting portion 64 are both disposed between the main body portions 23 of the plurality of electrode assemblies 2 and the first wall portion 13 along the second direction Y.

The first wall portion 13 may be an end cover 12 in the casing 1 or a wall portion in a housing 11 of the casing 1. In the embodiment shown in FIG. 19 and FIG. 20, the first wall portion 13 is the end cap 12.

As an example, the first current collecting member 5 includes a first protrusion 53, the first protrusion 53 is convexly disposed on a surface of the third connecting portion 54 facing the first wall portion 13, and the first protrusion 53 is connected to the first electrode terminal 3, so as to more conveniently realize an electrical connection between the first current collecting member 5 and the first electrode terminal 3. The second current collecting member 6 includes a second protrusion 63, the second protrusion 63 is convexly disposed on a surface of the fourth connecting portion 64 facing the first wall portion 13, and the second protrusion 63 is connected to the second electrode terminal 4, so as to conveniently realize an electrical connection between the second current collecting member 6 and the second electrode terminal 4.

In this embodiment, the first electrode terminal 3 and the second electrode terminal 4 are both disposed on the first wall portion 13, and the third connecting portion 54 of the first current collecting member 5 and the fourth connecting portion 64 of the second current collecting member 6 are both disposed on the side of the plurality of electrode assemblies 2 facing the first wall portion 13, which, on the one hand, facilitates the connection between the third connecting portion 54 of the first current collecting member 5 and the first electrode terminal 3, and facilitates the connection between the fourth connecting portion 64 of the second current collecting member 6 and the second electrode terminal 4, and on the other hand, enables the battery cell 10 to be a structure in which the first electrode terminal 3 and the second electrode terminal 4 are connected at the same end in the second direction Y, and enables the third connecting portion 54 and the fourth connecting portion 64 to share space in the second direction Y, thereby improving the space utilization rate of the battery cell 10 to improve the volume energy density of the battery cell 10. In addition, for the battery cell 10 adopting this structure, the first electrode terminal 3 and the second electrode terminal 4 are disposed on the first wall portion 13 along the second direction Y, so that the wall portion of the casing 1 facing the main body portion 23 in the first direction X is not provided with the first electrode terminal 3 and the second electrode terminal 4, thereby facilitating stacking of the plurality of battery cells 10 in the first direction X, and on the other hand, the region where the first current collecting member 5 is connected to the first electrode terminal 3 and the region where the first current collecting member 5 is connected to the first tab 21 can be separated from each other, and the region where the second current collecting member 6 is connected to the second electrode terminal 4 and the region where the second current collecting member 6 is connected to the second tab 22 can be separated from each other, which is beneficial to reducing the difficulty of assembling the first current collecting member 5 with the first electrode terminal 3 and the first tab 21, and reducing the difficulty of assembling the second current collecting member 6 with the second electrode terminal 4 and the second tab 22, and can reduce the interference problem between the first electrode terminal 3 and the first tab 21 and between the second electrode terminal 4 and the second tab 22. In particular, when both the first electrode terminal 3 and the first tab 21 are welded to the first current collecting member 5, and both the second electrode terminal 4 and the second tab 22 are welded to the second current collecting member 6, the mutual influence between the weld pool of the first electrode terminal 3 and the first current collecting member 5 and the weld pool of the first tab 21 and the first current collecting member 5 can be effectively reduced, and the mutual influence between the weld pool of the second electrode terminal 4 and the second current collecting member 6 and the weld pool of the second tab 22 and the second current collecting member 6 can be reduced, thereby facilitating the improvement of the assembly quality and stability of the connection of the first electrode terminal 3 and the first tab 21 to the first current collecting member 5 and the connection of the second electrode terminal 4 and the second tab 22 to the second current collecting member 6.

In some embodiments, continuously referring to FIG. 19, the battery cell 10 may include a third insulating member 73, and the third insulating member 73 is disposed on a side of the third connecting portion 54 and the fourth connecting portion 64 facing the plurality of electrode assemblies 2 along the second direction Y, to insulate and isolate the third connecting portion 54 from the electrode assemblies 2 and insulate and isolate the fourth connecting portion 64 from the electrode assemblies 2.

As an example, the third insulating member 73 is located in the casing 1, and along the second direction Y, the third insulating member 73 is located on a side of the plurality of electrode assemblies 2 facing the first wall portion 13, and the third insulating member 73 is located between the third connecting portion 54 and the plurality of electrode assemblies 2 and between the fourth connecting portion 64 and the plurality of electrode assemblies 2, so that the third connecting portion 54 and the electrode assembly 2, and the fourth connecting portion 64 and the electrode assembly 2 are insulated and isolated by the third insulating member 73. The third insulating member 73 is made of an insulating material, such as rubber, silicone or plastic.

In this embodiment, the arrangement of the third insulating member 73 can realize insulation and isolation between the third connecting portion 54 and the electrode assembly 2 and between the fourth connecting portion 64 and the electrode assembly 2 on the one hand, which is beneficial to reducing the risk of short circuit, and on the other hand, can realize that the third connecting portion 54 of the first current collecting member 5 and the fourth connecting portion 64 of the second current collecting member 6 share one third insulating member 73, which is beneficial to optimizing the assembly process of the battery cell 10 and can reduce the manufacturing cost of the battery cell 10.

In some embodiments, continuously referring to FIG. 19, along the second direction Y, a first clamping groove 731 is formed in a side of the third insulating member 73 facing away from the plurality of electrode assemblies 2, and the third connecting portion 54 is accommodated in the first clamping groove 731.

The first clamping groove 731 is formed in a surface of the third insulating member 73 facing the first wall portion 13 in the second direction Y, so that the third connecting portion 54 of the first current collecting member 5 can be clamped in the first clamping groove 731. As an example, a thickness of the third connecting portion 54 in the second direction Y is less than or equal to a depth of the first slot 731 in the second direction Y, so that the third connecting portion 54 does not extend out of the first clamping groove 731 in the second direction Y.

In this embodiment, the first clamping groove 731 is formed in the side of the third insulating member 73 facing away from the electrode assembly 2 in the second direction Y, so that the third connecting portion 54 of the first current collecting member 5 can be accommodated in the first clamping groove 731, thereby improving the structural stability of the third insulating assembly between the third connecting portion 54 and the plurality of electrode assemblies 2, and the third insulating member 73 and the third connecting portion 54 can share space in the second direction Y, which is beneficial to improving the utilization rate of the internal space of the battery cell 10.

In some embodiments, continuously referring to FIG. 19, along the second direction Y, a second clamping groove 732 is formed in a side of the third insulating member 73 facing away from the plurality of electrode assemblies 2, and the fourth connecting portion 64 is accommodated in the second clamping groove 732.

The second clamping groove 732 is formed in a surface of the third insulating member 73 facing the first wall portion 13 in the second direction Y, so that the fourth connecting portion 64 of the second current collecting member 6 can be clamped in the second clamping groove 732. As an example, a thickness of the fourth connecting portion 64 in the second direction Y is less than or equal to a depth of the second slot 732 in the second direction Y, so that the fourth connecting portion 64 does not extend out of the second clamping groove 732 in the second direction Y.

In this embodiment, the second clamping groove 732 is formed in the side of the third insulating member 73 facing away from the electrode assembly 2 along the second direction Y, so that the fourth connecting portion 64 of the second current collecting member 6 can be accommodated in the second clamping groove 732, thereby improving the structural stability of the third insulating assembly between the fourth connecting portion 64 and the plurality of electrode assemblies 2, and the third insulating member 73 and the fourth connecting portion 64 can share space in the second direction Y, which is beneficial to improving the utilization rate of the internal space of the battery cell 10.

In some embodiments, referring to FIG. 24, FIG. 24 is an exploded view of a battery cell 10 (the first tab 21 and the second tab 22 are disposed at two opposite ends of the main body portion 23) provided in some other embodiments of the present application. The plurality of electrode assemblies 2 are arranged along a second direction Y, and the second direction Y intersects the first direction X. The first current collecting member 5 includes a third connecting portion 54 connected to the first connecting portion 52, the second current collecting member 6 includes a fourth connecting portion 64 connected to the second connecting portion 62, and along the second direction Y, the casing 1 includes a first wall portion 13 and a second wall portion 14 that are oppositely disposed, the third connecting portion 54 is located on a side of the plurality of electrode assemblies 2 facing the first wall portion 13, and the fourth connecting portion 64 is located on a side of the plurality of electrode assemblies 2 facing the second wall portion 14. The first wall portion 13 is provided with a first electrode terminal 3, the second wall portion 14 is provided with a second electrode terminal 4, and the third connecting portion 54 and the fourth connecting portion 64 are respectively connected to the first electrode terminal 3 and the second electrode terminal 4.

The third connecting portion 54 is a part of the first current collecting member 5 located on a side of the plurality of electrode assemblies 2 facing the first wall portion 13 along the second direction Y, and the fourth connecting portion 64 is a part of the second current collecting member 6 located on a side of the plurality of electrode assemblies 2 facing the second wall portion 14 along the second direction Y. In the embodiment in which the first current collecting member 5 and the second current collecting member 6 are located in the casing 1, along the second direction Y, the third connecting portion 54 is located between the first wall portion 13 and the plurality of electrode assemblies 2, and the fourth connecting portion 64 is located between the second wall portion 14 and the plurality of electrode assemblies 2.

The first wall portion 13 and the third wall portion 15 are two wall portions of the casing 1 oppositely disposed along the second direction Y, and as an example, a thickness direction of the first wall portion 13 and a thickness direction of the second wall portion 14 are both parallel to the second direction Y. As an example, the first current collecting member 5 and the second current collecting member 6 are located in the casing 1, the first connecting portion 52 is disposed between the main body portions 23 of the plurality of electrode assemblies 2 and one wall portion of the casing 1 along the first direction X, the second connecting portion 62 is disposed between the main body portions 23 of the plurality of electrode assemblies 2 and the other wall portion of the casing 1, the third connecting portion 54 is disposed between the main body portions 23 of the plurality of electrode assemblies 2 and the first wall portion 13 along the second direction Y, and the fourth connecting portion 64 is disposed between the main body portions 23 of the plurality of electrode assemblies 2 and the second wall portion 14.

One of the first wall portion 13 and the second wall portion 14 may be the end cover 12, and the other one may be a wall portion of the housing 11 facing the end cover 12; alternatively, the two are two end covers 12 or two wall portions that are opposite in the housing 11. As an example, in the embodiment shown in FIG. 24, the first wall portion 13 and the second wall portion 14 are two opposite end covers 12 in the casing 1.

As an example, the first current collecting member 5 includes a first protrusion 53, the first protrusion 53 is convexly disposed on a surface of the third connecting portion 54 facing the first wall portion 13, and the first protrusion 53 is connected to the first electrode terminal 3, so as to more conveniently realize an electrical connection between the first current collecting member 5 and the first electrode terminal 3. The second current collecting member 6 includes a second protrusion 63, the second protrusion 63 is convexly disposed on a surface of the fourth connecting portion 64 facing the second wall portion 14, and the second protrusion 63 is connected to the second electrode terminal 4, so as to conveniently realize an electrical connection between the second current collecting member 6 and the second electrode terminal 4.

By disposing the first electrode terminal 3 and the second electrode terminal 4 on the first wall portion 13 and the second wall portion 14 arranged opposite to each other along the second direction Y, respectively, and disposing the third connecting portion 54 of the first current collecting member 5 and the fourth connecting portion 64 of the second current collecting member 6 on both sides of the plurality of electrode assemblies 2, respectively, on the one hand, it is convenient for the third connecting portion 54 of the first current collecting member 5 to be connected to the first electrode terminal 3, and it is convenient for the fourth connecting portion 64 of the second current collecting member 6 to be connected to the second electrode terminal 4, and on the other hand, it is possible to realize that the third connecting portion 54 of the first current collecting member 5 and the fourth connecting portion 64 of the second current collecting member 6 are away from each other, which is beneficial to reducing the risk of short circuit between the third connecting portion 54 and the fourth connecting portion 64, thereby improving the use reliability of the battery cell 10. In addition, for the battery cell 10 adopting this structure, the first electrode terminal 3 and the second electrode terminal 4 are respectively disposed on the first wall portion 13 and the second wall portion 14 in the second direction Y, so that the wall portion of the casing 1 facing the main body portion 23 in the first direction X is not provided with the first electrode terminal 3 and the second electrode terminal 4, thereby facilitating stacking of the plurality of battery cells 10 in the first direction X, and on the other hand, the region where the first current collecting member 5 is connected to the first electrode terminal 3 and the region where the first current collecting member 5 is connected to the first tab 21 can be separated from each other, and the region where the second current collecting member 6 is connected to the second electrode terminal 4 and the region where the second current collecting member 6 is connected to the second tab 22 can be separated from each other, which is beneficial to reducing the difficulty of assembling the first current collecting member 5 with the first electrode terminal 3 and the first tab 21, and reducing the difficulty of assembling the second current collecting member 6 with the second electrode terminal 4 and the second tab 22, and can reduce the interference problem between the first electrode terminal 3 and the first tab 21 and between the second electrode terminal 4 and the second tab 22. In particular, when both the first electrode terminal 3 and the first tab 21 are welded to the first current collecting member 5, and both the second electrode terminal 4 and the second tab 22 are welded to the second current collecting member 6, the mutual influence between the weld pool of the first electrode terminal 3 and the first current collecting member 5 and the weld pool of the first tab 21 and the first current collecting member 5 can be effectively reduced, and the mutual influence between the weld pool of the second electrode terminal 4 and the second current collecting member 6 and the weld pool of the second tab 22 and the second current collecting member 6 can be reduced, thereby facilitating the improvement of the assembly quality and stability of the connection of the first electrode terminal 3 and the first tab 21 to the first current collecting member 5 and the connection of the second electrode terminal 4 and the second tab 22 to the second current collecting member 6.

In some embodiments, continuously referring to FIG. 24, the battery cell 10 may include a third insulating member 73 and a fourth insulating member 74. The third insulating member 73 is disposed between the third connecting portion 54 and the plurality of electrode assemblies 2 along the second direction Y to insulate and isolate the third connecting portion 54 and the electrode assemblies 2. The fourth insulating member 74 is disposed between the fourth connecting portion 64 and the plurality of electrode assemblies 2 along the second direction Y to insulate and isolate the fourth connecting portion 64 and the electrode assemblies 2.

The third insulating member 73 and the fourth insulating member 74 are disposed opposite to each other in the second direction Y. As an example, the third insulating member 73 and the fourth insulating member 74 are located in the casing 1, and along the second direction Y, the third insulating member 73 and the fourth insulating member 74 are located between the first wall portion 13 and the second wall portion 14, and the third insulating member 73 is closer to the first wall portion 13 than the fourth insulating member 74. It can be understood that, along the second direction Y, the plurality of electrode assemblies 2 are located between the third insulating member 73 and the fourth insulating member 74. Along the second direction Y, the third insulating member 73 is located between the third connecting portion 54 and the plurality of electrode assemblies 2, and the fourth insulating member 74 is located between the fourth connecting portion 64 and the plurality of electrode assemblies 2, so that the third connecting portion 54 is insulated and isolated from the electrode assemblies 2 by the third insulating member 73, and the fourth connecting portion 64 is insulated and isolated from the electrode assemblies 2 by the fourth insulating member 74. The third insulating member 73 and the fourth insulating member 74 are made of an insulating material, such as rubber, silicone, or plastic.

In this embodiment, the third insulating member 73 and the fourth insulating member 74 can realize insulation and isolation between the third connecting portion 54 and the electrode assembly 2 and between the fourth connecting portion 64 and the electrode assembly 2, which is beneficial to reducing the short circuit risk of the battery cell 10 and improving the use reliability of the battery cell 10.

In some embodiments, continuously referring to FIG. 24, along the second direction Y, a first clamping groove 731 is formed in a side of the third insulating member 73 facing away from the plurality of electrode assemblies 2, and the third connecting portion 54 is accommodated in the first clamping groove 731.

The first clamping groove 731 is formed in a surface of the third insulating member 73 facing the first wall portion 13 in the second direction Y, so that the third connecting portion 54 of the first current collecting member 5 can be clamped in the first clamping groove 731. As an example, a thickness of the third connecting portion 54 in the second direction Y is less than or equal to a depth of the first slot 731 in the second direction Y, so that the third connecting portion 54 does not extend out of the first clamping groove 731 in the second direction Y.

In this embodiment, the first clamping groove 731 is formed in the side of the third insulating member 73 facing away from the electrode assembly 2 in the second direction Y, so that the third connecting portion 54 of the first current collecting member 5 can be accommodated in the first clamping groove 731, thereby improving the structural stability of the third insulating assembly between the third connecting portion 54 and the plurality of electrode assemblies 2, and the third insulating member 73 and the third connecting portion 54 can share space in the second direction Y, which is beneficial to improving the utilization rate of the internal space of the battery cell 10.

In some embodiments, continuously referring to FIG. 24, along the second direction Y, a second clamping groove 732 is formed in a side of the fourth insulating member 74 facing away from the plurality of electrode assemblies 2, and the fourth connecting portion 64 is accommodated in the second clamping groove 732.

The second clamping groove 732 is formed in a surface of the fourth insulating member 74 facing the second wall portion 14 in the second direction Y, so that the fourth connecting portion 64 of the second current collecting member 6 can be clamped in the second clamping groove 732. As an example, a thickness of the fourth connecting portion 64 in the second direction Y is less than or equal to a depth of the second slot 732 in the second direction Y, so that the fourth connecting portion 64 does not extend out of the second clamping groove 732 in the second direction Y.

In this embodiment, by forming the second clamping groove 732 in the side of the fourth insulating member 74 facing away from the electrode assembly 2 in the second direction Y, the fourth connecting portion 64 of the second current collecting member 6 can be accommodated in the second clamping groove 732, thereby improving the structural stability of the fourth insulating assembly between the fourth connecting portion 64 and the plurality of electrode assemblies 2, and the fourth insulating member 74 and the fourth connecting portion 64 can share space in the second direction Y, which is beneficial to improving the utilization rate of the internal space of the battery cell 10.

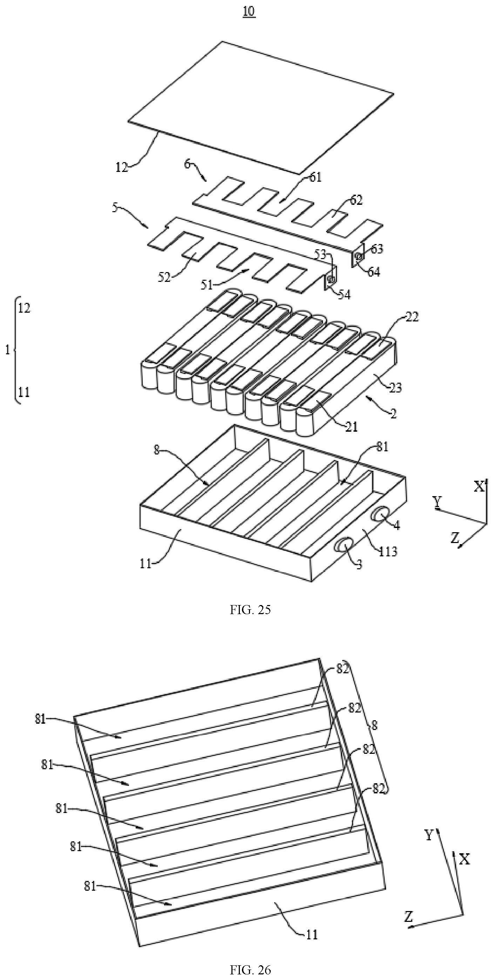

In some embodiments, referring to FIG. 25, FIG. 25 is an exploded view of a battery cell 10 (a separating apparatus 8 is disposed in the casing 1) provided in some embodiments of the present application. The battery cell 10 includes a plurality of electrode assemblies 2, the casing 1 has an accommodating space, and the plurality of electrode assemblies 2 are accommodated in the accommodating space. The battery cell 10 includes a separating apparatus 8, the separating apparatus 8 is disposed in the accommodating space, the separating apparatus 8 is configured to separate the accommodating space into a plurality of subspaces 81, and each of the subspaces 81 accommodates at least one electrode assembly 2.

The separating apparatus 8 is a component that separates the accommodating space of the casing 1 into a plurality of subspaces 81 in the battery cell 10, the subspaces 81 may be defined by the separating apparatus 8 and the casing 1 together, or the subspaces 81 may be defined by the separating apparatus 8, for example, the subspaces 81 are formed inside the separating apparatus 8. The separating apparatus 8 is disposed in the accommodating space, and the separating apparatus 8 may be connected to the casing 1 to fix the separating apparatus 8 to the casing 1, for example, the separating apparatus 8 is connected to the end cover 12 of the casing 1, and for another example, the separating apparatus 8 is connected to the housing 11 of the casing 1. Alternatively, the separating apparatus 8 is placed in the casing 1, the separating apparatus 8 and the casing 1 only keep in contact with each other, and the two are not connected together, for example, the separating apparatus 8 is placed in the housing 11 of the casing 1, and the separating apparatus 8 is in contact with the housing 11.

In the casing 1, the total space of the plurality of subspaces 81 is a part of the accommodating space, and each of the subspaces 81 may accommodate one electrode assembly 2 or a plurality of electrode assemblies 2. The plurality of subspaces 81 may be arranged along a certain direction, and by taking the casing 1 having a rectangular parallelepiped battery cell 10 as an example, the plurality of subspaces 81 may be arranged along the length, width or height of the casing 1. The plurality of subspaces 81 may also be arranged along a plurality of directions, for example, the plurality of subspaces 81 are distributed in a plurality of rows and a plurality of columns.

It should be noted that in this embodiment, the first tab 21 and the second tab 22 may be disposed at the same end of the main body portion 23 along the first direction X or the first tab 21 and the second tab 22 may also be disposed at two opposite ends of the main body portion 23 along the first direction X. The first current collecting member 5 and the second current collecting member 6 may be disposed on the same side of the main body portion 23 along the first direction X, or the first current collecting member 5 and the second current collecting member 6 may be disposed on two opposite sides of the main body portion 23 along the first direction X. The first electrode terminal 3 and the second electrode terminal 4 may be disposed on the same wall portion of the casing 1, or may be disposed on two opposite wall portions of the casing 1, respectively. The first electrode terminal 3 and the second electrode terminal 4 may be disposed on a wall portion of the casing 1 in the first direction X or may be disposed on a wall portion of the casing 1 in the second direction Y. The first direction X intersects with the second direction Y.

As an example, in FIG. 25, the plurality of electrode assemblies 2 are arranged along the second direction Y, the first tab 21 and the second tab 22 are disposed at the same end of the main body portion 23 along the first direction X, the first current collecting member 5 and the second current collecting member 6 are arranged along the third direction Z, the first current collecting member 5 and the second current collecting member 6 are disposed on one side of the plurality of electrode assemblies 2 along the first direction X, the first electrode terminal 3 and the second electrode terminal 4 are disposed on the same wall portion of the housing 11, the wall portion is disposed opposite to the plurality of electrode assemblies 2 in the second direction Y, and the third direction Z, the second direction Y and the first direction X are perpendicular to each other.

In this embodiment, the accommodating space of the casing 1 is provided with the separating apparatus 8, the separating apparatus 8 separates the accommodating space into a plurality of subspaces 81, and the separating apparatus 8 performs a separating function on the electrode assemblies 2 in each of the subspaces 81, so as to reduce the risk of mutual extrusion deformation of the electrode assemblies 2 caused by the accumulation of expansion stress of the electrode assemblies 2 in adjacent subspaces 81, thereby effectively improving the use reliability of the battery cell 10.

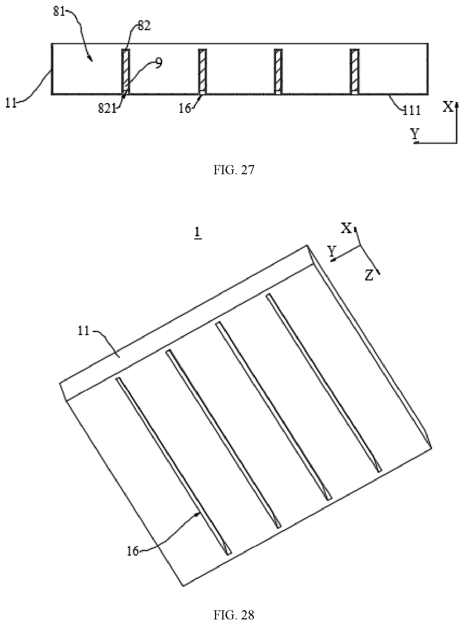

In some embodiments, referring to FIG. 26 and FIG. 27, FIG. 26 is a connection schematic diagram of a housing 11 and a separating apparatus 8 shown in FIG. 25; and FIG. 27 is a cross-sectional view of the housing 11 shown in FIG. 26 taken along an X-Y section. The separating apparatus 8 includes a separating wall 82 configured to separate two adjacent subspaces 81, and an accommodating cavity 821 is formed inside the separating wall 82. The battery cell 10 includes a thermal management component 9, and the thermal management component 9 is accommodated in the accommodating cavity 821.

There may be one or more separating walls 82. The separating wall 82 may be platy, and the separating wall 82 may be of a solid structure or a hollow structure. The separating wall 82 may be connected to the casing 1, so that the separating wall 82 is fixed to the casing 1, or the separating wall 82 may only be in contact with the casing 1.

The accommodating cavity 821 may be of a closed structure, or may be of an open structure having an opening. One separating wall 82 may be provided with one accommodating cavity 821, or may be provided with a plurality of accommodating cavities 821.

The thermal management component 9 is a component for managing the temperature of the battery cell 10, and the thermal management component 9 is used for heat exchange with the battery cell 10 to manage the temperature of the battery cell 10. The thermal management component 9 may be a heating component for heating the battery cell 10, or may be a cooling component for cooling the battery cell 10. The cooling component may be a heat dissipation plate, a water-cooling plate, or the like.

In this embodiment, the accommodating cavity 821 is formed inside the separating wall 82, and the thermal management component 9 is disposed in the accommodating cavity 821 of the separating wall 82, so that the space inside the separating wall 82 is fully utilized, and in the case of realizing the temperature management of the electrode assembly 2, the space inside the casing 1 occupied by the thermal management component 9 is reduced, and more space is made for the electrode assembly 2, which is beneficial to improving the volume energy density of the battery cell 10.

In some embodiments, referring to FIG. 28, FIG. 28 is a schematic structural diagram of the casing 1 shown in FIG. 25. An opening 16 through which the thermal management component 9 enters the accommodating cavity 821 is formed in an outer surface of the casing 1, and the opening 16 communicates with the accommodating cavity 821.

In this embodiment, the opening 16 may be formed in the outer surface of the housing 11 or in the outer surface of the end cover 12, and the opening 16 may correspond to the separating wall 82 in a one-to-one manner.

In this embodiment, the outer surface of the casing 1 is provided with the opening 16 communicating with the accommodating cavity 821, and the thermal management component 9 can enter the accommodating cavity 821 from the outside of the casing 1 through the opening 16, so that when the thermal management component 9 is mounted or dismounted, the casing 1 does not need to be opened, and the operation is more convenient.

In some embodiments, continuously referring to FIGS. 25-27, the separating apparatus 8 includes at least one separating wall 82, the separating wall 82 is disposed in the accommodating space and connected to the casing 1, and the separating wall 82 is configured to separate two adjacent subspaces 81.

There may be one or more separating walls 82. The number of the subspaces 81 may be one more than the number of the separating walls 82, for example, if there is one separating wall 82, there are two subspaces 81. For another example, if there are two separating walls 82, there are three subspaces 81.

The separating wall 82 is connected to the casing 1, so that the separating wall 82 is fixed to the casing 1. The separating wall 82 may be connected to the housing 11 or the end cover 12 of the casing 1, or the separating wall 82 may be connected to both the housing 11 and the end cover 12. When the separating wall 82 is connected to the housing 11, the separating wall 82 may be connected to one wall portion of the separating 11 or may be connected to a plurality of wall portions of the separating 11. If there are a plurality of separating walls 82, the plurality of separating walls 82 may be connected to the same wall portion of the casing 1, for example, the plurality of separating walls 82 are all connected to the end cover 12 of the casing 1, and for another example, the plurality of separating walls 82 are all connected to the same wall portion of the housing 11. The plurality of separating walls 82 may be connected to different wall portions of the casing 1, and for example, some of the plurality of separating walls 82 may be connected to the end cover 12 and the other may be connected to the housing 11. As an example, in FIGS. 25-27, all of the separating walls 82 are connected to the wall portion of the housing 11 opposite to the end cover 12.

In this embodiment, the accommodating space inside the casing 1 is divided into a plurality of subspaces 81 by at least one separating wall 82, the structure is simple, and each separating wall 82 can separate the electrode assemblies 2 in two adjacent subspaces 81. Since the separating wall 82 is connected to the casing 1, the expansion force generated by the expansion of the electrode assembly 2 in the subspace 81 can be transmitted to the casing 1 through the separating wall 82, thereby reducing the risk that the expansion force generated by the electrode assembly 2 in one subspace 81 is transmitted to the electrode assembly 2 in another adjacent subspace 81.

In some embodiments, referring to FIGS. 25-27, the plurality of electrode assemblies 2 are arranged along the second direction Y, and the separating apparatus 8 includes a plurality of separating walls 82, and the plurality of separating walls 82 are spaced apart in the accommodating space along the second direction Y.

The plurality of separating walls 82 are spaced apart from each other along the second direction Y, that is, there is a gap between every two adjacent separating walls 82.

In this embodiment, the electrode assembly 2 may be cylindrical, prismatic, or the like. As an example, in FIG. 25, the electrode assembly 2 is flat, and a thickness direction of the electrode assembly 2 is parallel to the second direction Y.

By taking the casing 1 being in a rectangular parallelepiped shape as an example, the arrangement direction of the plurality of separating walls 82 may be parallel to the length direction, the width direction or the height direction of the casing 1. As an example, the arrangement direction of the plurality of separating walls 82 is parallel to the length direction of the battery cell 10, there are four separating walls 82, and the four separating walls 82 divide the accommodating space into five subspaces 81.

As an example, the first direction X is parallel to the height direction of the casing 1, the second direction Y is parallel to the width direction of the casing 1, and the third direction Z is parallel to the length direction of the casing 1.

In this embodiment, the plurality of separating walls 82 spaced apart can divide the accommodating space into more subspaces 81, so that the electrode assemblies 2 in more subspaces 81 are separated by the separating walls 82, and the expansion force generated by all the electrode assemblies 2 can be transmitted to the casing 1 through more separating walls 82, thereby further reducing the risk of extrusion deformation of the electrode assemblies 2.

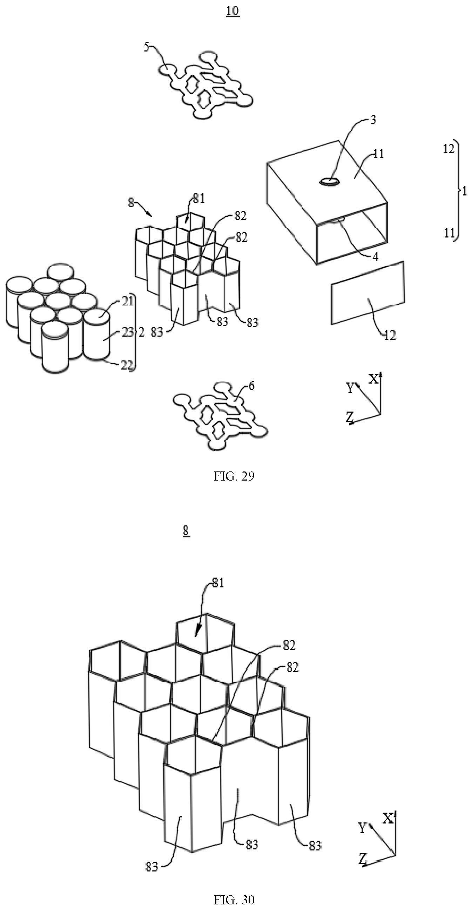

In some embodiments, referring to FIG. 29 and FIG. 30, FIG. 29 is an exploded view of a battery cell 10 (a separating apparatus 8 is disposed in a casing 1) provided in some other embodiments of the present application; and FIG. 30 is a schematic structural diagram of a separating apparatus 8 shown in FIG. 29. The subspace 81 is formed inside the separating apparatus 8.

It can be understood that the subspace 81 is located both inside the casing 1 and inside the separating apparatus 8. The subspace 81 may be in various shapes, such as cylindrical, prismatic, and the like. The prism may be a triangular prism, a quadrangular prism, a pentagonal prism, a hexagonal prism, or the like. As an example, in FIG. 29, the subspace 81 is in the shape of a hexagonal prism.

There are a plurality of subspaces 81 inside the separating apparatus 8, and the plurality of subspaces 81 may be arranged along a certain direction, and by taking the battery cell 10 being a rectangular parallelepiped casing 1 as an example, the plurality of subspaces 81 may be arranged in the separating apparatus 8 along the length, width or height direction of the battery cell 10. The plurality of subspaces 81 may also be arranged in the separating apparatus 8 along a plurality of directions, for example, the plurality of subspaces 81 are arranged in the separating apparatus 8 along a plurality of rows and a plurality of columns.

In this embodiment, the electrode assembly 2 may be cylindrical, prismatic, or the like. As an example, in FIG. 29, the electrode assembly 2 is cylindrical.

As an example, in FIG. 29, along the first direction X, the first tab 21 and the second tab 22 are disposed at two opposite ends of the main body portion 23, the first current collecting member 5 and the second current collecting member 6 are respectively disposed at two opposite sides of the plurality of electrode assemblies 2, and the first electrode terminal and the second electrode terminal are disposed at two opposite wall portions of the casing 1. Along the second direction Y, a plurality of subspaces 81 are arranged in the separating apparatus 8, and a plurality of subspaces 81 are arranged in the separating apparatus 8 along the third direction Z. The first direction X, the second direction Y, and the third direction Z are perpendicular to each other. The first direction X is parallel to the height direction of the casing 1, the second direction Y is parallel to the width direction of the casing 1, and the third direction X is parallel to the length direction of the casing 1.

In this embodiment, after the electrode assembly 2 is accommodated in the subspace 81, the separating apparatus 8 can bear the expansion force of the electrode assembly 2 in multiple directions, thereby improving the use reliability of the battery cell 10.

In some embodiments, continuously referring to FIG. 30, the separating apparatus 8 includes a plurality of receiving units 83 disposed in the accommodating space, and each of the receiving units 83 forms a subspace 81 therein.

The plurality of receiving units 83 in the separating apparatus 8 may be independent of each other, or at least two receiving units 83 may be connected to each other. As an example, in FIG. 30, all the receiving units 83 are connected to each other to form an integrated body. In two adjacent receiving units 83, if the two receiving units 83 are connected to each other, the two receiving units may be directly connected to each other, or may be indirectly connected to each other through an intermediate connecting piece. When two adjacent receiving units 83 are directly connected, the outer surfaces of the two receiving units 83 may be directly connected, or the two receiving units 83 may share one wall portion.

The receiving unit 83 may be of a hollow structure with an opening formed at one end, or may be of a hollow structure with openings formed at two opposite ends. As an example, in FIG. 30, both ends of the receiving unit 83 along the first direction X are formed with openings, and the openings are in communication with the subspace 81.

In this embodiment, the plurality of receiving units 83 can all receive the electrode assembly 2, and the receiving units 83 can bear the expansion forces of the electrode assembly 2 in the subspace 81 in multiple directions. In addition, after the electrode assembly 2 is accommodated in the receiving unit 83, the receiving unit 83 can limit the electrode assembly 2, thereby reducing the risk of the electrode assembly 2 being tilted and shaken inside the casing 1.

In some embodiments, two adjacent receiving units 83 share a separating wall 82, and the separating wall 82 is configured to separate the subspaces 81 of the two adjacent receiving units 83.

The separating wall 82 is a wall portion shared by the adjacent receiving units 83, and the electrode assemblies 2 in the two adjacent receiving units 83 are respectively located on both sides of the separating wall 82.

As an example, in FIG. 30, all the receiving units 83 in the separating apparatus 8 are integrally formed, the receiving units 83 are in the shape of a hexagonal prism, the subspaces 81 in the receiving units 83 are also in the shape of a hexagonal prism, and the separating apparatus 8 is in the shape of a honeycomb.

In this embodiment, two adjacent receiving units 83 share the separating wall 82, and in the case where the volume of the accommodating space is constant, the volume of the subspace 81 can be increased to make a larger space for the electrode assembly 2, which is beneficial to improving the volumetric energy density of the battery cell 10. In addition, two adjacent receiving units 83 share the separating wall 82, so that the plurality of receiving units 83 can be used as a whole, and it is simpler to mount the separating apparatus 8 in the casing 1.

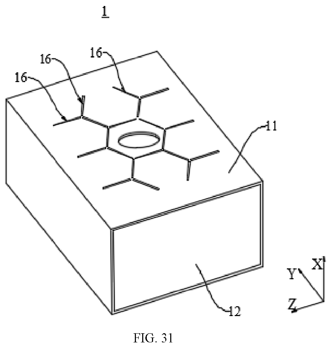

Referring to FIG. 31, FIG. 31 is a schematic structural diagram of a casing 1 provided in some embodiments of the present application. In the embodiment in which the separating wall 82 forms the accommodating cavity 821, the opening 16 of the thermal management component 9 entering the accommodating cavity 821 may be disposed on an outer surface of a wall portion of the casing 1 disposed opposite to the partition wall 82 along the first direction X.

The embodiment of the present application provides a battery 100 comprising the battery cell 10 provided in any one of the above embodiments.

An embodiment of the present application provides an electric apparatus including the battery cell 10 provided in any one of the above embodiments, where the battery cell 10 is configured to provide electrical energy.

An embodiment of the present application provides an energy storage apparatus including the battery cell 10 provided in any one of the above embodiments.

The energy storage apparatus may be an energy storage container, an energy storage cabinet, and the like.

According to some embodiments of the present application, referring to FIGS. 12-16, the present application further provides a battery cell 10, and the battery cell 10 includes a casing 1, an electrode assembly 2, a first electrode terminal 3, a second electrode terminal 4, a first current collecting member 5, a second current collecting member 6, a first insulating member 71, a second insulating member 72, and a third insulating member 73. The casing 1 includes a housing 11 and an end cover 12. An opening is formed at one end of the housing 11, and the end cover 12 closes the opening. The electrode assembly 2 includes a main body portion 23, a first tab 21 and a second tab 22, and along the first direction X, the first tab 21 and the second tab 22 are both disposed at the same end of the main body portion 23, and the first tabs 21 of the plurality of electrode assemblies 2 are located at the same end of the main body portion 23, and the second tabs 22 of the plurality of electrode assemblies 2 are located at the same end of the main body portion 23. A plurality of electrode assemblies 2 are disposed in the casing 1, the plurality of electrode assemblies 2 are stacked along the second direction Y, and the end cover 12 is disposed on one side of the plurality of electrode assemblies 2 along the second direction Y. The first electrode terminal 3 and the second electrode terminal 4 are both disposed on the end cover 12, and the first electrode terminal 3 and the second electrode terminal 4 are spaced apart along the third direction Z, and the first direction X, the second direction Y and the third direction Z are perpendicular to each other. The first current collecting member 5 and the second current collecting member 6 are both disposed in the casing 1, and the first current collecting member 5 and the second current collecting member 6 are spaced apart along the third direction Z. The first current collecting member 5 includes a first connecting portion 52 and a third connecting portion 54 connected to each other, the first connecting portion 52 is located on a side of the main body portion 23 provided with the first tab 21 in the first direction X, and the first connecting portion 52 is welded to the first tabs 21 of the plurality of electrode assemblies 2, the third connecting portion 54 is located between the end cover 12 and the plurality of electrode assemblies 2 in the second direction Y, a surface of the third connecting portion 54 facing the end cover 12 is provided with a first convex portion 53, and the first convex portion 53 is welded to the first electrode terminal 3 to electrically connect the first electrode terminal 3 and the plurality of electrode assemblies 2. The first connecting portion 52 is provided with a first avoidance area 51, the first avoidance area 51 runs through the first connecting portion 52 along the first direction X, and the first tab 21 passes through the first avoidance area 51 and is connected to a side of the first connecting portion 52 facing away from the main body portion 23. The first avoidance area 51 is a notch disposed at an edge of the first connecting portion 52 in the third direction Z. The second current collecting member 6 includes a second connecting portion 62 and a fourth connecting portion 64 connected to each other, the second connecting portion 62 is located on a side of the main body portion 23 provided with the second tab 22 in the first direction X, and the second connecting portion 62 is welded to the second tabs 22 of the plurality of electrode assemblies 2, the fourth connecting portion 64 is located between the end cover 12 and the plurality of electrode assemblies 2 in the second direction Y, a surface of the fourth connecting portion 64 facing the end cover 12 is provided with a second protrusion 63, and the second protrusion 63 is welded to the second electrode terminal 4 to electrically connect the second electrode terminal 4 and the plurality of electrode assemblies 2. The second connecting portion 62 is provided with a second avoidance area 61, the second avoidance area 61 runs through the second connecting portion 62 along the first direction X, and the second tab 22 passes through the second avoidance area 61 and is connected to a side of the second connecting portion 62 away from the main body portion 23. The second avoidance area 61 is a notch disposed at an edge of the second connecting portion 62 in the third direction Z. The first insulating member 71 is disposed on a side of the first connecting portion 52 and the second connecting portion 62 facing away from the main body portion 23 along the first direction X to insulate and isolate the first connecting portion 52 from the casing 1 and insulate and isolate the second connecting portion 62 from the casing 1. The second insulating member 72 is disposed between the first connecting portion 52 and the main body portion 23 and between the second connecting portion 62 and the main body portion 23 along the first direction X, to insulate and isolate the first connecting portion 52 from the main body portion 23 and insulate and isolate the second connecting portion 62 from the main body portion 23. The third insulating member 73 is disposed between the third connecting portion 54 and the plurality of electrode assemblies 2 and between the fourth connecting portion 64 and the plurality of electrode assemblies 2 along the second direction Y, so as to insulate and isolate the third connecting portion 54 from the electrode assemblies 2 and insulate and isolate the fourth connecting portion 64 from the electrode assemblies 2. Along the second direction Y, a first clamping groove 731 is formed in a side of the third insulating member 73 facing away from the electrode assembly 2, the third connecting portion 54 is accommodated in the first clamping groove 731, a second clamping groove 732 is formed in a side of the third insulating member 73 facing away from the electrode assembly 2, and the fourth connecting portion 64 is accommodated in the second clamping groove 732.

The casing 1 is in a rectangular parallelepiped shape, the first direction X is parallel to the height direction of the casing 1, the second direction Y is parallel to the width direction of the casing 1, and the third direction X is parallel to the length direction of the casing 1. The volume of the casing 1 is V, and the capacity of the battery cell 10 is C. The positive electrode material of the battery cell 10 includes lithium-containing phosphate, 2.5 dm³≤V≤46 dm³, 400 Ah≤C≤5000 Ah; or the positive electrode material of the battery cell 10 includes a lithium transition metal oxide, 1.4 dm³≤V≤40.6 dm³, 400 Ah≤C≤5000 Ah; or, the battery cell 10 is a sodium battery, 3.5 dm³≤V≤65 dm³, 400 Ah≤C≤5000 Ah.

In such a battery cell 10, the volume of the casing 1 and the capacity of the battery cell 10 are set within reasonable ranges, so that the battery cell 10 does not have a too small volume and a too large capacity, thereby reducing the manufacturing cost of the large-capacity battery cell 10 and having better economy, and the battery cell 10 does not have a too large volume and a too small capacity, thereby improving the volume energy density of the large-capacity battery cell 10, which takes the economy and energy density requirements of the battery cell 10 into account. In addition, for the battery cell 10 adopting this structure, the first electrode terminal 3 and the second electrode terminal 4 are disposed on the end cover 12 in the second direction Y, so that the wall portion of the casing 1 facing the main body portion 23 in the first direction X is not provided with the first electrode terminal 3 and the second electrode terminal 4, thereby facilitating stacking of the plurality of battery cells 10 in the first direction X, and on the other hand, the region where the first current collecting member 5 is connected to the first electrode terminal 3 and the region where the first current collecting member 5 is connected to the first tab 21 can be separated from each other, and the region where the second current collecting member 6 is connected to the second electrode terminal 4 and the region where the second current collecting member 6 is connected to the second tab 22 can be separated from each other, which is beneficial to reducing the difficulty of assembling the first current collecting member 5 with the first electrode terminal 3 and the first tab 21, and reducing the difficulty of assembling the second current collecting member 6 with the second electrode terminal 4 and the second tab 22, and reducing the interference problem between the first electrode terminal 3 and the first tab 21 and between the second electrode terminal 4 and the second tab 22. When the second electrode terminal 4 and the second tab 22 are both welded to the second current collecting member 6, the mutual influence between the weld pool of the first electrode terminal 3 and the first current collecting member 5 and the weld pool of the first tab 21 and the first current collecting member 5 can be effectively reduced, and the mutual influence between the weld pool of the second electrode terminal 4 and the second current collecting member 6 and the weld pool of the second tab 22 and the second current collecting member 6 can be reduced, thereby facilitating the improvement of the assembly quality and stability of the connection of the first electrode terminal 3 and the first tab 21 to the first current collecting member 5 and the connection of the second electrode terminal 4 and the second tab 22 to the second current collecting member 6.

It should be noted that, without contradictory, the embodiments in the present application may be combined with the features in the embodiments.

The above embodiments merely illustrate the technical solutions of the present application and are not intended to limit the present application, and it is obvious to those skilled in the art that the present application may have various modifications and variations. Any modification, equivalent replacement, or improvement made without departing from the spirit and principle of the present application shall fall within the protection scope of the present application.

## Claims

1. A battery cell, comprising a casing and an electrode assembly, wherein the electrode assembly is accommodated in the casing, the volume of the casing is V, the capacity of the battery cell is C, and the volume of the casing and the capacity of the battery cell satisfy: 1.4 dm³≤V≤65 dm³ and 400 Ah≤C≤5000 Ah.

2. The battery cell according to claim 1, wherein a positive electrode material of the battery cell comprises lithium-containing phosphate, and 2.5 dm³≤V≤46 dm³.

3. The battery cell according to claim 2, wherein 400 Ah≤C≤1500 Ah and 2.5 dm³≤V≤13.8 dm³.

4. The battery cell according to claim 2, wherein 1500 Ah<C≤3000 Ah and 9.6 dm³≤V≤27.6 dm³.

5. The battery cell according to claim 2, wherein 3000 Ah<C≤5000 Ah and 19.3 dm³≤V≤46 dm³.

6. The battery cell according to claim 1, wherein a positive electrode material of the battery cell comprises a lithium transition metal oxide and 1.4 dm³≤V≤40.6 dm³.

7. The battery cell according to claim 6, wherein 400 Ah≤C≤1500 Ah, and 1.4 dm³≤V≤12.2 dm³.

8. The battery cell according to claim 6, wherein 1500 Ah<C≤3000 Ah, and 6.2 dm³≤V≤24.4 dm³.

9. The battery cell according to claim 6, wherein 3000 Ah<C≤5000 Ah, and 12.4 dm³≤V≤40.6 dm³.

10. The battery cell according to claim 1, wherein the battery cell is a sodium battery and 3.5 dm³≤V≤65 dm³.

11. The battery cell according to claim 10, wherein 400 Ah≤C≤1500 Ah, and 3.5 dm³≤V≤19.4 dm³.

12. The battery cell according to claim 10, wherein 1500 Ah<C≤3000 Ah, and 13.8 dm³≤V≤38.7 dm³.

13. The battery cell according to claim 10, wherein 3000 Ah<C≤5000 Ah, and 27.6 dm³≤V≤65 dm³.

14. The battery cell according to any one of claims 1 to 13, wherein the volume of the electrode assembly is V₁, the quantity of the electrode assemblies accommodated in the casing is N, and the volume of the electrode assembly and the quantity of the electrode assemblies satisfy: 0.2 dm³≤V1≤7.8 dm³ and N≥5.

15. The battery cell according to any one of claims 1 to 14, wherein the electrode assembly comprises a main body portion, a first tab and a second tab, the first tab and the second tab have opposite polarities, and the first tab and the second tab are disposed on the main body portion;
the battery cell comprises a first current collecting member, a second current collecting member and a plurality of electrode assemblies, and along a first direction, the first tabs of the plurality of electrode assemblies are located at the same ends of the main body portions, the second tabs of the plurality of electrode assemblies are located at the same ends of the main body portions, the first current collecting member connects the first tabs of the plurality of electrode assemblies, and the second current collecting member is connects the second tabs of the plurality of electrode assemblies.

16. The battery cell according to claim 15, wherein along the first direction, at least a part of the first current collecting member is located on a side of the main body portion provided with the first tab, and a part of the first tab is located on a side of the first current collecting member facing away from the main body portion and is connected to the first current collecting member.

17. The battery cell according to claim 16, wherein the first current collecting member is provided with a first avoidance area, the first avoidance area runs through the first current collecting member along the first direction, and the first tab passes through the first avoidance area and is connected to the side of the first current collecting member facing away from the main body portion.

18. The battery cell according to claim 17, wherein the first avoidance area is a through hole formed in the first current collecting member; or the first avoidance area is a notch formed at an edge of the first current collecting member.

19. The battery cell according to any one of claims 15 to 18, wherein the first current collecting member is disposed in the casing; or the first current collecting member is disposed outside the casing, along the first direction, the casing is provided with a first passage for each of the first tabs to extend out, and each of the first tabs extends out of the casing through the corresponding first passage and is connected to the first current collecting member.

20. The battery cell according to any one of claims 15 to 19, wherein along the first direction, at least a part of the second current collecting member is located on a side of the main body portion provided with the second tab, and a part of the second tab is located on a side of the second current collecting member facing away from the main body portion and is connected to the second current collecting member.

21. The battery cell according to claim 20, wherein the second current collecting member is provided with a second avoidance area, the second avoidance area runs through the second current collecting member along the first direction, and the second tab passes through the second avoidance area and is connected to the side of the second current collecting member facing away from the main body portion.

22. The battery cell according to claim 21, wherein the second avoidance area is a through hole formed in the second current collecting member; or the second avoidance area is a notch formed at an edge of the second current collecting member.

23. The battery cell according to any one of claims 15 to 22, wherein the second current collecting member is disposed in the casing; or the second current collecting member is disposed outside the casing, along the first direction, the casing is provided with a second passage for each of the second tabs to extend out, and each of the first tabs extends out of the casing through the corresponding second passage and is connected to the second current collecting member.

24. The battery cell according to any one of claims 15 to 23, wherein along the first direction, the first tab and the second tab are both disposed at the same end of the main body portion; and
wherein the first current collecting member comprises a first connecting portion connected to each of the first tabs, the second current collecting member comprises a second connecting portion connected to each of the second tabs, the first connecting portion and the second connecting portion are both located on a side of the main body portion provided with the first tab and the second tab in the first direction, and the first connecting portion and the second connecting portion are spaced apart from each other.

25. The battery cell according to claim 24, wherein the battery cell comprises:
a first insulating member, disposed on a side of the first connecting portion and the second connecting portion facing away from the main body portion along the first direction, to insulate and isolate the first connecting portion from the casing and insulate and isolate the second connecting portion from the casing.

26. The battery cell according to claim 24 or 25, wherein the battery cell comprises:
a second insulating member, disposed on a side of the first connecting portion and the second connecting portion facing the main body portion along the first direction, to insulate and isolate the first connecting portion from the main body portion and insulate and isolate the second connecting portion from the main body portion.

27. The battery cell according to any one of claims 24 to 26, wherein along the first direction, the casing comprises a first wall portion, and the first current collecting member and the second current collecting member are both disposed on a side of the main body portion facing the first wall portion; and
the first wall portion is provided with a first electrode terminal and a second electrode terminal, and the first current collecting member and the second current collecting member are connected to the first electrode terminal and the second electrode terminal, respectively.

28. The battery cell according to any one of claims 24 to 26, wherein the plurality of electrode assemblies are arranged along a second direction, and the second direction intersects the first direction;
the first current collecting member comprises a third connecting portion, the third connecting portion is connected to the first connecting portion, the second current collecting member comprises a fourth connecting portion, the fourth connecting portion is connected to the second connecting portion, along the second direction, the casing comprises a second wall portion, and the third connecting portion and the fourth connecting portion are both located on a side of the plurality of electrode assemblies facing the second wall portion; and
wherein the second wall portion is provided with a first electrode terminal and a second electrode terminal, and the third connecting portion and the fourth connecting portion are connected to the first electrode terminal and the second electrode terminal, respectively.

29. The battery cell according to claim 28, wherein the battery cell comprises:
a third insulating member, disposed on a side of the third connecting portion and the fourth connecting portion facing the plurality of electrode assemblies along the second direction, to insulate and isolate the third connecting portion from the electrode assemblies and insulate and isolate the fourth connecting portion from the electrode assemblies.

30. The battery cell according to claim 29, wherein along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the third insulating member facing away from the plurality of electrode assemblies, and the fourth connecting portion is accommodated in the second clamping groove.

31. The battery cell according to any one of claims 24 to 26, wherein the plurality of electrode assemblies are arranged along a second direction, and the second direction intersects the first direction;
the first current collecting member comprises a third connecting portion, the third connecting portion is connected to the first connecting portion, the second current collecting member comprises a fourth connecting portion, the fourth connecting portion is connected to the second connecting portion, and along the second direction, the casing comprises a second wall portion and a third wall portion that are oppositely disposed, the third connecting portion is located on a side of the plurality of electrode assemblies facing the second wall portion, and the fourth connecting portion is located on a side of the plurality of electrode assemblies facing the third wall portion; and
the second wall portion is provided with a first electrode terminal, the third wall portion is provided with a second electrode terminal, and the third connecting portion and the fourth connecting portion are connected to the first electrode terminal and the second electrode terminal, respectively.

32. The battery cell according to claim 31, wherein the battery cell comprises:
a third insulating member, disposed between the third connecting portion and the plurality of electrode assemblies along the second direction, to insulate and isolate the third connecting portion from the electrode assemblies; and
a fourth insulating member, disposed between the fourth connecting portion and the plurality of electrode assemblies along the second direction, to insulate and isolate the fourth connecting portion from the electrode assemblies.

33. The battery cell according to claim 32, wherein along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the fourth insulating member facing away from the plurality of electrode assemblies, and the fourth connecting portion is accommodated in the second clamping groove.

34. The battery cell according to any one of claims 15 to 23, wherein along the first direction, the first tab and the second tab are disposed at two opposite ends of the main body portion, respectively; and
wherein the first current collecting member comprises a first connecting portion connected to each of the first tabs, the first connecting portion is located on a side of the main body portion provided with the first tab in the first direction, the second current collecting member comprises a second connecting portion connected to each of the second tabs, and the second connecting portion is located on a side of the main body portion provided with the second tab in the first direction.

35. The battery cell according to claim 34, wherein the battery cell comprises:
two first insulating members, respectively disposed on two sides of the plurality of electrode assemblies along the first direction, wherein one of the first insulating members is located on a side of the first connecting portion facing away from the main body portion to insulate and isolate the first connecting portion from the casing, and the other one of the first insulating members is located on a side of the second connecting portion facing away from the main body portion to insulate and isolate the second connecting portion from the casing.

36. The battery cell according to claim 34 or 35, wherein the battery cell comprises:
two second insulating members, respectively disposed on two sides of the plurality of electrode assemblies along the first direction, wherein along the first direction, one of the second insulating members is located on a side of the first connecting portion facing the main body portion to insulate and isolate the first connecting portion from the main body portion, and the other one of the second insulating members is located on a side of the second connecting portion facing the main body portion to insulate and isolate the second connecting portion from the main body portion.

37. The battery cell according to any one of claims 34 to 36, wherein the plurality of electrode assemblies are arranged along a second direction, and the second direction intersects the first direction;
the first current collecting member comprises a third connecting portion, the third connecting portion is connected to the first connecting portion, the second current collecting member comprises a fourth connecting portion, the fourth connecting portion is connected to the second connecting portion, along the second direction, the casing comprises a first wall portion along the second direction, and the third connecting portion and the fourth connecting portion are both located on a side of the plurality of electrode assemblies facing the first wall portion; and
the first wall portion is provided with a first electrode terminal and a second electrode terminal, and the third connecting portion and the fourth connecting portion are connected to the first electrode terminal and the second electrode terminal, respectively.

38. The battery cell according to claim 37, wherein the battery cell comprises:
a third insulating member, disposed on a side of the third connecting portion and the fourth connecting portion facing the plurality of electrode assemblies along the second direction, to insulate and isolate the third connecting portion from the electrode assemblies and insulate and isolate the fourth connecting portion from the electrode assemblies.

39. The battery cell according to claim 38, wherein along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the third insulating member facing away from the plurality of electrode assemblies, and the fourth connecting portion is accommodated in the second clamping groove.

40. The battery cell according to any one of claims 34 to 36, wherein the plurality of electrode assemblies are arranged along a second direction, and the second direction intersects the first direction;
the first current collecting member comprises a third connecting portion, the third connecting portion is connected to the first connecting portion, the second current collecting member comprises a fourth connecting portion, the fourth connecting portion is connected to the second connecting portion, and along the second direction, the casing comprises a first wall portion and a second wall portion that are oppositely disposed, the third connecting portion is located on a side of the plurality of electrode assemblies facing the first wall portion, and the fourth connecting portion is located on a side of the plurality of electrode assemblies facing the second wall portion; and
the first wall portion is provided with a first electrode terminal, the second wall portion is provided with a second electrode terminal, and the third connecting portion and the fourth connecting portion are connected to the first electrode terminal and the second electrode terminal, respectively.

41. The battery cell according to claim 40, wherein the battery cell comprises:
a third insulating member, disposed between the third connecting portion and the plurality of electrode assemblies along the second direction, to insulate and isolate the third connecting portion from the electrode assemblies; and
a fourth insulating member, disposed between the fourth connecting portion and the plurality of electrode assemblies along the second direction, to insulate and isolate the fourth connecting portion from the electrode assemblies.

42. The battery cell according to claim 41, wherein along the second direction, a first clamping groove is formed in a side of the third insulating member facing away from the plurality of electrode assemblies, and the third connecting portion is accommodated in the first clamping groove; and/or, along the second direction, a second clamping groove is formed in a side of the fourth insulating member facing away from the plurality of electrode assemblies, and the fourth connecting portion is accommodated in the second clamping groove.

43. The battery cell according to any one of claims 1 to 42, wherein the battery cell comprises a plurality of electrode assemblies, the casing assembly has an accommodating space, and the plurality of electrode assemblies are accommodated in the accommodating space; and
the battery cell comprises a separating apparatus, the separating apparatus is disposed in the accommodating space, the separating apparatus is configured to separate the accommodating space into a plurality of subspaces, and each of the subspaces accommodates at least one of the electrode assemblies.

44. The battery cell according to claim 43, wherein the separating apparatus comprises a separating wall, the separating wall is configured to separate two adjacent subspaces, and an accommodating cavity is formed inside the separating wall; and
the battery cell comprises a thermal management component, and the thermal management component is accommodated in the accommodating cavity.

45. The battery cell according to claim 44, wherein an opening through which the thermal management component enters the accommodating cavity is formed in an outer surface of the casing, and the opening communicates with the accommodating cavity.

46. The battery cell according to any one of claims 43 to 45, wherein the separating apparatus comprises at least one separating wall, the separating wall is disposed in the accommodating space and is connected to the casing, and the separating wall is configured to separate two adjacent subspaces.

47. The battery cell according to claim 46, wherein the plurality of electrode assemblies are arranged along a second direction, the separating apparatus comprises a plurality of separating walls, and along the second direction, the plurality of separating walls are spaced apart from each other in the accommodating space.

48. The battery cell according to any one of claims 43 to 45, wherein the subspaces are formed inside the separating apparatus.

49. The battery cell according to claim 48, wherein the separating apparatus comprises a plurality of receiving units disposed in the accommodating space, and one subspace is formed inside each of the receiving units.

50. The battery cell according to claim 49, wherein two adjacent receiving units share a separating wall, and the separating wall is configured to separate the subspaces of the two adjacent receiving units.

51. A battery, comprising the battery cell according to any one of claims 1 to 50.

52. An electrical device, comprising the battery cell according to any one of claims 1 to 50, wherein the battery cell is configured to supply electrical energy.

53. An energy storage apparatus, comprising the battery cell according to any one of claims 1 to 50.
